(19) Europäisches Patentamt
European Patent Office
Office européen des brevets

(11) EP 1 054 907 B1

(12) **EUROPÄISCHE PATENTSCHRIFT**

(45) Veröffentlichungstag und Bekanntmachung des Hinweises auf die Patenterteilung:
**14.04.2004 Patentblatt 2004/16**

(21) Anmeldenummer: **99906122.9**

(22) Anmeldetag: **13.01.1999**

(51) Int Cl.[7]: **C08F 2/44**, C08F 2/22, C09D 11/00, C07C 271/12, C07C 69/54, C07D 221/18, C07D 471/06, C09D 5/02, C09D 5/03, D21H 19/00

(86) Internationale Anmeldenummer:
**PCT/EP1999/000157**

(87) Internationale Veröffentlichungsnummer:
**WO 1999/040123 (12.08.1999 Gazette 1999/32)**

(54) **VERFAHREN ZUR HERSTELLUNG FARBSTOFFENTHALTENDER, WÄSSRIGER POLYMERISATDISPERSIONEN**

METHOD FOR PRODUCING AQUEOUS POLYMER DISPERSIONS CONTAINING COLORANTS

PROCEDE POUR PRODUIRE DES DISPERSIONS AQUEUSES DE POLYMERES, CONTENANT DES COLORANTS

(84) Benannte Vertragsstaaten:
**DE ES FI FR GB IT NL**

(30) Priorität: **09.02.1998 DE 19805121**

(43) Veröffentlichungstag der Anmeldung:
**29.11.2000 Patentblatt 2000/48**

(73) Patentinhaber: **BASF AKTIENGESELLSCHAFT**
**67056 Ludwigshafen (DE)**

(72) Erfinder:
- **MATHAUER, Klemens**
  **D-67061 Ludwigshafen (DE)**
- **BÖHM, Arno**
  **D-68305 Mannheim (DE)**
- **MÄCHTLE, Walter**
  **D-67067 Ludwigshafen (DE)**
- **ROSSMANITH, Peter**
  **D-67063 Ludwigshafen (DE)**
- **KIELHORN-BAYER, Sabine**
  **D-67133 Maxdorf (DE)**
- **MÜLLEN, Klaus**
  **D-50939 Köln (DE)**
- **ROHR, Ulrike**
  **D-55124 Mainz (DE)**
- **RAULFS, Friedrich-Wilhelm**
  **68161 Mannheim (DE)**
- **SCHLÖSSER, Ulrike**
  **67433 Neustadt (DE)**
- **SCHROF, Wolfgang**
  **67271 Neuleiningen (DE)**
- **HANCIOGULLARI, Harutyun**
  **67117 Limburgerhof (DE)**
- **SIEMENSMEYER, Karl**
  **67227 Frankenthal (DE)**
- **DELAVIER, Paul**
  **67434 Neustadt (DE)**
- **SENS, Rüdiger**
  **67069 Ludwigshafen (DE)**
- **FREUND, Torsten**
  **67117 Limburgerhof (DE)**
- **IKEDA, Takahiro**
  **Yokkaichi-shi Mie 510-8033 (JP)**
- **WAKEBE, Takanori**
  **Yokkaichi-shi Mie 510-8027 (JP)**

(74) Vertreter: **Kinzebach, Werner, Dr. et al**
**Ludwigsplatz 4**
**67059 Ludwigshafen (DE)**

(56) Entgegenhaltungen:

| | |
|---|---|
| **EP-A- 0 105 057** | **EP-A- 0 808 855** |
| **EP-A- 0 818 471** | **WO-A-96/22005** |
| **DE-A- 4 424 817** | **DE-A- 19 738 145** |
| **US-A- 4 667 036** | **US-A- 4 680 332** |

- **KATRITZKY ALAN R ET AL: "3-Vinylperylene: a powerful radical trap" MACROMOLECULES AUG 1989, Bd. 22, Nr. 8, August 1989 (1989-08), Seiten 3495-3496, XP002114230**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

- CHEMICAL ABSTRACTS, vol. 77, no. 8, 21. August 1972 (1972-08-21) Columbus, Ohio, US; abstract no. 48834, KAMOGAWA, HIROYOSHI: "Syntheses of vinyl polymers containing a large.pi.-electron cloud in the side chain" XP002114231 & J. POLYM. SCI., PART A-1 (1972), 10(5), 1345-51 ,

## Beschreibung

Die vorliegende Erfindung betrifft ein Verfahren zur Herstellung farbstoffenthaltender, wässriger Polymerisatdispersionen durch radikalische, wässrige Emulsionspolymerisation ethylenisch ungesättigter Monomere, wobei man wenigstens einen Teil der Monomere in Form einer Öl-in-Wasser-Emulsion E1 einsetzt, deren disperse Phase wenigstens einen öllöslichen Farbstoff enthält.

Die Herstellung farbstoffenthaltender Polymerisate kann grundsätzlich auf zwei unterschiedliche Weisen erfolgen. Eine Vorgehensweise besteht darin, Farbstoffe, die in Polymeren, gegebenenfalls bei erhöhter Temperatur, eine hinreichliche Löslichkeit aufweisen, in diesen homogen zu lösen. Der Vorteil hierbei liegt insbesondere in einer hohen Brillanz des Farbeindrucks und einer großen Farbstärke, d. h. einem niedrigen Farbstoffbedarf. Diese Vorgehensweise hat jedoch den Nachteil, dass die Farbstoffe bei thermischer Belastung oder bei Kontakt der Polymerisate mit Lösungsmitteln migrieren; dies bedingt reduzierte Wetter- und Migrationsechtheiten, da Farbstoffmoleküle, die an die Oberfläche des Substrates migriert sind, von Licht oder Sauerstoff angegriffen oder durch Lösungsmittel ausgespült werden. Die andere Vorgehensweise besteht darin, unlösliche Farbpigmente in der Polymermatrix dispers zu verteilen. Hierdurch vermeidet man die Nachteile, die bei homogener Lösung der Farbmittel in der Polymermatrix auftreten können. Nachteilig an dieser Vorgehensweise ist jedoch, dass die einzelnen Farbstoffmoleküle in den Pigmentkristallen miteinander wechselwirken, was zu einer Verbreiterung der Absorptionsbanden und damit zu einer unerwünschten Herabsetzung der Farbtonreinheit und der Farbstärke der Färbung führt. Ferner bedingt die Formanisotropie der Pigment-Kristallite, dass beim Einarbeiten in die polymere Matrix Rheologieprobleme, beispielsweise Thixotropien auftreten.

Die Nachteile beider Vorgehensweisen können grundsätzlich umgangen werden, wenn man als Ersatz für Farbpigmente farbstoffenthaltende Polymerisatdispersionen verwendet, die den Farbstoff in den Polymerisatteilchen homogen verteilt enthalten. Derartige "Pigmente" sollten sich zum einen durch eine hohe Farbbrillanz und Farbtonreinheit und zum anderen aufgrund der Kugelform der Polymerisatteilchen durch geringe Rheologieprobleme auszeichnen.

Bei optischen Aufhellern, die als Farbstoffe im weiteren Sinne, und zwar als Fluoreszenzfarbstoffe aufzufassen sind, stellt sich das Problem, dass die Bildung höhermolekularer Assoziate in den Pigmentkristallen eine Verminderung der Fluoreszenzausbeute zur Folge hat. Die Gefahr der Bildung von höhermolekularen Assoziaten besteht auch, wenn die optischen Aufheller aus dem Innern der Polymermatrix an die Oberfläche migrieren.

Farbstoffhaltige Polymerisatdispersionen sind grundsätzlich bekannt. So beschreiben die EP-A 691 390 und die DE-A 44 36 892 farbstoffenthaltende, wässrige Polymerisatdispersionen auf der Basis ethylenisch ungesättigter Monomere, die dadurch erhältlich sind, dass man in einem ersten Schritt eine polymere Verbindung in einem organischen Lösungsmittel herstellt, wobei man dem organischen Lösungsmittel vor, während oder nach der Polymerisation einen oder mehrere lösliche Farbstoffe zusetzt, und in einem zweiten Schritt die auf diese Weise erhaltenen farbstoffhaltigen Polymerlösungen in wässrige Polymerisatdispersionen überführt. Derartige farbstoffhaltige Polymerisatdispersionen sind jedoch hinsichtlich der Migrationsstabilität der Farbstoffe noch nicht zufriedenstellend.

Farbstoffhaltige Polymerisatdispersionen auf der Basis von Polyurethanen sind aus der DE-A 195 21 500 bekannt. Hierbei handelt es sich ebenfalls um Sekundärdispersionen mit den vorgenannten Nachteilen.

Die EP-A 566 448 beschreibt farbstoffenthaltende, wässrige Polymerisatdispersionen auf der Basis ethylenisch ungesättigter Monomere, die dadurch erhältlich sind, dass man in einem ersten Schritt eine radikalische, wässrige Emulsionspolymerisation ethylenisch ungesättigter Monomere durchführt und die so erhaltenen Polymerisatdispersionen mit einer Lösung von Farbstoffen in organischen Lösungsmitteln imprägniert. Die so erhältlichen Polymerisatdispersionen weisen jedoch ebenfalls keine zufriedenstellende Migrationsstabilität der Farbstoffe auf. In dieser Schrift wird ebenfalls darauf hingewiesen, dass man hinreichend wasserverträgliche Farbstoffe auch während der Polymerisation zusetzen kann. Konkrete Hinweise auf diese Ausführungsform lassen sich der genannten Schrift jedoch nicht entnehmen. Nachteilig ist der bei dieser Vorgehensweise erforderliche Einsatz größerer Mengen an organischen Lösungsmitteln.

Die US 4,680,332 empfiehlt zur Herstellung farbstoffhaltiger Polymerisatdispersionen ebenfalls die Imprägnierung wässriger Polymerdispersionen mit Lösungen von organischen Farbstoffen in Lösungsmitteln wie Toluol oder Chlorbenzol sowie die Imprägnierung mit Öl-in-Wasser-Emulsionen derartiger Farbstofflösungen. Auch diese Vorgehensweise führt nicht zu zufriedenstellenden Produkten.

Die DE-A 44 24 817 beschreibt "Fluoreszenzpigmente", worin ein Fluoreszenzfarbstoff in einer Polymermatrix auf der Basis vernetzter Poly(meth)acrylate gelöst vorliegt. Derartige Polymerisate sind durch radikalische Suspensionspolymerisation ethylenisch ungesättigter Monomere, die wenigstens ein vernetzend wirkendes Monomer umfassen, in Gegenwart des Fluoreszenzfarbstoffs erhältlich. Derartige "Fluoreszenzpigmente" zeichnen sich durch eine verringerte Migrationsneigung der Fluoreszenzfarbstoffe aus. Von Nachteil ist jedoch, dass man durch das Herstellungsverfahren auf Pigmente mit Teilchengrößen > 2 µm eingeschränkt ist. Zudem erhält man auf diese Weise keine sedimentationsstabile Polymerisatdispersion. Daher kommen derartige "Fluoreszenzpigmente" für eine Vielzahl von

Anwendungen, beispielsweise Ink-Jet-Verfahren, nicht in Frage.

Die EP-A 0 808 855 beschreibt ein Verfahren zur Herstellung.wäsriger Polymerlatices mit Fluorezenz-Farbstoffen, bei dem man eine Monomer-Präemulsion, die einen Fluoreszenz-Farbstoff enthält, nach einer konventionelle Emulsionspolymerisation polymerisiert. Ferner lehrt die EP-A 0 808 855 Polymerlatices, deren Polymerteilchen in der Polymermatrix einen unter Naphthalin, Anthracen und deren substituierten, aromatischen Derivaten ausgewählten mehrkernigen aromatischen Kohlenwasserstoff als Fluoreszenz-Farbstoff in einer Menge von 0,001 bis 3 Gew.-%, bezogen auf das Gesamtgewicht der Monomeren, enthalten.

Die EP-A 0 105 057 beschreibt ein Verfahren zur Herstellung von reaktiven hydrophilen, mit einem Farbstoff oder einer fluoreszierenden Verbindung markierten Latexpartikeln. Dabei wird ein in Wasser schwerlösliches Monomer oder ein Gemisch von in Wasser schwerlöslichen Monomeren mit einem Farbstoff oder einer fluoreszierenden Verbindung dispergiert und unter Ausschluss von Sauerstoff durch Emulsionspolymerisation in Anwesenheit eines wasserlöslichen, Radikal bildenden Initiators, jedoch ohne Zusatz eines Emulgators oder Stabilisators, homo- oder copolymerisiert. Es werden Latexpartikel erhalten, die kugelförmig monodispers verteilt und untereinander annähernd gleich groß sind. Gemäß den Beispielen enthalten die Polymerisate maximal 0,05 mg Farbstoff pro Gramm Polymer, dies entspricht einem Gewichtsanteil von 0,005 Gew.-%, bezogen auf die Polymermatrix.

Demnach ist die Aufgabe der vorliegenden Erfindung die Bereitstellung eines Verfahrens für die Herstellung von farbstoffhaltigen Polymerisatdispersionen, worin die Polymerisatteilchen wenigstens einen organischen Farbstoff homogen, d. h. molekulardispers verteilt enthalten, wobei sich diese Polymerisatteilchen durch eine hohe Migrationsstabilität der in ihnen enthaltenen Farbstoffe auszeichnen. Weiterhin soll dieses Verfahren den Zugang zu feinteiligen, farbstoffenthaltenden, stabilen Polymerisatdispersionen eröffnen.

Diese Aufgabe wird durch ein Verfahren zur radikalischen, wässrigen Emulsionspolymerisation gelöst, bei dem man zur Polymerisation eine Öl-in-Wasser-Emulsion der Monomere einsetzt, wobei die Monomere den Farbstoff in gelöster Form aufweisen, vorausgesetzt, dass die Monomertröpfchen im Wesentlichen einen Durchmesser < 500 nm aufweisen. Konventionelle Emulsionspolymerisation hingegen führt nicht zum Erfolg.

Die vorliegende Erfindung betrifft somit ein Verfahren zur Herstellung Farbstoff enthaltender, wässriger Polymerisatdispersionen durch radikalische, wässrige Emulsionspolymerisation ethylenisch ungesättigter Monomere in Gegenwart Radikale bildender Initiatoren, wobei man wenigstens einen Teil der Monomere in Form einer Öl-in-Wasser-Emulsion E1 einsetzt, deren disperse Phase wenigstens einen öllöslichen Farbstoff enthält, das dadurch gekennzeichnet ist, dass die disperse Phase von E1 im Wesentlichen von farbstoffhaltigen Monomertröpfchen mit einem Durchmesser < 500 nm gebildet wird.

Erfindungsgemäß zählen zu den öllöslichen Farbstoffen auch organische optische Aufheller, d. h. organische Moleküle mit einem ausgedehnten, konjugierten $\pi$-Elektronensystem, das im Unterschied zum $\pi$-Elektronensystem konventioneller organischer Farbstoffe keine Strahlung im sichtbaren Bereich sondern ultraviolette Strahlung absorbiert und als bläuliche Fluoreszenz wieder abstrahlt (siehe Römpp Chemielexikon, 9. Auflage). Durch optische Aufheller wird beispielsweise der Weißgrad von damit behandelten weißen Substraten, wie Papier oder Geweben, erhöht.

Das erfindungsgemäße Verfahren unterscheidet sich im Wesentlichen von konventionellen Emulsionspolymerisationen durch die Tröpfchengröße der zu polymerisierenden Monomeremulsion. Bei konventionellen Emulsionspolymerisationsverfahren weisen die Monomertröpfchen im Polymerisationsgefäß im Unterschied zum erfindungsgemäßen Verfahren in der Regel Durchmesser oberhalb 1000 nm auf. Das Scheitern der konventionellen Emulsionspolymerisation bei der Herstellung farbstoffenthaltender Polymerisate lässt sich vermutlich darauf zurückführen, dass bei der konventionellen Emulsionspolymerisation die Monomertröpfchen lediglich als Reservoir für die zu polymerisierenden Monomere dienen, während die eigentliche Polymerisationsreaktion im wässrigen Dispergiermedium oder auf den im Verlauf der Polymerisation gebildeten Polymerisatteilchen stattfindet. Dabei diffundieren die Monomere, die in der Regel eine gewisse Wasserlöslichkeit aufweisen, von den Monomertröpfchen zu den Polymerisationszentren (eine ausführliche Diskussion des Mechanismus der radikalischen, wässrigen Emulsionspolymerisation findet sich z. B. in A. Echte, Handbuch der technischen Polymerchemie, S. 322 bis S. 345). Der Farbstoff hingegen, der in der Regel keine hinreichende Wasserlöslichkeit aufweist, bleibt in den Monomertröpfchen zurück; ein homogener Einbau der Farbstoffe in die Polymerisatteilchen ist somit nicht gewährleistet. Im erfindungsgemäßen Verfahren findet vermutlich in Abweichung zu dem oben skizzierten Polymerisationsverlauf die Polymerisation in den Monomertröpfchen statt. Es kommt somit zu einem homogenen Einbau der Farbstoffe in die polymere Matrix.

Als ethylenisch ungesättigte Monomere im erfindungsgemäßen Verfahren kommen grundsätzlich alle Monomere in Betracht, die üblicherweise im Rahmen der radikalischen, wässrigen Makroemulsionspolymerisation eingesetzt werden können. Vorzugsweise wird die Hauptmenge der zu polymerisierenden Monomere von monoethylenisch ungesättigten Monomeren A mit einer Wasserlöslichkeit > 0,01 g/l gebildet. Hierzu zählen Olefine wie Ethylen oder Propen, vinylaromatische Monomere wie Styrol, $\alpha$-Methylstyrol, o-Chlorstyrol oder Vinyltoluole, Vinyl- und Vinylidenhalogenide wie Vinyl- und Vinylidenchlorid, Ester aus Vinylalkohol und 1 bis 8 C-Atome aufweisenden Monocarbonsäuren wie Vinylacetat, Vinylpropionat, Vinyl-n-butyrat oder Vinylhexanoat, Ester aus Allylalkohol und 1 bis 8 C-Atome aufweisenden Monocarbonsäuren wie Allylacetat, Allylpropionat, Allyl-n-butyrat und Allylhexanoat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im Allgemeinen 1 bis 12, vorzugsweise 1 bis 8 und insbesondere 1 bis 4 C-Atome aufweisenden Alkanolen, wie insbesondere Acrylsäure- und Methacrylsäuremethyl-, -ethyl-, -n-butyl-, -tert.-butyl-, -iso-butyl- und -2-ethylhexylester, Maleinsäuredimethylester oder Maleinsäuredi-n-butylester, sowie $C_{4-8}$-konjugierte Diene wie 1,3-Butadien und Isopren.

Die Monomere A umfassen weiterhin auch solche Monomere A', deren Homopolymerisate eine erhöhte Wasserlöslichkeit (d. h. > 60 g/l bei 25 °C) aufweisen. Derartige Monomere A' dienen als modifizierende Monomere und werden in der Regel in Mengen < 20 Gew.-%, bezogen auf die Gesamtmenge der zu polymerisierenden Monomere, vorzugsweise < 10 Gew.-%, beispielsweise in Mengen von 0,1 bis 20 Gew.-%, bezogen auf die zu polymerisierenden Monomere, verwendet. Die Monomere A' umfassen sowohl monoethylenisch ungesättigte Monomere mit wenigstens einer Säuregruppe, z. B. einer COOH, $SO_3H$ oder einer $PO_3H_2$-Gruppe, die auch in Salzform vorliegen kann (im Folgenden als anionische Monomere bezeichnet); monoethylenisch ungesättigte, kationische Monomere, insbesondere solche mit einer quartären Amoniumgruppe (d. h. einer $R_3N^{\oplus}$- Gruppe, worin R für Wasserstoff oder Alkyl, insbesondere Methyl oder Ethyl steht) oder einer Imoniumgruppe (d. h. einer $=N^{\oplus}(R)$- Gruppe, worin R für Wasserstoff oder Alkyl, insbesondere Methyl oder Ethyl steht); und monoethylenisch ungesättigte, neutrale Monomere. Die Menge an Monomeren A', bezogen auf die Gesamtmonomermenge kann bis zu 30 Gew.-%, bezogen auf die Gesamtmenge an Monomeren A, betragen.

Beispiele für monoethylenisch ungesättigte anionische Monomere A' sind 3 bis 6 C-Atome aufweisende, monoethylenisch ungesättigte Mono- und Dicarbonsäuren, z. B. Acrylsäure, Methacrylsäure, Maleinsäure, Itaconsäure, Acrylamidoglykolsäure, Methacrylamidoglykolsäure, Acryloyloxyglykolsäure, Methacryloyloxyglykolsäure, monoethylenisch ungesättigte Sulfonsäuren und Phosphonsäuren, z. B. Vinylsulfonsäure, Allylsulfonsäure, Methallylsulfonsäure, Styrolsulfonsäure, Vinylnaphthalinsulfonsäure und (Meth)acrylamido-2-methylpropansulfonsäure, weiterhin Vinylphosphonsäure, Allylphosphonsäure, Methallylphosphonsäure, Styrolphosphonsäure, und (Meth)acrylamido-2-methylpropanphosphonsäure, sowie deren wasserlösliche Salze, z. B. deren Alkalimetallsalze oder deren Ammoniumsalze, insbesondere deren Natriumsalze. Beispiele für neutrale Monomere A' sind insbesondere die Amide monoethylenisch ungesättigter Mono- und Dicarbonsäuren, wie Acrylamid, Methacrylamid und Maleinimid, weiterhin N-Vinyllactame mit 3 bis 8 C-Atomen, wie N-Vinylpyrrolidon und N-Vinylcaprolactam sowie Acrylnitril. Geeignete kationische Monomere A' sind insbesondere die Quaternisierungsprodukte und Protonierungsprodukte von monoethylenisch ungesättigten Aminen, beispielsweise die Quaternisierungsprodukte von Dialkylaminoalkylestern monoethylenisch ungesättigter Carbonsäuren, z. B. die Quaternisierungsprodukte von Dimethylaminoethylacrylat oder -methacrylat, und von Diethylaminoethylacrylat oder -methacrylat sowie die Quaternisierungsprodukte von 1-Vinylimidazolen wie 1-Vinylimidazol und 1-Vinyl-2-methylimidazol mit $C_2$-$C_{10}$-Oxiranen, $C_1$-$C_{10}$-Alkylhalogeniden oder $C_1$-$C_{10}$-Dialkylsulfaten, beispielsweise mit Methylhalogenid, Ethylhalogenid, Methylsulfat oder Ethylsulfat. Derartige Monomere sind beispielsweise aus der EP-A 246580 und der US 4,859,756 bekannt. Die Quaternisierungsprodukte von 1-Vinylimidazolen werden im Folgenden auch als Vinylimidazolium-Salze, die Quaternisierungsprodukte von Aminoalkylacrylaten bzw. -methacrylaten als (Meth)acryloyloxyalkylamonium-Salze bezeichnet.

Für das erfindungsgemäße Verfahren, insbesondere für die Stabilität der Emulsion E1, hat es sich als vorteilhaft erwiesen, wenn die zu polymerisierenden Monomere neben den Monomeren A mit einer Wasserlöslichkeit > 0,01 g/l auch solche Monomere B umfassen, die eine Wasserlöslichkeit < 0,01 g/l (bei 25 °C und 1 atm) besitzen.

Vorzugsweise umfassen die zu polymerisierenden, ethylenisch ungesättigten Monomere 50 bis 99,5 Gew.-%, bezogen auf die Gesamtmenge der Monomere A und B, insbesondere 80 bis 99 Gew.-% und ganz besonders bevorzugt 90 bis 98 Gew.-%, wenigstens eines Monomers A und 0,5 bis 50 Gew.-%, insbesondere 1 bis 20 Gew.-% und ganz besonders bevorzugt 2 bis 10 Gew.-%, wenigstens eines Monomers B.

Beispiele für Monomere B, die eine wie vorstehend geforderte geringe Wasserlöslichkeit aufweisen, sind 2- und 4-n-Butylstyrol, p-tert.-Butylstyrol, Ester aus 3 bis 6 C-Atome aufweisenden α,β-monoethylenisch ungesättigten Carbonsäuren und ≥ 12 C-Atome (in der Regel bis zu 30 C-Atome) aufweisenden Alkanolen wie z. B. Laurylacrylat und Stearylacrylat. Aber auch Ester aus Vinylalkohol oder Allylalkohol und ≥ 9 C-Atome (in der Regel bis zu 30 C-Atome) aufweisenden Alkancarbonsäuren, wie z. B. Vinylnonanoat, Vinyldecanoat, Vinyllaurat und Vinylstearat, sowie im Handel befindliche Monomere VEOVA® 9-11 (VEOVA X ist ein Handelsname der Firma Shell und steht für Vinylester von Carbonsäuren, die auch als Versatic® X-Säuren bezeichnet werden), sind solche Monomere B. Aber auch Makromonomere wie Oligopropenacrylat sind solche Monomere B (ganz allgemein sind Makromonomere polymere oder oligomere Verbindungen, die wenigstens eine, meist endständige, ethylenisch ungesättigte Doppelbindung aufweisen; ihr relatives zahlenmittleres Molekulargewicht sollte für eine Verwendbarkeit als geringst wasserlösliches Monomeres B vorzugsweise nicht mehr als 100000 betragen; in der Regel wird dieses relative zahlenmittlere Molekulargewicht 1000 bis 50000 bzw. 2000 bis 50000 betragen; Makromonomere sind dem Fachmann bekannt; ihre Herstellung ist beispielsweise in Makromol. Chem. 223 (1994) S. 29 bis 46 beschrieben). Ganz allgemein kommen als geringst wasserlösliche Monomere B alle diejenigen in Betracht, deren molare Löslichkeit bei 25 °C und 1 atm in Wasser geringer als die entsprechende Löslichkeit von Laurylacrylat ist. Solche Monomeren B sind z. B. auch das Methacryloyl-Polybutylacrylat

AB-6 und das Methacryloyl-Polystyrol A5-6 der Fa. Toa Gosei Kagaku KK (JP), die beide ein zahlenmittleres relatives Molekulargewicht von 6000 aufweisen. Aber auch Polyol 130 und Polyol 110 der Hüls AG (stereospezifisches, niedrigviskoses Polybutadien (75 % 1,4-cis, 24 % 1,4-trans, 1 % vinyl), dessen dynamische Viskosität bei 20 °C 3000 mPa·s beträgt) bilden als Makromonomere mit geringer Wasserlöslichkeit einsetzbare Verbindungen B.

Anstelle der Verwendung von Monomeren B kann die Stabilität der Emulsion E1 kann auch durch Einsatz nicht copolymerisierbarer Verbindungen B' mit einer Wasserlöslichkeit < 0,01 g/l verbessert werden. Derartige Verbindungen B' können gemeinsam mit den Monomeren B oder anstelle der Monomeren B verwendet werden. Verbindungen B' werden vorzugsweise in Mengen weniger als 10 Gew.-%, bezogen auf die Gesamtmenge der Monomere A und B, verwendet.

Ein Beispiel für eine Verbindung B' ist Acronal® A 150 F, ein Poly-n-butylacrylat der BASF AG, dessen 50 gew.-%ige Lösung in Ethylacetat bei 23 °C und 1 atm eine Viskosität (bestimmt nach ISO 3219, DIN 53019, bei 250 $s^{-1}$) von 33 mPa·s aufweist.

Aber auch PnBa, ein Hochtemperaturlösungspolymerisat des n-Butylacrylats (120 °C in Isopropanol) mit einem bei 25 °C in Isopropanol bestimmten K-Wert von 24, kommt als Verbindung B' in Betracht. Der K-Wert ist eine relative Viskositätszahl, die in Analogie zur DIN 53726 bestimmt wird. Er beinhaltet die Fließgeschwindigkeit des reinen Lösungsmittels relativ zur Fließgeschwindigkeit der 0,1 gew.-%igen Lösung des Polymerisats im selben Lösungsmittel (vgl. auch Cellulosechemie, Vol. 13 (1932), S. 58 - 64, und Kirk-Othmer Encyclopedia of Chemical Technology, Vol. 23, S. 967 - 968). Der K-Wert ist ein Maß für das mittlere Molekulargewicht eines Polymerisats. Ein hoher K-Wert entspricht dabei einem hohen mittleren Molekulargewicht.

Mögliche Verbindungen B' sind ferner Harze wie Kollophoniumharze (vgl. Ullmanns Encycl. Techn. Chem., 4. Auflage (1976), Vol. 12, S. 525 - 538) und Kohlenwasserstoffharze (vgl. Encycl. Polym. Sci. Eng. (1987) Vol. 7, S. 758 - 782), wie z. B. Kristalex F 85 der Fa. Hercules. Beispielhaft genannt sei Foral® 85 E, ein Glycerinester von hochhydriertem Kollophoniumharz (Erweichungspunkt: 86 °C) der Fa. Hercules. Weiter kommen als Verbindungen B' Polystyrole in Betracht (vgl. C.M. Miller et al., J. Polym. Sci.: Part A: Polym. Chem. 32, 2365-2376, 1994).

Aber auch sonstige wasserunlösliche, öllösliche Substanzen wie aliphatische und aromatische Kohlenwasserstoffe (z. B. Hexadekan), Filmbildehilfsmittel oder Weichmacher wie Plastilit® 3060 der BASF (ein technisches Gemisch der Di-n-butylester von $C_4$-$C_6$-Dicarbonsäuren) kommen als mögliche Verbindungen B' in Betracht.

Im erfindungsgemäßen Verfahren hat es sich als vorteilhaft erwiesen, wenn die zu polymerisierenden Monomere auch vernetzende Monomere C umfassen. Hierbei handelt es sich insbesondere um Monomere C, die wenigstens 2 nichtkonjugierte Doppelbindungen aufweisen. Derartige Monomere C werden, sofern erwünscht, in einer Menge von 0,1 bis 30 Gew.-%, bezogen auf die Gesamtmenge der zu polymerisierenden Monomere, insbesondere 0,5 bis 20 Gew.-% und ganz besonders bevorzugt 1 bis 10 Gew.-%, eingesetzt.

Geeignete Monomere C umfassen z. B. die Vinyl-, Allyl- und Methallylester der oben genannten ethylenisch ungesättigten Carbonsäuren ebenso wie die Ester dieser Säuren mit Tricyclodecenylalkohol, insbesondere die Ester der Methacrylsäure und der Acrylsäure, die Ester der oben genannten ethylenisch ungesättigten Carbonsäuren mit mehrwertigen Alkoholen, wie Ethylenglykoldiacrylat, Ethylenglykoldimethacrylat, Butandioldiacrylat, Butandioldimethacrylat, Hexandioldiacrylat, Hexandioldimethacrylat, Triethylenglykoldiacrylat, Trieethylenglykoltrimethacrylat, Tris (hydroxymethyl)ethantriacrylat und -trimethacrylat, Pentaerythrittriacrylat und -trimethacrylat, ferner die Allyl- und Methallylester von polyfunktionellen Carbonsäuren, wie Diallylmaleat, Diallylfumarat, Diallylphthalat. Typische Monomere C sind auch Verbindungen, wie Divinylbenzol, Divinylharnstoff, Diallylharnstoff, Triallylcyanurat, N,N'-Divinyl und N,N'-Diallylimidazolidin-2-on, sowie Methylenbisacrylamid und Methylenbismethacrylamid. Weiterhin können als Monomere C auch die Anhydride monoethylenisch ungesättigter Carbonsäuren, wie Methacrylsäureanhydrid, eingesetzt werden.

Anstelle oder gemeinsam mit den Monomeren C können auch monoethylenisch ungesättigte Monomere D verwendet werden, die anstelle der wenigstens einen weiteren ethylenisch ungesättigten Bindung eine funktionelle Gruppe aufweisen, die zur nachträglichen Vernetzung des Polymerisats oder zu einer Reaktion mit einer funktionellen Gruppe des Farbstoffs, die nicht zum Chromophor des Farbstoffs gehört, in der Lage ist. Üblicherweise sind derartige funktionelle Gruppen ausgewählt unter Epoxy-, Hydroxy-, N-Methylol- oder Carbonylgruppen. Beispiele für Monomere D sind N-Alkylolamide der oben genannten ethylenisch ungesättigten Carbonsäuren, z. B. N-Methylol(meth)acrylamid, die Hydroxyalkylester der oben genannten ethylenisch ungesättigten Carbonsäuren, insbesondere Hydroxyethyl(meth) acrylat, die Bisacetonylamide der oben genannten ethylenisch ungesättigten Carbonsäuren, insbesondere N,N-Bisacetonyl(meth)acrylamid, ferner die Vinyl-, Allyl- und Methallylglycidylether, Glycidylester der oben genannten ethylenisch ungesättigten Carbonsäuren, wie Glycidyl(meth)acrylat, und weiterhin die Ester von Acetylessigsäure mit den Hydroxyalkylestern der oben genannten ethylenisch ungesättigten Carbonsäuren, z. B. Acetylacetoxyethyl(meth)acrylat. Die genannten Monomere D können, sofern gewünscht, in Mengen von 0,1 bis 30 Gew.-%, bezogen auf die Gesamtmenge der zu polymerisierenden Monomere, mitpolymerisiert werden. In der Regel wird die Gesamtmenge an Monomeren C und Monomeren D 30 Gew.-%, vorzugsweise 20 Gew.-% und insbesondere 10 Gew.-%, bezogen auf die Gesamtmenge der zu polymerisierenden Monomere, nicht überschreiten. In einer bevorzugten Ausführungsform umfassen die zu polymerisierenden Monomere wenigstens ein Monomer C und/oder D in einer Gesamtmenge von >

0,1 Gew.-%, insbesondere in einer Menge von 0,5 bis 20 Gew.-% und speziell von 1 bis 15 Gew.-%, bezogen auf die Gesamtmenge der zu polymerisierenden Monomere. In einer bevorzugten Ausführungsform umfassen die zu polymerisierenden Monomere neben den Monomeren A und gegebenenfalls B ausschließlich Monomere C in einer Menge von 0,5 bis 20 Gew.-%, insbesondere 1 bis 15 Gew.-%. Anstelle oder gemeinsam mit den Monomeren C können auch Anhydride ethylenisch ungesättigter Dicarbonsäuren eingesetzt werden.

Ferner kann es von Vorteil sein, wenn man das erfindungsgemäße Verfahren in Gegenwart einer Siliciumorganischen Verbindung durchführt, die bei Hydrolyse Silanolgruppen bildet und wenigstens eine polymerisationsaktive Gruppe aufweist. Unter polymerisationsaktiven Gruppen sind solche funktionellen Gruppen zu verstehen, die bei einer radikalischen Polymerisationsreaktion mit der wachsenden Polymerkette unter Ausbildung einer kovalenten Bindung reagieren. Bevorzugte copolymerisationsaktive Gruppen sind insbesondere Mercaptogruppen und ethylenisch ungesättigte Doppelbindungen. Beispiele für derartige Verbindungen umfassen beispielsweise Vinyl-, Allyl-, Methallyltrialkoxysilane, z. B. Vinyl-, Allyl- und Methallyltrimethoxysilan, weiterhin Acryloxyalkyl- und Methacryloxyalkyltrialkoxysilane wie Methacryloxypropyltrimethoxysilan und Methacryloxypropyltriethoxysilan, und ferner γ-Mercaptoalkyltrialkoxysilane, wie 3-Mercaptopropyltrimethoxysilan. Derartige Verbindungen zählen ebenfalls zu den vernetzend wirkenden Monomeren D und können in Mengen von bis zu 20 Gew.-%, insbesondere bis 10 Gew.-%, bezogen auf die Gesamtmenge der zu polymerisierenden Monomere, mitpolymerisiert werden.

Als öllösliche Farbstoffe kommen für das erfindungsgemäße Verfahren alle jene Farbstoffe in Frage, die in den zu polymerisierenden Monomeren eine hinreichende Löslichkeit aufweisen. Geeignete Farbstoffe sind insbesondere solche, deren Löslichkeit in den Monomeren > 0,01 Gew.-%, vorzugsweise > 0,05 Gew.-%, insbesondere > 0,1 Gew.-%, besonders bevorzugt > 0,5 Gew.-% und ganz besonders bevorzugt > 1 Gew.-% ist. In der Regel wird man die Farbstoffe in Mengen von 0,001 bis 20 Gew.-%, und vorzugsweise 0,01 bis 10 Gew.-%, insbesondere 0,02 bis 5 Gew.-%, bezogen auf die zu polymerisierenden Monomere, einsetzen. Je nach gewünschter Farbtiefe und Löslichkeit des Farbstoffs in den zu polymerisierenden Monomeren können auch bis zu 50 Gew.-%, insbesondere bis zu 40 Gew.-%, beispielsweise 5 bis 30 Gew.-% Farbstoff, bezogen auf die zu polymerisierenden Monomere eingesetzt werden.

Farbstoffe mit basischen Aminogruppen, die üblicherweise in ihrer Salzform vorliegen und daher in den Monomeren nur schlecht löslich sind, können im erfindungsgemäßen Verfahren auch eingesetzt werden, wenn man die Farbstoffe mit langkettigen Carbonsäuren, z. B. mit 8 bis 22 C-Atomen, mit Phosphorsäuredialkylestern, mit Phosphorsäuremonoalkylestern oder mit Alkylsulfonsäuren, z. B. Dodecylsulfonsäure, umsalzt. Entsprechend können Farbstoffe mit sauren funktionellen Gruppen oder deren Salze durch Umsalzen mit langkettigen Aminen, z. B. mit 8 bis 22 C-Atomen in eine monomerlösliche Form überführt werden. Geeignete langkettige Carbonsäuren sind beispielsweise Fettsäuren wie Caprinsäure, Palmitinsäure, Stearinsäure, Ölsäure, Linolsäure und Linolensäure; geeignete Amine sind beispielsweise primäre, lineare oder verzweigt kettige Alkylamine mit 8 bis 22 C-Atomen. Zum Umsalzen reicht es in der Regel aus, den Farbstoff mit der langkettigen Carbonsäure bzw. dem langkettigen Amin oder deren Salzen in den Monomeren zusammenzugeben und gegebenenfalls unter Rühren und Sauerstoffausschluss diese Mischung bis zur Lösung des Farbstoffs zu erwärmen.

Die erfindungsgemäß zur Anwendung kommenden Farbstoffe weisen in der Regel einen Chromophor mit einem ausgedehnten π-Elektronensystem und vorzugsweise wenigstens einen oder mehrere Substituenten auf, welche die Löslichkeit der Farbstoffe in unpolaren oder wenig polaren Medien, z. B. den Monomeren, verbessern. Geeignete Substituenten umfassen Alkyl, das gegebenenfalls auch durch Heteroatome unterbrochen und/oder Hydroxy oder Halogen substituiert ist, Alkoxy, Dialkylamino, Dialkylaminocarbonyl, Alkyloxycarbonyl, Alkylcarbonylamino, Alkylcarbonyloxy, Aryl, Aryloxy, Arylcarbonyl, Arylcarbonyloxy, Arylcarbonylamino, Aryloxycarbonyl, Arylaminocarbonyl, Arylalkyl, Cycloalkyl, Halogen.

Unter Alkyl ist hier und im folgenden sowohl lineares oder verzweigtes Alkyl zu verstehen, das, sofern angegeben, durch ein oder mehrere, nicht benachbarte Sauerstoffatome, Schwefelatome, Iminogruppen oder Alkyliminogruppen unterbrochen und/oder ein oder mehrfach durch Halogen oder Hydroxy substituiert sein kann. Beispiele für unsubstituierte Alkylgruppen umfassen Methyl, Ethyl, n-Propyl, i-Propyl, n-Butyl, 2-Butyl, Isobutyl, tert.-Butyl, n-Pentyl, Isopentyl, Neopentyl, tert.-Pentyl, Hexyl, 2-Methylpentyl, Heptyl, 1-Ethylpentyl, n-Octyl, 2-Ethylhexyl, Isooctyl, Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl, Eicosyl. Beispiele für durch Sauerstoff unterbrochene Alkylgruppen umfassen 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Isopropoxypropyl, 2- oder 3-Isopropoxypropyl, 2- oder 3-Butoxypropyl, 2- oder 3-(2-Ethylhexyloxypropyl) etc. Halogensubstituierte Alkylgruppen umfassen insbesondere Perfluoralkylgruppen mit 1 bis 4 C-Atomen, wie Trifluormethyl. Beispiele für Hydroxy-substituierte Alkylgruppen sind Hydroxymethyl, 1- oder 2-Hydroxyethyl, 1-, 2- oder 3-Hydroxypropyl, 1,2-Bishydroxyethyl.

Unter Aryl versteht man insbesondere Phenyl oder Naphthyl, das gegebenenfalls durch 1, 2 oder 3 Substituenten, ausgewählt unter $C_1$-$C_4$-Alkyl, $C_1$-$C_4$-Alkyloxy, Halogen, Hydroxy, das gegebenenfalls auch ethoxyliert sein kann, substituiert ist. Arylalkyl steht für Aryl, das durch eine Alkylengruppe, die vorzugsweise 1 bis 6 und insbesondere 1 bis 4 C-Atome aufweist, gebunden ist. Beispiele für $C_1$-$C_4$-Alkylen umfassen Methylen, 1,1-Ethylen, 1,2-Ethylen,

1,1-Propylen, 1,2-Propylen, 2,2-Propylen, 1,3-Propylen und 1,4-Butylen. Beispiele für Arylalkyl umfassen insbesondere Benzyl und 2-Phenylethyl, die gegebenenfalls auch substituiert sind.

Beispiele für Cycloalkyl sind aliphatische Monocyclen wie Cyclopentyl, Cyclohexyl und Cycloheptyl sowie aliphatische Polycyclen wie Norbornyl, Adamantyl oder Decahydronaphthyl, die wie Aryl substituiert sein können. Unter Heterocycloalkyl versteht man aliphatische mono- und polycyclische Reste, die wenigstens ein Heteroatom, z.B S, O und/oder N, im Ring aufweisen. Beispiele hierfür sind Pyrrolidinyl, Furanyl, Piperidinyl, Oxazolidinyl, Morpholinyl und Tetrahydropyranyl. Unter Heteroaryl versteht man Reste, die sich von gegebenenfalls substituierten oder benzanellierten Heteroaromaten wie Thiophen, Pyrrol, Pyrazol, Imidazol, Oxazol, Thiazol, Pyridin, Pyrimidin, Pyridazin, Triazin, Chinolin, Chinazolin u. ä. ableiten.

Im erfindungsgemäßen Verfahren sind die organischen, öllöslichen Farbstoffe beispielsweise ausgewählt unter öllöslichen Derivaten des Naphthalins, des Perylens, des Terrylens, des Quarterrylens, des Diketopyrrolopyrrols, von Perinonfarbstoffen, Cumarinfarbstoffen, Oxazinfarbstoffen, Anthracenfarbstoffen, Naphthacenfarbstoffen, Anthrachinonfarbstoffen, Azofarbstoffen, Methinfarbstoffen, Azamethinfarbstoffen, Isoindolin- und Isoindolinonfarbstoffen, Porphyrinen, Phthalocyaninen und Naphthalocyaninen, sowie den Metallkomplexen der drei letztgenannten Farbstoffklassen. Hier und im Folgenden ist unter der Öllöslichkeit des Farbstoffs zu verstehen, dass der Farbstoff in den zu polymerisierenden Monomeren zumindest begrenzt löslich ist, so dass er unter Polymerisationsbedingungen in den Monomeren gelöst oder gegebenenfalls molekulardispers verteilt (d. h. in Form von bi- oder höhermolekularen Aggregaten homogen in der Monomerphase verteilt) vorliegt.

Geeignete öllösliche Cumarinfarbstoffe sind beispielsweise in der US-A 3 880 869 und der DE-A 44 24 817 beschrieben, auf die hiermit in vollem Umfang Bezug genommen wird.

Geeignete unpolare Perylenfarbstoffe sind beispielsweise solche, wie sie in der US-A 4 618 694, der DE-A 24 51 782, der US-A 379 934, der US-A 4 446 324, der EP-A 277 980, der EP-A 657 436 oder der WO 96/22332 beschrieben sind. Weitere geeignete unpolare Perylenfarbstoffe lassen sich beispielsweise der EP-A 73 007 entnehmen. Auf die genannten Druckschriften wird hiermit in vollem Umfang Bezug genommen.

Geeignete Naphthalinfarbstoffe umfassen unter anderem Naphthalin-1,8-dicarbonsäureimide, die am Imid-Stickstoff mit unsubstituiertem, linearem oder verzweigtem $C_1$-$C_{20}$-Alkyl oder Aryl substituiert sind, und die in der 4- und/oder der 5-Position des Naphthalinrings $C_1$-$C_6$-Alkoxy-Substituenten aufweisen können.

Geeignete Anthracenfarbstoffe umfassen unter anderem 9,10-Diphenylanthracen, 9,10-Bisphenylethinylanthracen, 1,8-Dichloro-9,10-bisphenylethinylanthracen. Beispiele für geeignete Anthracenfarbstoffe lassen sich beispielsweise Ullmann's Ecyclopedia of Industrial Chemistry, 5th Edition, Vol. A2, S. 402 f. entnehmen. Geeignete Porphyrinfarbstoffe umfassen beispielsweise Tetraphenylporphyrin und Octaethylporphyrin sowie deren Zink- oder Nikkelkomplexe. Beispiele für geeignete Phthalocyaninfarbstoffe sind Metallophthalocyanine, insbesondere Kupferphthalocyanine, die an den Phenyleneinheiten des Chromophors löslichkeitsvermittelnde Alkylgruppen mit vorzugsweise 10 bis 20 C-Atomen aufweisen, wobei die Alkylreste direkt oder über eine funktionelle Gruppe, beispielsweise über eine Sulfonamidgruppe an den Chromophor gebunden sein kann. Handelsüblich sind beispielsweise Sulfonamide von ein oder mehrfach sulfonierten Metallophthalocyaninen mit $C_{10}$-$C_{20}$-Alkylaminen, z. B. das Tetrasulfonamid des vierfach sulfonierten Kupferphthalocyanins mit Stearylamin.

Besonders hervorzuheben sind die folgenden Farbstoffe:

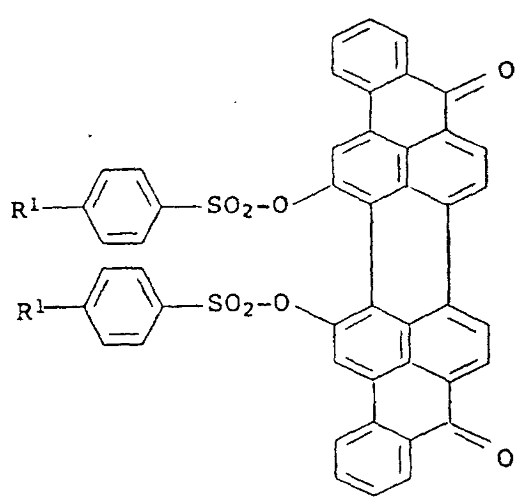

Hierin steht $R^1$ für einen Alkylrest, insbesondere einen $C_1$-$C_{13}$-Alkylrest;

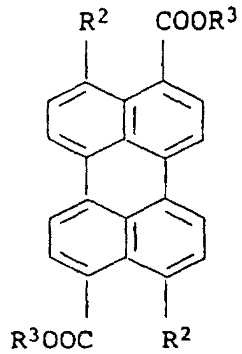

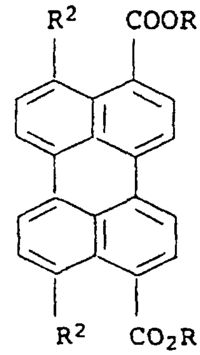

Hierin steht $R^2$ für ein Wasserstoffatom oder eine Cyanogruppe und $R^3$ für eine $C_1$-$C_{11}$-Alkylgruppe;

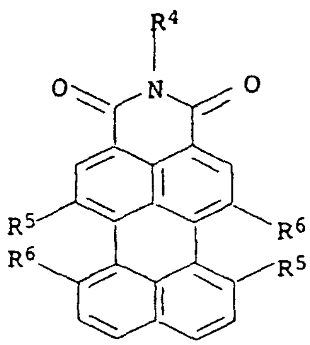

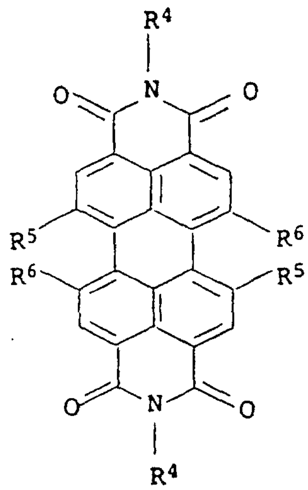

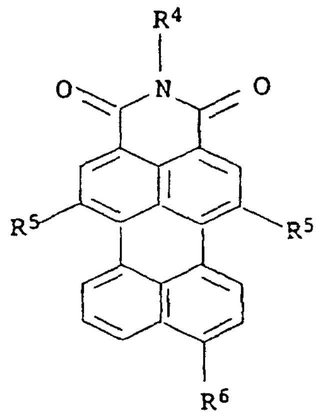

Hierin steht $R^4$ für $C_5$-$C_{20}$-Alkyl, das gegebenenfalls durch ein oder mehrere, nicht benachbarte Sauerstoffatome unterbrochen ist, oder Phenyl, das gegebenenfalls durch $C_1$-$C_{13}$-Alkyl oder $C_1$-$C_{13}$-Alkoxy ein- oder mehrfach substituiert ist, und $R^5$ und $R^6$ unabhängig voneinander für Wasserstoff, Chlor, Brom, Phenoxy oder durch Halogen, Cyano, $C_1$-$C_4$-Alkyl oder $C_1$-$C_4$-Alkoxy substituiertes Phenoxy;

Erfindungsgemäß zählen zu den öllöslichen Farbstoffen auch optische Aufheller, die in den zu polymerisierenden Monomere löslich, d. h. öllöslich, sind. Geeignete optische Aufheller sind beispielsweise Verbindungen der Klassen der Bisstyrylbenzole, der Stilbene, der Benzoxazole, der Cumarine, der Pyrene und der Naphthaline.

Optische Aufheller aus der Klasse der Naphthaline sind beispielsweise Verbindungen der allgemeinen Formel:

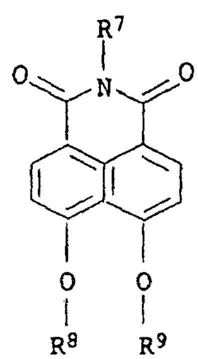

Hierin steht $R^7$ für $C_5$-$C_{20}$-Alkyl, das gegebenenfalls durch ein Sauerstoffatom unterbrochen ist, oder Phenyl, das durch $C_1$-$C_{13}$-Alkyl oder $C_1$-$C_{13}$-Alkoxy ein- oder mehrfach substituiert ist, bevorzugt für 3-Pentyl oder für

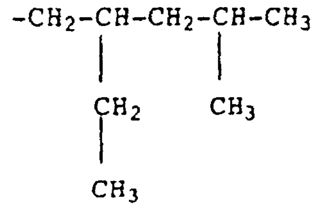

und $R^8$ und $R^9$ für $C_1$- bis $C_6$-Alkyl, insbesondere Methyl, Ethyl, n-Propyl, Isopropyl, n-Butyl oder tert.-Butyl.

Geeignete optische Aufheller aus der Klasse der Bisstyrylbenzole sind insbesondere Verbindungen der Formel:

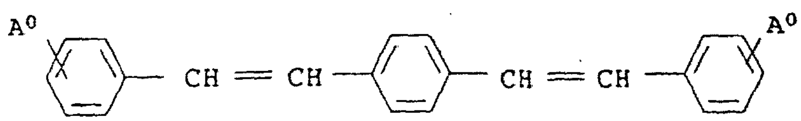

worin die Reste $A^0$ unabhängig voneinander für H, Cl, Br, I, CN, Trifluormethyl, $C_1$-$C_4$-Alkoxy, $C_1$-$C_4$-Alkylcarbonyl, $C_1$-$C_4$-Alkoxycarbonyl oder $C_1$-$C_4$-Alkylsulfonyl stehen. Die zentralen Doppelbindungen weisen unabhängig voneinander vorzugsweise eine E-Konfiguration auf. Die Reste $A^0$ können unabhängig voneinander in der o-, m-oder p-Position zur zentralen Doppelbindung angeordnet sein. Vorzugsweise steht wenigstens einer der Reste $A^0$ für eine CN-Gruppe. Beispiele für derartige Verbindungen sind o,o-Dicyanobistyrylbenzol (= 1,4-Bis-(2'-cyanostyryl)benzol, o, m-Dicyanobistyrylbenzol, o,p-Dicyanobistyrylbenzol, m,m-Dicyanobistyrylbenzol, m,p-Dicyanobistyrylbenzol, p,p-Dicyanobistyrylbenzol, o-Cyano-p-methoxycarbonylbisstyrylbenzol (= 1-(2-Cyanostyryl)-4-(4-methoxycarbonylstyryl) benzol und p,p-Dimethoxycarbonylbisstyrylbenzol (= 1,4-Bis-(4'-methoxycarbonylstyryl)benzol.

Geeignete optische Aufheller aus der Klasse der Stilbene gehorchen z. B. der Formeln

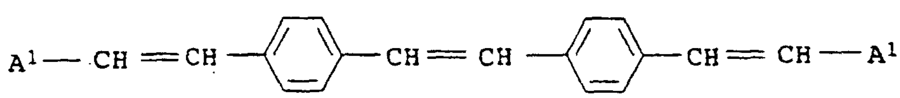

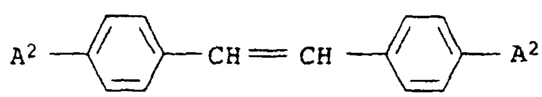

worin $A^1$ unabhängig voneinander jeweils $C_1$-$C_4$-Alkoxycarbonyl oder Cyano, und $A^2$ unabhängig voneinander Benzoxazol-2-yl, das einoder zweifach durch $C_1$-$C_4$-Alkyl, insbesondere Methyl substituiert sein kann, $C_1$-$C_4$-Alkoxycarbonyl oder 3-($C_1$-$C_4$-Alkyl)-1,2,4-oxadiazol-3-yl bedeuten.

Geeignete optische Aufheller aus der Klasse der Benzoxazole gehorchen z. B. den Formeln

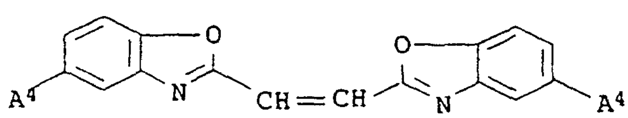

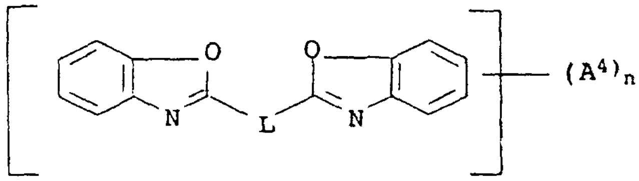

worin $A^4$ unabhängig voneinander jeweils H oder $C_1$-$C_4$-Alkyl, insbesondere Methyl, L einen Rest der Formel

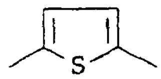

oder

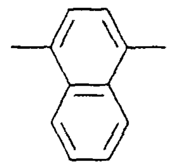

bedeuten und n für 0, 1 oder 2 steht.

Geeignete optische Aufheller aus der Klasse der Cumarine gehorchen z. B. der Formel

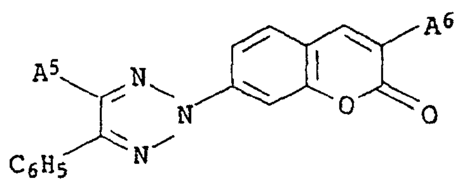

in der

$A^5$ H oder $C_1$-$C_4$-Alkyl und

$A^6$ Phenyl oder 3-Halogenpyrazol-1-yl, insbesondere 3-Chlorpyrazol-1-yl, bedeuten.

Geeignete optische Aufheller aus der Klasse der Pyrene gehorchen z. B. der Formel

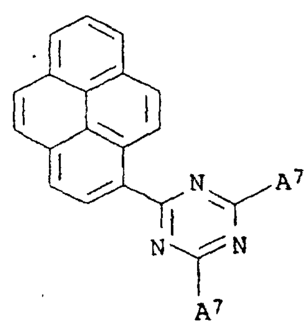

in der

$A^7$ jeweils unabhängig voneinander H oder $C_1$-$C_4$-Alkoxy, insbesondere Methoxy, bedeutet.

Es ist möglich, die obengenannten Aufheller alleine oder auch als Mischungen untereinander anzuwenden.

Bei den obengenannten optischen Aufhellern handelt es sich in der Regel um an sich bekannte und handelsübliche Produkte. Sie sind beispielsweise in Ullmann's Encyclopedia of Industrial Chemistry, 5. Auflage, Band A18, Seiten 156 bis 161, beschrieben oder können nach den dort genannten Methoden erhalten werden.

In einer bevorzugten Ausführungsform der vorliegenden Erfindung werden Farbstoffe eingesetzt, die wenigstens eine copolymerisierbare, ethylenisch ungesättigte Doppelbindung aufweisen, die nicht zum Chromophor des Farbstoffs gehört. In der Regel handelt es sich dabei um solche Farbstoffe, die durch die allgemeine Formel I

$$Q\text{-}X\text{-}S\text{-}P \qquad (I)$$

beschrieben werden, worin

X ausgewählt ist unter einer Einfachbindung, Ethinylen oder $\{CH_2)_k$-X'- mit k = 0, 1, 2, 3 oder 4 und

X' ausgewählt ist unter -O-; -N(R)-; -S-; -O-C(O)-; -O-C(O)-O-; -O-C(O)-N(R')-; -N(R')-C(O)-; -N(R')-C(O)-O-; - N(R')-C(O)-N(R")-; -C(O)-; -C(O)-O-; -C(O)-N(R')-; -$S(O)_2$-O-; -$S(O)_2$-N(R')-; -O-$S(O)_2$-; -N(R')-$S(O)_2$-; hierin stehen R für Wasserstoff, lineares oder verzweigtes $C_1$-$C_6$-Alkyl, Aryl, Aryl-$C_1$-$C_6$-alkyl, $C_1$-$C_6$-Alkylcarbonyl, Arylcarbonyl oder Formyl und R', R" unabhängig voneinander für Wasserstoff, lineares oder verzweigtes $C_1$-$C_6$-Alkyl, Aryl oder Aryl-$C_1$-$C_6$-alkyl, die gegebenenfalls durch OH, Halogen, $C_1$-$C_4$-Alkyl oder $C_1$-$C_4$-Alkyloxy substituiert sind.

S ausgewählt ist unter einer Einfachbindung, $C_1$-$C_{12}$-Alkylen, das durch ein oder mehrere, nicht benachbarte Sauerstoffatome, Schwefelatome oder (Alkyl)iminogruppen unterbrochen sein kann, 1,2-, 1,3-, 1,4-Phenylen, das gegebenenfalls ein oder zwei Substituenten aufweist, ausgewählt unter $C_1$-$C_4$-Alkyl, $C_1$-$C_4$-Alkyloxy oder Halogen, 1,2-, 1,3- oder 1,4-Xylylen, das gegebenenfalls wie Phenylen substituiert ist, und

P für eine polymerisierbare Gruppe der allgemeinen Formel II

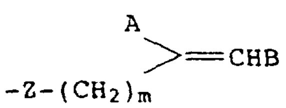

(II)

steht, worin

A und B unabhängig voneinander für Wasserstoff, $C_1$-$C_6$-Alkyl, Phenyl stehen oder A und B gemeinsam mit der Doppelbindung, an die sie gebunden sind, einen Cyclopenten- oder Cyclohexenring bilden,

m für 0, 1, 2 oder 3 steht und

Z eine Einfachbindung bedeutet oder eine der oben für X' angegebenen Bedeutungen besitzt und

Q für den Chromophor eines organischen Farbstoffs steht.

In Formel I steht X vorzugsweise für eine Einfachbindung, Ethinylen oder für X' (k = 0). S ist vorzugsweise ausgewählt unter einer Einfachbindung, $C_1$-$C_{12}$-Alkylen, insbesondere $C_1$-$C_6$-Alkylen, 1,2-, 1,3- oder 1,4-Phenylen. Q leitet sich vorzugsweise von einem der oben genannten Farbstoffe, insbesondere von Perylenfarbstoffen ab. P steht vorzugsweise für eine Gruppe der allgemeinen Formel II, worin A für Wasserstoff oder $C_1$-$C_4$-Alkyl, insbesondere Methyl, B für Wasserstoff oder Methyl stehen und m = 0 oder 1 ist. Insbesondere steht P für Vinyl, Allyl, Methallyl, Acrylamido, Methacrylamido, Acryloxy, Methacryloxy, 3-Vinylureido, 3-Allylureido, 3-Methallylureido, N-Vinylaminocarbonyloxy, N-A1-lylaminocarbonyloxy oder N-Methallylcarbonyloxy.

Copolymerisierbare Farbstoffe der allgemeinen Formel I sind grundsätzlich bekannt. So beschreiben beispielsweise die EP-A-090 282 und die EP-A-260 687 copolymerisierbare Anthrachinonfarbstoffe der allgemeinen Formel I. Aus der EP-A-090 282 sind zudem copolymerisierbare Azofarbstoffe bekannt.

In einer besonders bevorzugten Ausführungsform der vorliegenden Erfindung werden copolymerisierbare Perylenfarbstoffe der allgemeinen Formel III

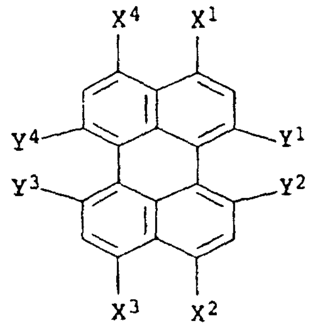

(III)

eingesetzt, worin eine oder zwei der Gruppen $X^1$ bis $X^4$, $Y^1$ bis $Y^4$ für einen Rest der allgemeinen Formel IV

$$—X—S—P \qquad (IV)$$

stehen, worin X, S und P die zuvor angegebenen Bedeutungen besitzen, oder $X^1$ gemeinsam mit $X^4$ und/oder $X^2$ gemeinsam mit $X^3$ auch eine Gruppe der allgemeinen Formel V

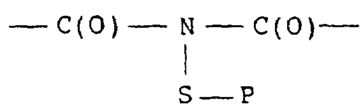

(V)

bedeuten können, worin S und P eine der vorgenannten Bedeutungen besitzen und die verbleibenden Gruppen $X^1$ bis $X^4$, $Y^1$ bis $Y^4$ unabhängig voneinander ausgewählt sind unter Wasserstoff, lineares oder verzweigtes $C_1$-$C_{12}$-Alkyl, das gegebenenfalls durch ein oder mehrere, nicht benachbarte Sauerstoffatome, Schwefelatome oder durch (Alkyl) iminogruppen unterbrochen und/oder durch OH und/oder Halogen substituiert sein kann, Cycloalkyl, Heterocycloalkyl, Aryl, Hetaryl, Aryl-$C_1$-$C_6$-alkyl, Heteroaryl-$C_1$-$C_6$-alkyl, $C_2$-$C_{18}$-Alkinyl, Arylethinyl, Tris($C_1$-$C_4$-alkyl)silylethinyl, Cyano, Nitro, Halogen und/oder für Atomgruppen ausgewählt unter:
-O-R; -O-C(O)-R'; -N(R')-C(O)-R"; -NRR'; -C(O)-R'; -C(O)-OR'; - C(O)-NR'R"; -N(R')-C(O)-OR"; -N(R')C(O)-NRR", -O-$S(O)_2$-R', - N(R')-$S(O)_2$-R" stehen. R, R' und R" weisen hierin die zuvor angegebenen Bedeutungen auf.

In den verbleibenden Gruppen $X^1$ bis $X^4$ können $X^1$ gemeinsam mit $X^4$ und/oder $X^2$ gemeinsam mit $X^3$ auch für -X"-C(O)- , -C(O)-N(R"')-C(O)- oder -C(O)-O-C(O)- stehen, worin R"' die zuvor für R' bzw. R" angegebenen Bedeutungen besitzt und X" für -CH=CH-, 1,2-Phenylen, 1,2-Naphthylen, 2,3-Naphthylen oder 2,3-Pyridinylen steht, die gegebenenfalls mit $C_1$-$C_4$-Alkylen, $C_1$-$C_4$-Alkoxy oder Halogen ein- oder zweifach substituiert sind.

Farbstoffe der allgemeinen Formel III, worin $X^1$ gemeinsam mit $X^4$ für eine Gruppe der allgemeinen Formel V gemäß der obigen Definition und $X^2$ gemeinsam mit $X^3$ für eine Gruppe der allgemeinen Formel -C(O)-N(R"')-C(O)- stehen, sind aus der US-A-4,667,036 und der EP-A-422 535 bekannt. Diese Farbstoffe sind für das erfindungsgemäße Verfahren geeignet. Ihre Zugänglichkeit ist jedoch aufgrund des unsymmetrischen Substitutionsmusters und der daraus resultierenden aufwendigen Herstellung begrenzt.

In bevorzugten Farbstoffen der allgemeinen Formel III bilden $X^1$ und $X^4$ entweder eine Gruppe der allgemeinen Formel V gemäß obiger Definition (Farbstoffe IIIa) oder eine Gruppe der Formel - C(O)-N(R"')-C(O)- (Farbstoffe IIIb).

In den Farbstoffen IIIa weisen die verbleibenden Gruppen $X^2$ und $X^3$ vorzugsweise eine von -X-S-P verschiedene Bedeutung auf und sind insbesondere unabhängig voneinander ausgewählt unter Wasserstoff, linearem oder verzweigtem $C_1$-$C_{12}$-Alkyl, das gegebenenfalls durch ein oder mehrere, nicht benachbarte Sauerstoffatome, Schwefelatome oder durch (Alkyl)iminogruppen unterbrochen und/oder durch Halogen substituiert ist, Alkyloxy, gegebenenfalls substituiertes Aryl oder Aryloxy oder Halogen stehen. $Y^1$ bis $Y^4$ weisen in den Farbstoffen IIIa eine der vorgenannten, von X-S-P verschiedenen Bedeutungen auf.

In den Farbstoffen IIIb steht vorzugsweise eine der Gruppen $X^2$ oder $X^3$ für eine Gruppe -X-S-P. Die verbleibende Gruppe $X^2$ oder $X^3$ weist dann eine der vorgenannten, von X-S-P verschiedenen Bedeutungen auf.

Bevorzugt werden auch Perylenfarbstoffe der allgemeinen Formel III, worin

$X^1$, $X^3$ und $X^4$ unabhängig voneinander ausgewählt unter Wasserstoff, linearem oder verzweigtem $C_1$-$C_{12}$-Alkyl, das gegebenenfalls durch ein oder mehrere, nicht benachbarte Sauerstoffatome, Schwefelatome

oder durch (Alkyl)iminogruppen unterbrochen und/oder durch OH und/oder Halogen substituiert sein kann, Alkyloxy, Cycloalkyl, Cycloalkyloxy, $C_2$-$C_8$-Alkinyl, Tris-($C_1$-$C_4$-alkyl)silylethinyl, Aryl, Aryloxy, Halogen oder Cyano,

$X^2$ für eine Gruppe der allgemeinen Formel IV

$$—X—S—P \qquad (IV)$$

steht, worin X, S und P die zuvor angegebenen Bedeutungen aufweisen, und

$Y^1$ bis $Y^4$ die zuvor angegebenen, von -X-S-P verschiedenen Bedeutungen besitzen (Farbstoffe IIIc).

Eine vierte Klasse von Farbstoffen der allgemeinen Formel III betrifft solche Farbstoffe, worin sowohl $X^1$ mit $X^4$ als auch $X^2$ mit $X^3$ für eine Gruppe der allgemeinen Formel V gemäß obiger Definition stehen (Farbstoffe IIId).

Vorzugsweise stehen $Y^1$ bis $Y^4$ in Formel III für Wasserstoff oder Halogen, oder Phenoxy, wobei letzteres gegebenenfalls substituiert ist. Bevorzugte Substituenten sind hierbei Halogen, insbesondere Chlor und Brom, $C_1$-$C_4$-Alkyl, z. B. Methyl, Ethyl, n-Propyl, n-Butyl und tert.-Butyl, oder $C_1$-$C_4$-Alkyloxy, z. B. Methoxy, Ethoxy, n-Propyloxy, n-Butyloxy oder tert.-Butyloxy.

Die Gruppe S in Formel IV oder V steht vorzugsweise für eine Einfachbindung, für lineares oder verzweigtes, vorzugsweise lineares $C_1$-$C_{12}$-Alkylen, 1,4-Phenylen oder 1,4-Phenylen-$C_1$-$C_4$-alkylen. X steht vorzugsweise für Ethinylen oder eine Einfachbindung.

Ganz besonders bevorzugte Perylenfarbstoffe der allgemeinen Formel III weisen eine Gruppe der allgemeinen Formel IV oder V auf, worin P für Vinyl, Allyl, Methallyl, Acrylamido, Methacrylamido, Acryloxy, Methacryloxy, 3-Vinylureido, 3-Allylureido, 3-Methallylureido, N-vinylaminocarbonyloxy, N-Allylaminocarbonyloxy oder N-Methallylaminocarbonyloxy steht.

Die erfindungsgemäß eingesetzten Farbstoffe der allgemeinen Formel III können nach üblichen Verfahren, ausgehend von bekannten Perylenderivaten, hergestellt werden. Perylenderivate, die als Ausgangsverbindungen geeignet sind, werden z. B. in der EP-A-238 436, der EP-A-465 410, der WO 97/22 607 und der WO 96/22 332 sowie von Rademacher et al., Chem. Ber. 115, 1982, 2972, Quante et al., Macromol. Chem. Phys. 197, 1996, 4029, Feiler et al., Liebigs Ann. 1995, 1229, Schlichting et al., Liebigs Ann./Recueil 1997, 395 und Kaiser et al., Chem. Ber. 124, 1991, 529 beschrieben.

Üblicherweise werden in die bekannten Perylenderivate nach konventionellen Methoden, beispielsweise durch Veresterung oder Amidierung von Perylencarbonsäuren, durch Imidierung von Perylendicarbonsäuren, durch Veresterung oder Veretherung von Hydroxylgruppen-funktionalisierten Perylenen, durch Alkylierung von Perylencarbonsäureamiden oder von Perylencarbonsäureimiden (bzw. von Perylentetracarbonsäurediimiden) Gruppen -X-S-$R^f$ oder Gruppen -X-S-P eingeführt. Hierin weisen X, S und P die oben genannten Bedeutungen auf. $R^f$ steht für eine funktionelle Gruppe, die in eine polymerisierbare Gruppe P umgewandelt werden kann, oder die zur Ausbildung einer chemischen Bindung mit einer ethylenisch ungesättigten Verbindung W, welche eine zu $R^f$ komplementäre reaktive Gruppe $R^w$ aufweist, in der Lage ist.

Grundsätzlich kann die reaktive Gruppe $R^f$ auch in latenter Form vorliegen und erst durch eine nachfolgende chemische Modifizierung in die reaktive Form $R^f$ überführt werden. Übliche reaktive Gruppen $R^f$ umfassen Hydroxylgruppen, primäre und sekundäre Aminogruppen, die mit ethylenisch ungesättigten Carbonsäuren oder Carbonsäurederivaten, wie Carbonsäurechloriden, -anhydriden, oder mit Isocyanaten oder Allylhalogeniden zu den gewünschten Endprodukten umgesetzt werden können. Die Gruppen -X-S-$R^f$ und -X-S-P können auch durch Übergangsmetallkatalysierte Aryl/Aryl-Kupplung, Aryl/Alkinyl-Kupplung oder durch Heck-Reaktion in die Perylenverbindung eingeführt werden. Die vorgenannten Reaktionstypen sind dem Fachmann grundsätzlich bekannt und können in analoger Weise zur Herstellung der erfindungsgemäß eingesetzten Perylenverbindungen eingesetzt werden (vgl. hierzu J. March, Advanced Organic Chemistry, John Wiley & Sons, New York, 1992; Larock, Comprehensive Organic Transformations, VHC Verlagsgesellschaft, Weinheim, 1989).

Die Farbstoffe IIIb und IIIc sind beispielsweise ausgehend von Perylenverbindungen der allgemeinen Formel VI

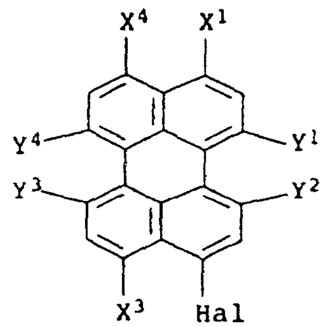

(VI)

zugänglich, worin $X^1$, $X^3$ und $X^4$ sowie $Y^1$ bis $Y^4$ eine der vorgenannten von Halogen und -X-S-P verschiedenen Bedeutungen besitzen und Hal für Halogen, insbesondere Brom, steht. Vorzugsweise sind $X^1$ und $X^4$ unabhängig voneinander ausgewählt unter Wasserstoff, $C_1$-$C_{12}$-Alkyl oder Aryl. $X^1$ und $X^4$ können auch gemeinsam für -C(o)-N(R''') -C(O)- stehen. $X^3$ steht insbesondere für Wasserstoff. Derartige Verbindungen werden z. B. von Schlichting et al. (siehe oben) sowie in der WO 96/22 332 beschrieben. Die Verbindungen der allgemeinen Formel VI können dann analog der bei Schlichting et al. (siehe oben) beschriebenen Vorgehensweise mit geeigneten ω-funktionalisierten Alkinen umgesetzt werden (siehe auch Tetrahedron Lett. 50, 1975, 4467). Aus den Kupplungsprodukten können dann gegebenenfalls nach Hydrierung der Ethinylgruppen reaktive Gruppen, z. B. OH-Gruppen oder $NH_2$-Gruppen nach konventionellen Methoden (siehe z. B. Schlichting et al. und dort angegebene zitierte Literatur) freigesetzt werden, die anschließend mit einer reaktiven ethylenisch ungesättigten Verbindung W, z. B. dem Säurechlorid einer ethylenisch ungesättigten Carbonsäure wie Acrylsäurechlorid oder einem ethylenisch ungesättigten Isocyanat, wie Allylisocyanat, zu den gewünschten Verbindungen IIIa bzw. IIIb umgesetzt werden. Üblicherweise wird man die letztgenannte Umsetzung in einem inerten, aprotischen Lösungsmittel, z. B. in einem aliphatischen oder cycloaliphatischen Ether, einem aromatischen Kohlenwasserstoff oder in einem Stickstoff enthaltenden Lösungsmittel wie Pyridin, Chinolin oder N-Methylpyrrolidon durchführen.

Vorzugsweise wird man die Umsetzung der Säurechloride in Gegenwart einer Base durchführen. Übliche Basen sind Trialkylamine, wie Triethylamin, Tripropylamin, Tributylamin, ferner Diazabicyclooctan und Diazabicycloundecen. Das Verhältnis von Base zu Säurechlorid wird üblicherweise äquimolar gewählt.

Bezogen auf die reaktive Gruppe im Perylen wird das Säurechlorid vorzugsweise in einer Menge von 1 bis 5 Moläquivalenten und das Isocyanat in einer Menge von 1 bis 3 Moläquivalenten eingesetzt.

Die Reaktionstemperatur liegt üblicherweise in einem Bereich von 20 bis 150 °C und richtet sich nach Reaktivität und Polymerisationsneigung der Verbindung W. Bei der Umsetzung von Hydroxyalkylperylenen mit Acrylsäurechlorid liegt sie bevorzugt im Bereich von 20 bis 70 °C, bei Umsetzung mit Methacrylsäurechlorid im Bereich von 40 bis 90 °C und bei Umsetzung mit Isocyanaten im Bereich von 80 bis 140 °C.

Verbindungen der allgemeinen Formel VI können auch einer asymmetrischen Aryl/Aryl-Kupplung mit Arylboronsäureestern in Gegenwart von Palladium(0)-Verbindungen unterworfen werden. Vorteilhafterweise können die Arylboronsäuren bereits eine copolymerisierbare Doppelbindung enthalten, da diese unter Kupplungsbedingungen nicht angegriffen wird. Beispiele für geeignete Arylboronsäuren mit copolymerisierbaren Doppelbindungen sind o-, m- und para-Styrolboronsäuren. Selbstverständlich können die Arylboronsäuren auch Funktionalitäten $R^f$ aufweisen, die, gegebenenfalls nach chemischer Modifizierung mit einer ethylenisch ungesättigten Verbindung W zum gewünschten Endprodukt der allgemeinen Formel III umgesetzt werden können.

Üblicherweise erfolgt die Umsetzung des Perylens VI in einer Mischung aus einer wässrigen Lösung einer anorganischen Base und einem organischen, mit Wasser nicht mischbaren Lösungsmittel.

Geeignete Basen sind Alkalimetallhydroxide und -carbonate. Geeignete organische Lösungsmittel sind Alkylaromaten wie Toluol oder Xylole.

Geeignete Palladium(0)-Verbindungen sind insbesondere Tetrakis(triarylphosphin)palladium und Tetrakis(trialkylphosphin)palladium, z. B. Tetrakis(triphenylphosphin)palladium. Vorzugsweise wird die Palladium(0)-Verbindung in einer Menge von 8 bis 10 mol-%, bezogen auf das Perylen VI, eingesetzt. Die Arylboronsäure wird vorzugsweise in einer Menge von 1,1 bis 1,4 Moläquivalenten, bezogen auf das Perylen VI, eingesetzt.

Die Reaktionstemperaturen liegen üblicherweise im Bereich von 80 bis 120 °C, die Reaktionsdauer im Bereich von 10 bis 18 h.

Farbstoffe IIIa und IIId sind in einfacher Weise dadurch erhältlich, dass man eine Perylendicarbonsäure der allgemeinen Formel VIIa oder eine Perylentetracarbonsäure der allgemeinen Formel VIIb, vorzugsweise deren innere Anhydride

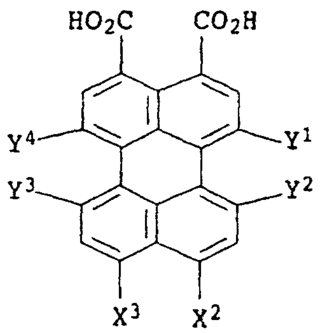 (VIIa), 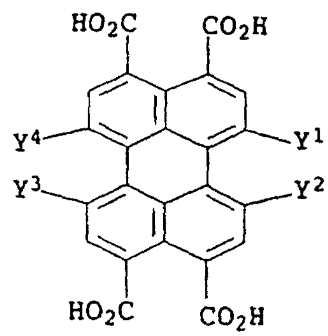 (VIIb),

worin $X^2$, $X^3$ und $Y^1$ bis $Y^4$ die vorgenannten, von -X-S-P verschiedenen Bedeutungen aufweisen, mit einem primären Amin, das eine ethylenisch ungesättigte Doppelbindung trägt, z. B. Allylamin, oder mit einem primären Amin, das eine weitere reaktive Gruppe $R^f$ (siehe oben) aufweist, umsetzt und anschließend die reaktive Gruppe $R^f$ in eine polymerisierbare Gruppe P in der oben beschriebenen Weise umwandelt. Die Umsetzung der Dicarbonsäure VIIa bzw. der Tetracarbonsäure mit dem primären Amin erfolgt in Analogie zu bekannten Verfahren (siehe z. B. WO 96/22 331 und dort zitierte Literatur).

Das erfindungsgemäße Verfahren wird in der Regel so durchgeführt, dass man in einem ersten Schritt aus den zu polymerisierenden Monomeren und dem Farbstoff eine Emulsion E1 erzeugt, worin die Monomertröpfchen einen Durchmesser < 500 nm und vorzugsweise im Bereich von 100 bis 400 nm aufweisen. Anschließend wird die Emulsion E1 mit wenigstens einem Initiator unter Temperaturbedingungen, unter denen der Initiator eine radikalische Polymerisation der ethylenisch ungesättigten Bindungen auslöst, in Kontakt gebracht.

Die mittlere Größe der Tröpfchen der dispersen Phase der erfindungsgemäß zu verwendenden wässrigen Emulsion E1 lässt sich nach dem Prinzip der quasielastischen dynamischen Lichtstreuung bestimmen (der sogenannte z-mittlere Tröpfchendurchmesser $\bar{d}_z$ der unimodalen Analyse der Autokorrelationsfunktion). In den Beispielen dieser Schrift wurde dazu ein Coulter N4 Plus Particle Analyser der Fa. Coulter Scientific Instruments verwendet (1 bar, 25 °C). Die Messungen wurden an verdünnten wässrigen Emulsionen E1 vorgenommen, deren Gehalt an nicht wässrigen Bestandteilen 0,01 Gew.-% betrug. Die Verdünnung wurde dabei mittels Wasser vorgenommen, das zuvor mit den in der wässrigen Emulsion enthaltenen Monomeren gesättigt worden war. Letztere Maßnahme soll verhindern, dass mit der Verdünnung eine Änderung der Tröpfchendurchmesser einhergeht.

Erfindungsgemäß sind die solchermaßen für die Emulsionen E1 ermittelten Werte für $\bar{d}_z$ normalerweise ≤ 500 nm, häufig ≤ 400 nm. Günstig ist erfindungsgemäß der $\bar{d}_z$-Bereich von 100 nm bis 300 nm bzw. von 100 nm bis 200 nm. Im Normalfall beträgt $\bar{d}_z$ der erfindungsgemäß einzusetzenden wässrigen Emulsion E1 ≥ 40 nm.

Die Herstellung der für das erfindungsgemäße Verfahren zu verwendenden wässrigen Emulsion E1 erfolgt zweckmäßigerweise ausgehend von konventionellen Öl-in-Wasser-Emulsionen der Monomere, wobei der Farbstoff bereits gelöst oder molekulardispers verteilt in den Monomertröpfchen vorliegt. Derartige konventionelle Emulsionen (im Folgenden auch als Makroemulsion bezeichnet) können beispielsweise dadurch erhalten werden, dass man den Farbstoff im Monomeren löst und diese Lösung nach bekannten Verfahren, beispielsweise durch Einrühren der Farbstoff/Monomer-Lösung in ein emulgatorhaltiges, wässriges Medium, in eine wässrige Emulsion überführt. Dabei weisen konventionelle Emulsionen in der Regel eine mittlere Tröpfchengröße oberhalb von 1000 nm auf. Anschließend wird die Makroemulsion nach bekannten Verfahren in die Emulsion E1 (im Folgenden auch als Mini-Emulsion bezeichnet) überführt (vgl. P.L. Tang, E.D. Sudol, C.A. Silebi und M.S. El-Aasser in Journal of Applied Polymer Science, Vol. 43, S. 1059 - 1066 [1991]).

Zu diesem Zweck können beispielsweise Hochdruckhomogenisatoren angewendet werden. Die Feinverteilung der Komponenten wird in diesen Maschinen durch einen hohen lokalen Energieeintrag erzielt. Zwei Varianten haben sich diesbezüglich besonders bewährt.

Bei der ersten Variante wird die wässrige Makroemulsion über eine Kolbenpumpe auf über 1000 bar verdichtet und anschließend durch einen engen Spalt entspannt. Die Wirkung beruht hier auf einem Zusammenspiel von hohen Scher- und Druckgradienten und Kavitation im Spalt. Ein Beispiel für einen Hochdruckhomogenisator, der nach diesem Prinzip funktioniert, ist der Niro-Soavi Hochdruckhomogenisator Typ NS1001L Panda.

Bei der zweiten Variante wird die verdichtete wässrige Makroemulsion über zwei gegeneinander gerichtete Düsen in eine Mischkammer entspannt. Die Feinverteilungswirkung ist hier vor allem von den hydrodynamischen Verhältnissen in der Mischkammer abhängig. Ein Beispiel für diesen Homogenisatortyp ist der Microfluidizer Typ M 120 E der Microfluidics Corp. In diesem Hochdruckhomogenisator wird die wässrige Makroemulsion mittels einer pneumatisch betriebenen Kolbenpumpe auf Drücke von bis zu 1200 atm komprimiert und über eine sogenannte "interaction

chamber" entspannt. In der "interaction chamber" wird der Emulsionsstrahl in einem Mikrokanalsystem in zwei Strahlen aufgeteilt, die unter einem Winkel von 180° aufeinandergeführt werden. Ein weiteres Beispiel für einen nach dieser Homogenisierungsart arbeitenden Homogenisator ist der Nanojet Typ Expo der Nanojet Engineering GmbH. Allerdings sind beim Nanojet anstatt eines festen Kanalsystems zwei Homogenisierventile eingebaut, die mechanisch verstellt werden können.

Neben den zuvor erläuterten Prinzipien kann die Homogenisierung aber z. B. auch durch Anwendung von Ultraschall (z. B. Branson Sonifier II 450) erfolgen. Die Feinverteilung beruht hier auf Kavitationsmechanismen. Für die Homogenisierung mittels Ultraschall sind grundsätzlich auch die in der GB 22 50 930 A und der US 5,108,654 beschriebenen Vorrichtungen geeignet. Die Qualität der im Schallfeld erzeugten wässrigen Emulsion E1 hängt dabei nicht nur von der eingebrachten Schallleistung, sondern auch noch von anderen Faktoren, wie z. B. der Intensitätsverteilung des Ultraschalls in der Mischkammer, der Verweilzeit, der Temperatur und den physikalischen Eigenschaften der zu emulgierenden Stoffe, beispielsweise von der Zähigkeit, der Grenzflächenspannung und dem Dampfdruck ab. Die resultierende Tröpfchengröße hängt dabei u.a. von der Konzentration des Emulgators sowie von der bei der Homogenisierung eingetragenen Energie ab und ist daher z. B. durch entsprechende Veränderung des Homogenisierungsdrucks bzw. der entsprechenden Ultraschallenergie gezielt einstellbar.

Für die Herstellung der Emulsion E1 aus konventionellen Emulsionen mittels Ultraschall hat sich insbesondere die in der älteren deutschen Patentanmeldung DE 197 56 874.2 beschriebene Vorrichtung bewährt. Hierbei handelt es sich um eine Vorrichtung, die einen Reaktionsraum oder einen Durchflussreaktionskanal und wenigstens ein Mittel zum Übertragen von Ultraschallwellen auf den Reaktionsraum bzw. den Durchflussreaktionskanal aufweist, wobei das Mittel zum Übertragen von Ultraschallwellen so ausgestaltet ist, dass der gesamte Reaktionsraum, bzw. der Durchflussreaktionskanal in einem Teilabschnitt, gleichmäßig mit Ultraschallwellen bestrahlt werden kann. Zu diesem Zweck ist die Abstrahlfläche des Mittels zum Übertragen von Ultraschallwellen so ausgestaltet, dass sie im Wesentlichen der Oberfläche des Reaktionsraums entspricht bzw., wenn der Reaktionsraum ein Teilabschnitt eines Durchfluss-Reaktionskanals ist, sich im Wesentlichen über die gesamte Breite des Kanals erstreckt, und dass die zu der Abstrahlfläche im Wesentlichen senkrechte Tiefe des Reaktionsraums geringer als die maximale Wirkungstiefe der Ultraschallübertragungsmittel ist.

Unter dem Begriff "Tiefe des Reaktionsraums" versteht man hier im Wesentlichen den Abstand zwischen der Abstrahlfläche des Ultraschallübertragungsmittels und dem Boden des Reaktionsraums.

Bevorzugt werden Reaktionsraumtiefen bis zu 100 mm. Vorteilhaft sollte die Tiefe des Reaktionsraums nicht mehr als 70 mm und besonders vorteilhaft nicht mehr als 50 mm betragen. Die Reaktionsräume können prinzipiell auch eine sehr geringe Tiefe aufweisen, jedoch sind im Hinblick auf eine möglichst geringe Verstopfungsgefahr und eine leichte Reinigbarkeit sowie einen hohen Produktdurchsatz Reaktionsraumtiefen bevorzugt, die wesentlich größer als beispielsweise die üblichen Spalthöhen bei Hochdruckhomogenisatoren sind und meist über 10 mm betragen. Die Tiefe des Reaktionsraums ist vorteilhafterweise veränderbar, beispielsweise durch unterschiedlich tief in das Gehäuse eintauchenden Ultraschallübertragungsmittel.

Gemäß einer ersten Ausführungsform dieser Vorrichtung entspricht die Abstrahlfläche des Mittels zum Übertragen von Ultraschall im Wesentlichen der Oberfläche des Reaktionsraums. Diese Ausführungsform dient zum absatzweisen Herstellen von Emulsionen E1. Mit der erfindungsgemäßen Vorrichtung kann Ultraschall auf den gesamten Reaktionsraum einwirken. Im Reaktionsraum wird durch den axialen Schallstrahlungsdruck eine turbulente Strömung erzeugt, die eine intensive Quervermischung bewirkt.

Gemäß einer zweiten Ausführungsform weist eine derartige Vorrichtung eine Durchflusszelle auf. Dabei ist das Gehäuse als Durchfluss-Reaktionskanal ausgebildet, der einen Zufluss und einen Abfluss aufweist, wobei der Reaktionsraum ein Teilabschnitt des Durchflussreaktionskanals ist. Die Breite des Kanals ist die im Wesentlichen senkrecht zur Strömungsrichtung verlaufende Kanalausdehnung. Hierin überdeckt die Abstrahlfläche die gesamte Breite des Strömungskanals quer zur Strömungsrichtung. Die zu dieser Breite senkrechte Länge der Abstrahlfläche, das heißt die Länge der Abstrahlfläche in Strömungsrichtung, definiert den Wirkungsbereich des Ultraschalls. Gemäß einer vorteilhaften Varianten dieser ersten Ausführungsform, hat der Durchfluss-Reaktionskanal einen im Wesentlichen rechteckigen Querschnitt. Wird in einer Seite des Rechtecks ein ebenfalls rechteckiges Ultraschallübertragungsmittel mit entsprechenden Abmessungen eingebaut, so ist eine besonders wirksame und gleichmäßige Beschallung gewährleistet. Aufgrund der im Ultraschallfeld herrschenden turbulenten Strömungsverhältnisse, kann jedoch auch beispielsweise ein rundes Übertragungsmittel ohne Nachteile eingesetzt werden. Außerdem können anstelle eines einzigen Ultraschallübertragungsmittels mehrere separate Übertragungsmittel angeordnet werden, die in Strömungsrichtung gesehene hintereinander geschaltet sind. Dabei können sowohl die Abstrahlflächen als auch die Tiefe des Reaktionsraums, das heißt der Abstand zwischen der Abstrahlfläche und dem Boden des Durchflusskanals variieren.

Besonders vorteilhaft ist das Mittel zum Übertragen von Ultraschallwellen als Sonotrode ausgebildet, deren der freien Abstrahlfläche abgewandtes Ende mit einem Ultraschallwandler gekoppelt ist. Die Ultraschallwellen können beispielsweise durch Ausnutzung des umgekehrten piezoelektrischen Effekts erzeugt werden. Dabei werden mit Hilfe von Generatoren hochfrequente elektrische Schwingungen (üblicherweise im Bereich von 10 bis 100 kHz, vorzugsweise zwischen 20 und 40 kHz) erzeugt, über einen piezoelektrischen Wandler in mechanische Schwingungen gleicher Frequenz umgewandelt und mit der Sonotrode als Übertragungselement in das zu beschallende Medium eingekoppelt.

Besonders bevorzugt ist die Sonotrode als stabförmiger, axial abstrahlender λ/2(bzw. Vielfache von λ/2) -Längsschwinger ausgebildet. Eine solche Sonotrode kann beispielsweise mittels eines an einem ihrer Schwingungsknoten vorgesehenen Flansches in einer Öffnung des Gehäuses befestigt werden. Damit kann die Durchführung der Sonotrode in das Gehäuse druckdicht ausgebildet werden, so dass die Beschallung auch unter erhöhtem Druck im Reaktionsraum durchgeführt werden kann. Vorzugsweise ist die Schwingungsamplitude der Sonotrode regelbar, das heißt die jeweils eingestellte Schwingungsamplitude wird online überprüft und gegebenenfalls automatisch nachgeregelt. Die Überprüfung der aktuellen Schwingungsamplitude kann beispielsweise durch einen auf der Sonotrode angebrachten piezoelektrischen Wandler oder einen Dehnungsmessstreifen mit nachgeschalteter Auswerteelektronik erfolgen.

Gemäß einer weiteren vorteilhaften Ausbildung derartiger Vorrichtungen sind im Reaktionsraum Einbauten zur Verbesserung des Durchströmungs- und Durchmischungsverhaltens vorgesehen. Bei diesen Einbauten kann es sich beispielsweise um einfache Ablenkplatten oder unterschiedlichste, poröse Körper handeln.

Im Bedarfsfall kann die Vermischung außerdem durch ein zusätzliches Rührwerk weiter intensiviert werden. Vorteilhafterweise ist der Reaktionsraum temperierbar.

Prinzipiell kommen zur Durchführung des erfindungsgemäßen Verfahrens alle für die radikalische wässrige Makroemulsionspolymerisation gebräuchlichen wasserlöslichen Emulgatoren in Betracht. Dies sind sowohl anionische, kationische als auch nichtionische Emulgatoren. Vorzugsweise werden anionische und/oder nichtionische Emulgatoren verwendet. Beispiele für geeignete neutrale Emulgatoren sind ethoxylierte Mono-, Di- und Tri-Alkylphenole (EO-Grad: 3 bis 50, Alkylrest: $C_4$ bis $C_9$), ethoxylierte Fettalkohole (EO-Grad: 3 bis 50, Alkylrest: $C_8$ bis $C_{36}$) und ethoxilierte Oxoalkohole (EO-Grad: 3 bis 50, Alkylrest: $C_8$ bis $C_{36}$). Beispiele für geeignete anionische Emulgatoren sind Alkali- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_9$), von Alkylsulfonsäuren (Alkylrest: $C_{12}$ bis $C_{18}$), von sulfonierten Fettsäuren und von Alkylarylsulfonsäuren (Alkylrest: $C_9$ bis $C_{18}$). Bis zu 30 mol-% der Ethylenoxid-Einheiten können auch durch andere Alkylenoxideinheiten, insbesondere Propylenoxid-Einheiten, ersetzt sein.

Weitere geeignete anionische Emulgatoren sind die Alkalimetallund Ammoniumsalze von Di-$C_4$-$C_{20}$-alkylestern der Sulfobernsteinsäure, insbesondere die Di-n-octylester und die Di-2-ethylhexylester. Ferner eignen sich als anionische Emulgatoren die Salze von Bis(phenylsulfonyl)ethern, die an wenigstens einer Phenylsulfonylgruppe eine $C_4$-$C_{24}$-Alkylgruppe aufweisen. Vorzugsweise weist die Alkylgruppe, die linear oder verzweigt sein kann, 6 bis 18 C-Atome und insbesondere 6, 12 oder 16 C-Atome auf. Vorzugsweise handelt es sich um die Natrium, Kalium oder Ammoniumsalze oder um Mischformen dieser Salze, wobei die Natriumsalze besonders bevorzugt sind. Ganz besonders vorteilhaft sind die Natriumsalze, wenn diese wenigstens eine Alkylgruppe mit 12 C-Atomen aufweisen und verzweigt sind. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die genannten Verbindungen sind allgemein bekannt, z. B. aus der US-A 4 269 749, und im Handel erhältlich.

Weitere geeignete Emulgatoren finden sich in Houben-Weyl, Methoden der organischen Chemie, Band XIV/ 1, Makromolekulare Stoffe, Georg-Thieme Verlag, Stuttgart, 1961, Seiten 192 bis 208 sowie in Ullmanns Encyclopedia of Industrial Chemistry, 5th ed., VCH Weinheim 1987, Vol. 9a, S.313-318.

Selbstverständlich können die genannten Emulgatoren auch im Gemisch mit Schutzkolloiden eingesetzt werden. Schutzkolloide sind wasserlösliche, organische Polymere. Diese vermögen die Oberflächenspannung von Wasser kaum zu verringern und weisen im Unterschied zu Emulgatoren in der Regel oberhalb von 1000, vorzugsweise oberhalb 2000 liegende relative Molekulargewichte auf.

Ähnlich wie bei den Emulgatoren gibt es sowohl anionische, kationische als auch neutrale Schutzkolloide. Typische anionische Schutzkolloide sind beispielsweise Homo- und Copolymere der vorgenannten monoethylenisch ungesättigten Monomere A', die wenigstens eine säuregruppe aufweisen, und die Salze, insbesondere die Alkalimetall- und Ammoniumsalze derartiger Homo- und Copolymere. Bevorzugt sind Homo- und Copolymere der Acrylsäure, der Methacrylsäure, der Maleinsäure, der Styrolsulfonsäure und/oder der 2-Acrylamido-2-methylpropansulfonsäure, gegebenenfalls mit neutralen Comonomeren, die beispielsweise ausgewählt sind unter Olefinen wie Ethylen, Propen, 1-Buten, Isobuten und Diisobuten, Vinylaromaten wie Styrol, Estern der Acrylsäure oder der Methacrylsäure, Hydroxyalkylestern der Acrylsäure oder der Methacrylsäure, Acrylamid, Methacrylamid, Vinylacetat und Acrylnitril, und deren Salze. Anionische Schutzkolloide sind ferner anionisch modifizierte Stärken und Ligninsulfonate.

Beispiele für kationische Schutzkolloide sind die Homo- und Copolymere monoethylenisch ungesättigter kationischer Monomere beispielsweise Homo- und Copolymere von quaternisiertem N-Vinylimidazolen oder von quaternisierten Dialkylaminoalkylacrylaten und - methacrylaten mit beispielsweise N-Vinylpyrrolidon und/oder N-Vinylcaprolactam. Weiterhin zählen hierzu kationisch modifizierte Stärken.

Neutrale Schutzkolloide sind beispielsweise Polyvinylalkohole, teilverseifte Homo- und Copolymere des

Vinylacetats, Ethylenoxid-Propylenoxid-Blockcopolymere, modifizierte Stärken, Cellulosederivate, Polyvinylpyrrolidon sowie Copolymere des Vinylpyrrolidons mit neutralen Monomeren z. B. mit Vinylcaprolactam, Vinylacetat, Acrylamid, Methacrylamid, Methylacrylat, Ethylacrylat, n-Butylacrylat oder mit Methylmethacrylat.

Die Emulgatormenge zur Herstellung der wässrigen Emulsion E1 wird erfindungsgemäß zweckmäßig so gewählt, dass in der letztlich resultierenden wässrigen Emulsion E1 innerhalb der wässrigen Phase die kritische Micellbildungskonzentration der verwendeten Emulgatoren im Wesentlichen nicht überschritten wird. Bezogen auf die in der wässrigen Emulsion E1 enthaltene Menge an Monomeren liegt diese Emulgatormenge in der Regel im Bereich von 0,1 bis 5 Gew.-%. Wie bereits erwähnt, können den Emulgatoren Schutzkolloide an die Seite gegeben werden, die die disperse Verteilung der letztlich resultierenden wässrigen Polymerisatdispersion zu stabilisieren vermögen. Unabhängig von der eingesetzten Emulgatormenge können die Schutzkolloide in Mengen bis zu 50 Gew.-%, beispielsweise in Mengen von 1 bis 30 Gew.-% bezogen auf die zu polymerisierenden Monomere eingesetzt werden.

Eine bevorzugte Ausgestaltung des erfindungsgemäßen Verfahrens besteht darin, dass man die Gesamtmenge der Emulsion E1 im Polymerisationsgefäß vorlegt. Die Polymerisation wird beispielsweise gestartet, indem man wenigstens einen Teil des Initiators zugibt und anschließend auf Polymerisationstemperatur erwärmt. Die verbleibende Initiatormenge gibt man dann kontinuierlich, portionsweise oder auf einmal zur Polymerisationsreaktion. In einer ebenfalls bevorzugten Ausführungsform erwärmt man zuerst auf Polymerisationstemperatur und gibt dann den Initiator in der oben beschriebenen Weise zu.

In einer anderen Ausführungsform des erfindungsgemäßen Verfahrens stellt man zunächst aus den zu polymerisierenden Monomeren und dem öllöslichen Farbstoff eine Farbstofflösung her und überführt diese zusammen mit Wasser und der Hauptmenge, vorzugsweise der Gesamtmenge an Emulgatoren und gegebenenfalls Schutzkolloiden in eine konventionelle Emulsion. Diese Emulsion homogenisiert man dann in der oben beschriebenen Weise zu einer Emulsion E1. Die so erhaltene Emulsion E1 wird dann kontinuierlich, mit konstanter oder zunehmender Zulaufrate, oder portionsweise, vorzugsweise nach Maßgabe des Fortschreitens der Polymerisation, in das auf Reaktionstemperatur befindliche Polymerisationsgefäß gegeben, das Wasser und vorzugsweise einen Teil des Initiators, insbesondere 1 bis 20 % der gesamten Initiatormenge, enthält. Parallel zur Monomerzugabe erfolgt die Zugabe des Initiators. Hierbei kann die Emulsion in einer separaten Stufe vor Beginn der Polymerisation oder kontinuierlich nach Maßgabe ihres Verbrauchs, beispielsweise unter Anwendung der in der DE 197 56 874.2 beschriebenen Vorrichtung, hergestellt werden.

Vorzugsweise wird der radikalische Polymerisationsinitiator in Form einer wässrigen Lösung eingesetzt. Üblicherweise befindet sich der Initiator nicht in der Monomeremulsion E1.

Als radikalische Polymerisationsinitiatoren kommen prinzipiell alle diejenigen in Betracht, die in der Lage sind, eine radikalische Polymerisation auszulösen. Es kann sich dabei sowohl um Peroxide, Hydroperoxide als auch um Azoverbindungen handeln.

In der Regel werden für das erfindungsgemäße Verfahren radikalische Polymerisationsinitiatoren eingesetzt, die unter Polymerisationsbedingungen in Wasser löslich sind. Hierunter werden solche Initiatoren bevorzugt, die in den Monomeren nicht oder nur in geringem Ausmaß löslich sind. Beispiele für solche Polymerisationsinitiatoren sind z. B. die Peroxodischwefelsäure und ihre Ammonium- und Alkalimetallsalze sowie Wasserstoffperoxid oder Hydroperoxide wie tert.-Butylhydroperoxid, oder salzartige Azoverbindungen, z. B. 2,2'-Azobis-2-amidinopropan-Dihydrochlorid. Selbstverständlich können als solche wasserlöslichen, radikalischen Polymerisationsinitiatoren auch kombinierte Systeme, die aus wenigstens einem Reduktionsmittel und wenigstens einem Peroxid und/oder Hydroperoxid zusammengesetzt sind (nachfolgend Redoxinitiatoren genannt), verwendet werden. Geeignete Reduktionsmittel sind beispielsweise das Natriumsalz der Hydroximethansulfonsäure, Natriumsulfit, Natriumdisulfit, Natriumthiosulfat, das Acetonbisulfit-Addukt, Triethylamin, Hydrazin oder Hydroxylamin, weiterhin Ascorbinsäure, Glykolsäure und Weinsäure.

Häufig umfassen die kombinierten Systeme zusätzlich eine geringe Menge einer im wässrigen Medium löslichen Metallverbindung, deren metallische Komponente in mehreren Wertigkeitsstufen auftreten kann (redoxaktive Metallverbindung). Beispiele hierfür sind Kupfer(II)-salze, Eisen(II)-salze oder eine Kombination aus wasserlöslichen Eisen- und Vanadium-Salzen benutzt.

Als besonderes vorteilhaft haben sich wasserlösliche Initiatoren erwiesen, die wenigstens ein nichtionisches Peroxid, insbesondere Wasserstoffperoxid umfassen. Derartige Initiatoren werden häufig zusammen mit wenigstens einem der vorgenannten Reduktionsmittel eingesetzt (Redoxinitiatoren). Beispiele für solche Kombinationen sind z. B. Wasserstoffperoxid/Natriumsalz der Hydroxymethansulfinsäure, tert.-Butylhydroperoxid/Natriumsalz der Hydroxymethansulfinsäure sowie Wasserstoffperoxid/Ascorbinsäure. Die vorgenannten nichtionischen Initiatoren können auch ohne Reduktionsmittel eingesetzt werden. In diesem Fall gibt man vorzugsweise eine der vorgenannten wasserlöslichen, redoxaktiven Metallverbindungen in das Polymerisationsmedium. Derartige neutralen Initiatorsysteme werden in dem erfindungsgemäßen Verfahren insbesondere dann eingesetzt, wenn größere Farbstoffgehalte in den Polymerteilchen der erfindungsgemäßen Dispersionen erreicht werden sollen, insbesondere dann, wenn Farbstoffgehalte von wenigstens 3 Gew.-%, insbesondere wenigstens 5 Gew.-% und speziell von 5 bis 30 Gew.-%, bezogen auf das Gesamtgewicht der zu polymerisierenden Monomere bzw. der Polymermatrix, angestrebt werden. Nichtionische Initiatoren werden insbesondere auch dann verwendet, wenn bei der Polymerisation ein basischer Farbstoff eingesetzt wird, da bei den üblicherweise eingesetzten ionischen Initiatoren durch Zerfall saure Substanzen - bei Verwendung von Peroxodisulfaten entstehen Hydrogensulfate - gebildet werden, die den basischen Farbstoff protonieren und somit seine Öllöslichkeit herabsetzen.

Bezogen auf die radikalisch zu polymerisierenden Monomeren werden üblicherweise 0,1 bis 10 Gew.-%, vorzugsweise 0,2 bis 8 Gew.-% und häufig 0,5 bis 5 Gew.-% an radikalischen Polymerisationsinitiatoren verwendet. Selbstverständlich kann die erfindungsgemäße radikalische wässrige Emulsionspolymerisation auch durch Einwirkung von z. B. aktinischer Strahlung ausgelöst werden.

In der Regel werden durch das erfindungsgemäße Polymerisationsverfahren wässrige Polymerisatdispersionen mit einem Gesamtgehalt an farbstoffhaltigem Polymerisat von bis zu 50 Gew.-%, bezogen auf das Gesamtgewicht der Dispersion, erhalten. Ein höherer Gesamtgehalt an farbstoffhaltigem Polymerisat geht in der Regel mit einem nicht erwünschten Anstieg der Viskosität der Dispersion einher. Wird ein solch höherer Feststoffgehalt gewünscht, ist es empfehlenswert, das erfindungsgemäße Verfahren entsprechend den Ausführungen in der DE-A 196 28143 zu gestalten. D. h., man erzeugt aus wenigstens einem Teil der ethylenisch ungesättigten Monomere und der Gesamtmenge an Farbstoff eine wässrige Emulsion E1 und aus der gegebenenfalls verbleibenden restlichen Monomermenge eine konventionelle Emulsion E2, worin die Monomertröpfchen einen Durchmesser oberhalb 1000 nm aufweisen.

In diesem Fall wird die eigentliche Polymerisationsreaktion so durchgeführt, dass man wenigstens einen Teil der wässrigen Emulsion E1 als einen Zulauf I kontinuierlich und die konventionelle Emulsion E2, parallel oder portionsweise, während des Zulaufs I der Polymerisationsreaktion zuführt. Vorzugsweise enthält die konventionelle Emulsion E2 keine Verbindungen, deren Wasserlöslichkeit < 0,01 g/l ist und insbesondere keinen Farbstoff.

Erfindungsgemäß werden hierbei nicht mehr als 90 %, vorzugsweise nicht mehr als 50 %, insbesondere nicht mehr als 30 % und ganz besonders bevorzugt nicht mehr als 20 % der Monomeremulsion E1 dem Polymerisationsgefäß als Zulauf I kontinuierlich zugeführt. Wegen weiterer Details wird auf die DE-A 196 28 143 verwiesen, auf die in vollem Umfang Bezug genommen wird.

Die Zuläufe können im Rahmen des erfindungsgemäßen Verfahrens dem Polymerisationsreaktor von oben, von der Seite oder durch den Reaktorboden zugeführt werden.

Die Polymerisationstemperatur richtet sich beim erfindungsgemäßen Verfahren in der Regel nach der Zerfallstemperatur des eingesetzten radikalischen Polymerisationsinitiators. Redoxinitiatorsysteme zerfallen in der Regel bei besonders niedrigen Temperaturen. Letztere sind erfindungsgemäß unter dem Aspekt einer verringerten Koagulatbildung bevorzugt. Typische Polymerisationstemperaturen betragen 0 °C bis 95 °C, häufig 30 °C bis 90 °C. Bei Anwendung von erhöhtem Druck kann die Polymerisationstemperatur auch bis zu 120 °C und mehr betragen. Üblicherweise wird bei Normaldruck (1 atm) polymerisiert.

Das erfindungsgemäße Verfahren erlaubt die Herstellung farbstoffhaltiger, wässriger Polymerisatdispersionen, worin die Polymerisatteilchen wenigstens einen öllöslichen Farbstoff in molekulardisperser Form enthalten und die darüber hinaus Teilchengrößen unterhalb 1000 nm aufweisen. Im Unterschied zu den wässrigen Suspensionspolymerisaten sind derartige Polymerisatdispersionen sedimentationsstabil. Zudem zeichnen sich die Polymerisatdispersionen durch eine geringe Migrationsneigung der in ihnen enthaltenen Farbstoffmoleküle aus.

Die erfindungsgemäß erhältlichen, farbstoffhaltigen, wässrigen Polymerisatdispersionen sind insbesondere dann den bekannten farbstoffhaltigen Polymerisatdispersionen überlegen, wenn die polymere Matrix aus wenigstens einem monoethylenisch ungesättigten Monomer A mit einer Wasserlöslichkeit > 0,01 g/l und wenigstens einem weiteren Monomer, ausgewählt unter

- monoethylenisch ungesättigten Monomeren B, die eine Wasserlöslichkeit < 0,01 g/l aufweisen,
- Monomeren C, die wenigstens zwei nicht konjugierte, ethylenisch ungesättigte Doppelbindungen aufweisen, oder
- vernetzend wirkenden Monomeren D

aufgebaut ist. Derartige Polymerisatdispersionen sind ebenfalls Gegenstand der vorliegenden Erfindung.

Farbstoffhaltige, wässrige Polymerisatdispersionen mit überlegenen Eigenschaften werden auch dann erhalten, wenn man nach dem erfindungsgemäßen Verfahren die oben genannten Monomere A mit einer Wasserlöslichkeit > 0,01 g/l sowie gegebenenfalls die Monomeren B, C und D zusammen mit einem öllöslichen, organischen Farbstoff polymerisiert, der wenigstens eine copolymerisierbare, nicht zum Chromophor des Farbstoffs gehörende funktionelle Gruppe aufweist.

Demnach betrifft die vorliegende Erfindung auch farbstoffhaltige, wässrige Polymerisatdispersionen, worin die Polymerisatteilchen einen mittleren Durchmesser $d_z$ < 1 000 nm aufweisen und wenigstens 0,01 Gew.-% wenigstens eines öllöslichen Farbstoffs in molekulardisperser Form enthalten, und die weiterhin aus wenigstens einem monoethylenisch ungesättigten Monomer A mit einer Wasserlöslichkeit > 0,01 g/l, und wenigstens einer weiteren, polymerisationsaktiven Verbindung aufgebaut sind, die ausgewählt ist unter

- monoethylenisch ungesättigten Monomeren B, die eine Wasserlöslichkeit < 0,01 g/l aufweisen,
- Monomeren C, die wenigstens zwei nicht konjugierte, ethylenisch ungesättigte Doppelbindungen aufweisen,
- vernetzend wirkenden Monomeren D
- copolymerisierbaren Farbstoffen aus einem der Ansprüche 9 oder 10,

ausgenommen solche farbstoffhaltigen wässrigen Polymerisatdispersionen, die bis zu 3 Gew.-%, bezogen auf die Polymermatrix, eines mehrkernigen aromatischen Kohlenwasserstoffs, ausgewählt unter Naphthalin, Anthracen und deren substituierten, aromatischen Derivaten, enthalten.

Unabhängig von der Art des öllöslichen Farbstoffs ist die polymere Matrix vorzugsweise aus

- 50 bis 99,5 Gew.-%, insbesondere 80 bis 99 Gew.-% und ganz besonders bevorzugt 90 bis 98 Gew.-% Monomeren A,
- 0,5 bis 50 Gew.-%, insbesondere 1 bis 20 Gew.-% und ganz besonders bevorzugt 2 bis 10 Gew.-% Monomeren B,
- 0 bis 30 Gew.-%, insbesondere 0,5 bis 20 Gew.-% und ganz besonders bevorzugt 1 bis 10 Gew.-% Monomeren C, sowie
- bis 30 Gew.-%, vorzugsweise bis 20 Gew.-% und insbesondere bis 10 Gew.-% Monomeren D

aufgebaut, wobei die Gesamtmenge an Monomeren C und D vorzugsweise 30 Gew.-% und insbesondere 10 Gew.-%, bezogen auf die Gesamtmonomermenge, nicht überschreitet. Sofern der eingesetzte, öllösliche Farbstoff keine copolymerisierbare, funktionelle Gruppe aufweist, wird man vorzugsweise eine Polymermatrix wählen, die die Monomeren C und/oder D in Mengen von wenigstens 0,1 Gew.-%, insbesondere von wenigstens 0,5 Gew.-% und ganz besonders bevorzugt von wenigstens 1 Gew.-% einpolymerisiert enthält. Insbesondere weist die Polymermatrix 0,5 bis 20 Gew.-%, besonders bevorzugt 1 bis 15 Gew.-% Monomere C, und hierunter besonders bevorzugt Divinylbenzol, Butandioldiacrylat, Butandioldimethacrylat, Hexandioldiacrylat, Hexandioldimethacrylat, Triethylenglykoldiacrylat und Triethylenglykoldimethacrylat, und keine Monomeren D auf.

Eine bevorzugte Ausgestaltung der erfindungsgemäßen farbstoffhaltigen Polymerisatdispersionen sind jene Polymerisatdispersionen, die einen copolymerisierbaren Farbstoff aufweisen, und hierunter wiederum jene, deren polymere Matrix in einpolymerisierter Form auch Monomere C und/oder D aufweist.

Die erfindungsgemäßen farbstoffhaltigen, wässrigen Polymerisatdispersionen können so ausgestaltet sein, dass die Polymermatrix des farbstoffhaltigen Polymerisats keine einpolymerisierten Monomere A' enthalten. Derartige Dispersionen eignen sich insbesondere zur Gewinnung von farbstoffhaltigen Polymeren, die in unpolare Medien eingearbeitet werden sollen, beispielsweise als farbgebende Komponente in Druckfarben, Alkydharzlacken, z. B. Melamin-Alkydharz-Einbrennlacken, oder Anfärbung von Kunststofffasern oder Kunststoffmassen.

In einer anderen Ausgestaltung der erfindungsgemäßen Polymerdispersionen umfassen die in der polymeren Matrix der Polymerteilchen einpolymerisierten Monomere A:

- 0,5 bis 30 Gew.-%, insbesondere 1 bis 20 Gew.-% und speziell 2 bis 15 Gew.-%, wenigstens eines Monomers A1 mit einer Wasserlöslichkeit > 60 g/l (jeweils bei 25°C und 1 atm) und,

- 70 bis 99,5 Gew.-%, insbesondere 80 bis 99 Gew.-% und speziell 85 bis 98 Gew.-% wenigstens eines Monomers A2 mit einer Wasserlöslichkeit > 60 g/l (jeweils bei 25°C und 1 atm), jeweils bezogen auf die Gesamtmonomermenge.

Zu den Monomeren A1 zählen neben den vorgenannten Monomeren A' auch die Hydroxyalkylester ethylenisch ungesättigter Carbonsäuren insbesondere der Acrylsäure und der Methacrylsäure wie Hydroxyethylacrylat, Hydroxypropylacrylat und Hydroxybutylacrylat sowie die N-Alkylolamide ethylenisch ungesättigter Carbonsäuren. In dieser Ausgestaltung umfassen die Monomere A1 vorzugsweise entweder wenigstens eines der unter A' aufgeführten monoethylenisch ungesättigten kationischen Monomere oder wenigstens eines der unter A' aufgeführten monoethylenisch ungesättigten Monomere mit wenigstens einer Säuregruppe, gegebenenfalls in deprotonierter Form, wobei letztere bevorzugt sind. Besonderes werden als Monomere A1 Acrylsäure, Methacrylsäure und Acrylamido-2-methylpropansulfonat, z. B. als Ammonium- oder Natriumsalz bevorzugt.

Zu den Monomeren A2 zählen alle die unter den Monomeren A aufgeführten Monomere, die von den Monomeren A' verschieden sind und demnach eine Wasserlöslichkeit im Bereich von 0,01 bis 60 g/l aufweisen. Besonderes bevorzugte Monomere A2 sind in dieser Ausgestaltung Styrol, $C_1$-$C_8$-Alkylester der Acrylsäure und der Methacrylsäure, wie Methylmethacrylat, n-Butylacrylat, tert.-Butylacrylat und 2-Ethylhexylacrylat, sowie die Vinylester aliphatischer Carbonsäuren, wie z. B. Vinylacetat und Vinylpropionat.

In einer bevorzugten Ausführungsform des erfindungsgemäßen Verfahrens weisen die farbstoffhaltigen Polymerisatteilchen der Dispersion eine monomodale Verteilung ihrer Teilchengrößen auf. Hierunter ist zu verstehen,

dass die Verteilung der Polymerisatteilchengrößen in der Dispersion, wie sie sich beispielsweise durch Lichtstreuungsexperimente oder durch Bestimmung der Polymerisatteilchengröße mittels einer Ultrazentrifuge ergibt, ein ausgeprägtes Maximum bei einer Teilchengröße aufweist. In der Regel wird dieses Maximum bei einem Wert < 1000 nm liegen. In einer besonders bevorzugten Ausführungsform weisen die Polymerisatteilchen z-mittlere Teilchendurchmesser $d_z$ (bestimmt durch quasielastische, dynamische Lichtstreuung, siehe oben) im Bereich von 100 bis 400 nm, insbesondere 100 bis 300 nm und ganz besonders bevorzugt 100 bis 200 nm auf.

In den erfindungsgemäßen Dispersionen sind die Teilchengrößen der Polymerisatteilchen eng verteilt, d. h. das Verhältnis der Halbwertsbreite der durch dynamische Lichtstreuung ermittelten Verteilungskurve der Polymerteilchengrößen zu den mittleren Teilchendurchmesser $d_z$ weist in der Regel Werte < 1, vorzugsweise < 0,75 und insbesondere < 0,5 auf.

Für eine Vielzahl von Anwendungszwecken, insbesondere wenn die erfindungsgemäßen farbstoffhaltigen Polymerisatteilchen als Ersatz für konventionelle organische Pigmente eingesetzt werden sollen, hat es sich als günstig erwiesen, wenn die Glasübergangstemperatur der Polymermatrix $T_G$ wenigstens 60 °C beträgt. Als Glasübergangstemperatur gilt hier und im Folgenden die nach ASTM-D 3418-82 mittels DTA bestimmte "mid-point-temperature".

Die erfindungsgemäßen Polymerisatdispersionen können in üblicher Weise durch konventionelle Trocknungsmethoden, beispielsweise durch Gefriertrocknung oder vorzugsweise durch Sprühtrocknung in Polymerisatpulver überführt werden. Derartige Polymerisatpulver sind ebenfalls Gegenstand der vorliegenden Erfindung.

Bei einer Sprühtrocknung wird beispielsweise so vorgegangen, dass man die zu trocknenden Polymerisatdispersionen in einem üblichen Trockenturm in einem Warmluftstrom versprüht. Hierbei liegt die Eingangstemperatur des Warmluftstroms im Bereich von 100 bis 200 °C, vorzugsweise 120 bis 160 °C, und die Ausgangstemperatur des Warmluftstroms im Bereich von 30 bis 90 °C und vorzugsweise 60 bis 80 °C liegt. Das Versprühen der wässrigen Polymerisatdispersion im Warmluftstrom kann beispielsweise mittels Ein- oder Mehrstoffdüsen oder über eine rotierende Scheibe erfolgen. Die Abscheidung der Polymerisatpulver erfolgt normalerweise unter Verwendung von Zyklonen oder Filterabscheidern. Die versprühte, wässrige Polymerisatdispersion und der Warmluftstrom werden vorzugsweise parallel geführt.

Vorzugsweise erfolgt die Trocknung der erfindungsgemäßen Polymerisatdispersionen in Gegenwart üblicher Trocknungshilfsmittel. Beispiele hierfür sind: Polyvinylalkohole (siehe z.B.
EP-A-56 622, EP-A-680 993, DE-A-22 14 410 und DE-A-26 14 261), Polyvinylpyrrolidone (siehe z. B. DE 22 38 903 und EP 576 844), Phenolsulfonsäure-Formaldehyd-Kondensate (siehe z. B. EP-A 407 889, WO 98/03576), Naphthalinsulfonsäure-Formaldehyd-Kondensate (siehe z. B. WO 98/03577), Homo- und Copolymerisate der 2-Acrylamido-2-methylpropansulfonsäure (siehe z. B. EP-A 629 650, EP-A 671 435 und DE-A 195 39 460), Copolymere ethylenisch ungesättigter Carbonsäure, wie insbesondere Acrylsäure, Methacrylsäure und Maleinsäure, mit hydrophoben Comonomeren wie Styrol (siehe z. B.

EP 467 103) oder Olefinen (siehe z. B. EP 9 169) oder mit Hydroxyalkylestern (siehe z. B. JP 59 162 161). Ferner können, soweit nicht bereits hier aufgeführt, auch die im Folgenden genannten wasserlöslichen Polymere PW als Trocknungshilfsmittel verwendet werden. Auch Antibackmittel, wie hochdisperse Kieselsäure, können eingesetzt werden.

Die erfindungsgemäßen farbstoffhaltigen Polymerisatdispersionen sowie die daraus erhältlichen farbstoffhaltigen Polymerisatpulver zeichnen sich auch nach Einarbeitung in hochmolekulare Anwendungsmedien wie Lacke, Druckfarben, Kunststoffe oder anorganische Materialien durch hohe Farbstärke und große Brillanz sowie eine gute Transparenz aus. Eine Abhängigkeit des Farbtons von der Polymerisatteilchengröße ist im Unterschied zu konventionellen Pigmenten nicht zu beobachten. Darüber hinaus weisen die erfindungsgemäßen Polymerisatdispersionen als "Farbpigmente" im Unterschied zu konventionellen Pigmenten keine Formanisotropie und damit einhergehende Rheologieprobleme sowie eine enge Teilchengrößenverteilung auf. Zudem ist die mittlere Teilchengröße über die Teilchengröße der eingesetzten Monomeremulsion in leichter Weise einstellbar. Darüber hinaus zeichnen sich die erfindungsgemäßen, farbstoffhaltigen Polymerisatdispersionen gegenüber konventionellen Pigmenten durch einen sehr viel geringeren Bedarf an teurem Chromophor zur Erzielung des gleichen Farbeindrucks aus. Außerdem sind die Farbstoffe in der polymeren Matrix besser gegen ein Ausbleichen als Folge der Einwirkung von UV-Strahlung oder Sauerstoff geschützt als konventionelle Farbstoffe oder Pigmente. Entsprechendes gilt für die erfindungsgemäßen Polymerisate mit optischem Aufheller. Substrate, die mit den erfindungsgemäßen, optische Aufheller enthaltenden Polymerdispersionen behandelt werden, zeigen daher eine geringere Neigung zum Vergilben, insbesondere bei Belastung mit UV-Strahlung oder bei Einwirkung erhöhter Temperatur. Zudem wird bei Einsatz derartiger Polymerdispersionen im Vergleich zu konventionellen optischen Aufhellern ein vergleichbarer Weißgrad bereits bei geringeren Mengen an optischem Aufheller erreicht. Erfindungsgemäße Polymerdispersionen, die optische Aufheller enthalten, sind insbesondere als aufhellender Bestandteil in Papierstreichfarben geeignet. Sie können außerdem als aufhellender Bestandteil zur Verbesserung des Weißgrads den Papiermassen selber zugesetzt werden.

Aufgrund dieser vorteilhaften Eigenschaften kommen die erfindungsgemäßen, farbstoffhaltigen Polymerisatdispersionen für eine Vielzahl von Anwendungen in Frage. Hier seien beispielsweise die Pigmentierung von hochmolekularen organischen und anorganischen Materialien, die Pigmentierung von Druckfarben, insbesondere für den Sicherheitsdruck und die Pigmentierung von Tinten für den Papier- und Textil-Ink-Jet-Druck zu nennen. Ferner kommen die erfindungsgemäßen, farbstoffhaltigen Polymerisatdispersionen als farbgebende Bestandteile für Toner für die Elektrophotographie in Frage. Erfindungsgemäße Polymerisatdispersionen, die Fluoreszenzfarbstoffe enthalten, können als Bestandteile von Tagesleuchtfarben und fluoreszierenden bzw. retroreflektierenden Beschichtungen eingesetzt werden. Ein Einsatz der erfindungsgemäßen Polymerisatdispersionen sowie der daraus erhältlichen Polymerisate in Systemen zur passiven oder aktiven Sonnenenergienutzung ist ebenfalls möglich. Ferner sind die aus den erfindungsgemäßen Polymerisatdispersionen erhältlichen Polymerisate für den Einsatz in Festkörperlasern geeignet.

Die erfindungsgemäßen, farbstoffhaltigen, wässrigen Polymerisatdispersionen sowie die daraus durch Trocknung erhältlichen Polymerpulver sind insbesondere als farbgebende Komponente in wässrigen farbstoffhaltigen Zubereitungen geeignet, beispielsweise für Tinten, insbesondere in Tinten für den Papier- und Textil-Ink-Jet-Druck. Die erfindungsgemäßen farbstoffhaltigen Polymerisatteilchen dienen dabei als als Ersatz für Pigmentteilchen in konventionellen, wässrigen pigmenthaltigen Zubereitungen.

Demnach betrifft die vorliegende Erfindung auch wässrige, farbstoffhaltige Zubereitungen, enthaltend:

i. wenigstens ein erfindungsgemäßes farbstoffhaltiges Polymerisat, das in der Zubereitung in Form dispers verteilter Polymerisatteilchen vorliegt und das augewählt ist unter den in den erfindungsgemäßen wässrigen, farbstoffhaltigen Polymerdispersionen enthaltenen Polymerisaten und den daraus hergestellten Polymerisatpulvern, sowie

ii. übliche Hilfsmittel.

An wässrige, farbstoffhaltige Zubereitungen, insbesondere an die Tinten, die beim Ink-Jet-Verfahren (Tintenstrahldruckverfahren wie Thermal Ink Jet, Piezo Ink Jet, Continuous Ink Jet, Valve Jet) eingesetzt werden, werden eine Reihe von Anforderungen gestellt: Sie müssen eine zum Drucken geeignete Viskosität und Oberflächenspannung aufweisen, sie müssen lagerstabil sein, d. h., sie sollen nicht koagulieren oder flokulieren und das dispergierte, nicht gelöste, Farbmittel soll sich nicht absetzen, sie dürfen nicht zu einer Verstopfung der Druckerdüse führen, was bei pigmenthaltigen, also dispergierte Farbmittelteilchen enthaltenden Tinten problematisch sein kann. Schließlich müssen sie im Falle des Continuous Ink Jet stabil gegen den Zusatz von Leitsalzen sein und bei Erhöhung des Ionengehaltes keine Tendenz zum Ausflocken zeigen. Außerdem müssen die erhaltenen Drucke den koloristischen Anforderungen genügen, d. h. hohe Brillanz und Farbtiefe zeigen, und gute Echtheiten, z. B. Reibechtheit, Lichtechtheit, Wasserechtheit und Nassreibechtheit, auch auf nicht gestrichenen Papieren aufweisen.

Die erfindungsgemäßen wässrigen, farbstoffhaltigen Zubereitungen, die anstelle von üblicherweise eingesetzten Farbpigmenten die erfindungsgemäßen farbstoffhaltigen Polymerisate enthalten, erfüllen diese Anforderungen bereits in außerordentlichem Maß. Verglichen mit konventionellen pigmenthaltigen Zubereitungen zeichnen sie sich zudem durch eine höhere Farbbrillanz aus. Die an pigmenthaltige Zubereitungen gestellte Anforderung der Redispergierbarkeit des farbgebenden Bestandteils, die insbesondere beim Eintrocknen der Zubereitung von Bedeutung ist und wodurch im Falle der Ink-Jet-Tinten eine Verstopfung der Druckerdüse vermieden werden kann, lässt sich überraschenderweise ohne Einbußen hinsichtlich der sonstigen anwendungstechnischen Eigenschaften gewährleisten, wenn die erfindungsgemäßen, farbstoffhaltigen Zubereitungen wenigstens ein in Wasser lösliches Polymer PW enthalten.

Unter wasserlöslichen Polymeren PW sind grundsätzlich solche Polymere zu verstehen, die in dem wässrigen Dispergiermedium der erfindungsgemäßen, wässrigen, farbstoffhaltigen Zubereitung in der gewählten Einsatzmenge vollständig löslich sind. Als wasserlösliche Polymere PW kommen grundsätzlich alle Polymere in Frage, die bereits als Schutzkolloide oder als Trocknungshilfsmittel genannt sind. Bevorzugt sind ionische Polymere PW. Die bevorzugten ionischen Polymere PW weisen entweder kationische funktionelle Gruppen, insbesondere quartäre Amoniumgruppen oder Imoniumgruppen, oder saure funktionelle Gruppen, vorzugsweise in deprotonierter Form (d. h. anionische Gruppen) auf.

Bevorzugte Polymere PW mit kationischen funktionellen Gruppen, im Folgenden als kationische Polymere PW bezeichnet, sind Copolymere, die aufgebaut sind aus wenigstens einem monoethylenisch ungesättigten, kationischen Monomer, insbesondere einem Monomer mit wenigstens einer quartären Amoniumgruppe oder Imoniumgruppe und wenigstens einem weiteren neutralen Comonomer. Als kationische Monomere sind alle die bei A' genannten, monoethylenisch ungesättigten kationischen Monomere geeignet, beispielsweise quaternisierte N-Vinylimidazole wie 1-Vinyl-3-methylimidazoliumchlorid oder -methosulfat, oder quaternisierte Dialkylaminoalkylacrylate und -methacrylate, z. B. Acryloyloxyethyltrimethylamoniumchlorid oder -methosulfat. Neutrale Comonomere sind beispielsweise ausgewählt unter Olefinen wie Ethylen, Propen, 1-Buten, Isobuten und Diisobuten, Vinylaromaten wie Styrol, Alkylestern der Acrylsäure oder der Methacrylsäure, Hydroxyalkylestern der Acrylsäure oder der Methacrylsäure, Polyethylenglykolacrylate und -methacrylate mit 2 bis 50 Ethylenoxideinheite, Acrylamid, Methacrylamid, Vinylacetat und Acrylnitril.

Bevorzugte Comonomere sind Vinylamide wie N-Vinylformamid, N-Vinylacetamid, insbesondere N-Vinylcaprolactam, N-Vinylpiperidon und N-Vinylpyrrolidon.

Geeignete kationische Polymere PW sind in der Regel aufgebaut aus 5 bis 95 Gew.-% insbesondere aus 10 bis 50 Gew.-% wenigstens eines kationischen Monomers, und 5 bis 95 Gew.-%, insbesondere 50 bis 100 Gew.-% wenigstens eines neutralen Monomers, jeweils bezogen auf die Gesamtmenge der das kationische Polymer konstituierenden Monomere. Ihr Molekulargewicht ist in der Regel > 1000 Dalton und liegt vorzugsweise im Bereich von 2000 bis 50000 Dalton.

Besonders hervorzuhebende kationische Polymere PW sind: Copolymere des 1-Vinylpyrrolidons mit 1-Vinyl-3-alkylimidazolinium-Salzen, insbesondere mit 1-Vinyl-3-alkylimidazoliniumchlorid oder -methosulfat; Copolymere des 1-Vinylpyrrolidons mit Methacryloyloxyethyltrialkylamonium-Salzen, insbesondere mit Methacryloyloxyethyltrialkylamoniumchlorid oder -methosulfat; Terpolymere des Vinylpyrrolidons und des Vinylcaprolactams mit 1-Vinyl-3-alkylimidazolinium-Salzen, insbesondere mit 1-Vinyl-3-alkylimidazoliniumchlorid oder -methosulfat.

Derartige Polymere PW sind dem Fachmann grundsätzlich bekannt, beispielsweise aus der EP-A 246 580, EP-A 544148, US 4,859,756 und der EP-A 715 843, auf deren Inhalt hiermit ausdrücklich Bezug genommen wird. Die Polymere sind auch im Handel erhältlich, beispielsweise als LUVIQUAT® FC 370, LUVIQUAT® FC 550, LUVIQUAT® HM 552, LUVIQUAT® FC 905, LUVIQUAT® MS 370, LUVIQUAT® PQ 11 und, LUVIQUAT® Hold der BASF AG (Ludwigshafen).

Polymere PW mit sauren funktionellen Gruppen werden in der Regel in neutralisierter Form, d. h. in Form ihrer Salze, insbesondere ihrer Ammonium- oder Alkalimetallsalze, eingesetzt. Sie liegen in dem wässrigen Dispergiermedium der erfindungsgemäßen farbstoffhaltigen Zubereitung in zumindest teilweise deprotonierter Form vor. Sie werden deshalb im folgenden auch als anionische Polymere PW bezeichnet.

Geeignete anionische Polymere PW sind beispielsweise Homo- und Copolymere, die aufgebaut sind aus wenigstens einem monoethylenisch ungesättigten Monomer mit wenigstens einer Säuregruppe, beispielsweise einem der unter A' aufgeführten Monomere, insbesondere einem Monomer mit wenigstens einer COOH- oder $SO_3H$-Gruppe, und gegebenenfalls wenigstens einem weiteren neutralen Comonomer oder einem monoethylenisch ungesättigten Comonomer mit Säuregruppe. Speziell zu nennende Monomere mit Säuregruppe sind Acrylsäure, Methacrylsäure, Maleinsäure und 2-Acrylamido-2-methylpropansulfonsäure. Als neutrale Comonomere kommen im vorliegenden Fall die vorgenannten neutralen Comonomere insbesondere $C_1$-$C_{10}$und insbesondere $C_1$-$C_4$-Alkylester der Acrylsäure oder der Methacrylsäure, Hydroxyalkylester der Acrylsäure oder der Methacrylsäure, Vinylaromatische Monomere, Olefine, Acrylamid und Methacrylamid in Betracht. Polymere mit einpolymerisierter Maleinsäure können auch ausgehend von Maleinsäureanhydridcopolymeren durch Hydrolyse erzeugt werden. Bevorzugt werden anionische Polymere PW die aus wenigstens einem monoethylenisch ungesättigten Monomer mit Säuregruppe und wenigstens einem neutralen Comonomer aufgebaut sind.

Bevorzugt sind insbesondere die Salze, insbesondere die Alkalimetall- und Ammoniumsalze der vorgenannten anionischen Homo- und Copolymere. Sofern die anionischen Polymere Carboxylgruppen aufweisen, können diese teilweise mit Polyalkylenoxiden oder deren Monoalkylethern verestert sein (siehe hierzu z. B. EP-A 367 049).

Geeignete anionische Polymere PW sind beispielsweise die Homound Copolymere der Acrylsäure, der Methacrylsäure der Maleinsäure und der 2-Acrylamido-2-methylpropansulfonsäure und deren Salze. Derartige Polymere sind dem Fachmann hinreichend bekannt.

Besonders bevorzugte anionische Copolymere PW sind in der Regel aufgebaut aus 5 bis 95 Gew.-% insbesondere aus 30 bis 90 Gew.-% wenigstens eines anionischen Monomers, und 5 bis 90 Gew.-%, insbesondere 10 bis 70 Gew.-% wenigstens eines neutralen Monomers, jeweils bezogen auf die Gesamtmenge der das anionische Polymer konstituierenden Monomere. Ihr Molekulargewicht beträgt in der Regel wenigstens 1000 Dalton und liegt vorzugsweise im Bereich von 2000 bis 50000 Dalton.

Besonderes hervorzuhebende anionische Polymere PW sind: Homo- und Copolymere der 2-Acrylamido-2-methylpropansulfonsäure; Copolymere der Acrylsäure und/oder der Methacrylsäure mit Styrol; Copolymere der Acrylsäure und/oder der Methacrylsäure mit $C_1$-$C_4$-Alkylestern der Acrylsäure und/oder der Methacrylsäure; Copolymere der Maleinsäure oder des Maleinsäureanhydrids mit Olefinen, insbesondere mit Diisobuten; Formaldehyd-Kondensationsprodukten einer Arylsulfonsäure; und die Salze, vorzugsweise die Alkalimetall oder Ammoniumsalze und insbesondere die Natriumsalze der vorgenannten anionischen Polymere PW.

Geeignete Homo und Copolymere der 2-Acrylamido-2-methylpropansulfonsäure sind beispielsweise aus der DE 195 39 460, der EP 671 435 und der EP 629 650 bekannt. Auf den Inhalt der genannten Schriften wird hiermit in vollem Umfang Bezug genommen. Derartige Polymere werden vorzugsweise in Form ihrer Natriumsalze oder ihrer Ammoniumsalze eingesetzt.

Bevorzugte Styrol/Acrylsäure-Copolymere und Styrol/Methacrylsäure-Copolymere haben einen Styrolgehalt von etwa 20 bis 60 Gew.-%, insbesondere 35 bis 50 Gew.-% und eine Säurezahl von 130 bis 250. Ihr mittleres Molekulargewicht $M_w$ beträgt vorzugsweise 1000 bis 15000. Die Glasübergangstemperatur der Copolymere liegt bevorzugt bei 60 bis 90 °C. Die Carboxylgruppen dieser Copolymere können teilweise verestert, z. B. ethoxyliert oder propoxyliert,

sein. Bevorzugt sind die Ammonium- und insbesondere die Natriumsalze derartiger Polymere. Derartige Polymere sind bekannt (z. B. EP-A-68 024, 96 901 und 467 103) und im Handel z. B. unter dem Namen Joncryl®, Carboset®, Morez® oder Glascol® erhältlich.

Bevorzugte Copolymere der Maleinsäure (bzw. des Maleinsäureanhydrids nach Hydrolyse) mit Olefinen, vorzugsweise $C_4$-$C_{12}$-Olefinen, insbesondere Isobuten und Diisobuten, sowie Verfahren zu ihrer Herstellung sind beispielsweise aus der EP-A 9169, der EP-A 9170 und der EP-A 367049 bekannt. In diesen Polymeren liegt das Molverhältnis von einpolymerisierter Maleinsäure zu einpolymerisiertem Olefin vorzugsweise im Bereich von 5 : 1 bis 1 : 5. Vorzugsweise sind die Carboxylgruppen in diesen Polymeren wenigstens teilweise neutralisiert. Bevorzugt sind die Ammonium- und insbesondere die Natriumsalze derartiger Polymere. Die Carboxylgruppen dieser Copolymere können auch teilweise verestert, z. B. ethoxyliert oder propoxyliert, sein. Der K-Wert der Polymere in der sauren, d. h. nicht neutralisierten Form liegt in der Regel im Bereich von 5 bis 100, vorzugsweise 10 bis 60 (bestimmt nach Fikentscher als 1 gew.-%ige Lösung, Cellulose-Chemie 13, 1932, S. 58 - 64 und 71 bis 74). Derartige Polymere sind beispielsweise unter der Bezeichnung Sokalan® CP9 der BASF AG im Handel erhältlich.

Bevorzugte Formaldehyd-Kondensationsprodukten von Arylsulfonsäuren sind insbesondere Kondensationsprodukte der Benzolsulfonsäure oder von Naphthalinsulfonsäuren, z. B. des $\alpha$- oder $\beta$-Isomers oder Mischungen davon. Sie weisen in der Regel ein mittleres Molekulargewicht im Bereich von 500 bis 10000 Dalton, insbesondere im Bereich von 700 bis 2500 Dalton auf. Bevorzugt sind die Alkalimetallsalze, insbesondere die Natriumsalze. Formaldehyd-Kondensationsprodukte aromatischer Sulfonsäuren sind dem Fachmann als Sprühhilfsmittel, beispielsweise aus der DE-A 24 45 813, der EP-A 78 449, der EP-A 407 889, der WO 98/03576 und der WO 98/03577 bekannt. Auf die Offenbarung dieser Schriften hinsichtlich der Sprühhilfsmittel wird hiermit ausdrücklich Bezug genommen. Geeignete Formaldehyd-Kondensationsprodukte sind auch im Handel erhältlich, beispielsweise als TAMOL® NN 4501 und als TAMOL® NN 9104 der BASF AG.

Die vorgenannten wasserlöslichen Polymere PW können sowohl in konventioneller Weise, d. h. durch Zugabe des Polymeren PW in eine wässrige Dispersion des erfindungsgemäßen farbstoffhaltigen Polymerisats, in die erfindungsgemäße, farbstoffhaltige Zubereitungen eingearbeitet werden. Sie können auch bei der Herstellung der erfindungsgemäßen farbstoffhaltigen Polymerdispersion, beispielsweise als Schutzkolloide, zugesetzt werden. Sie können auch beim Trocknen der erfindungsgemäßen farbstoffhaltigen Polymerisatdispersion als Trocknungshilfsmittel verwendet, und so in das dabei erhältliche Polymerpulver eingearbeitet werden.

Der Gewichtsanteil der Polymere PW, bezogen auf das farbstoffhaltige Polymerisat in der Zubereitung, liegt in der Regel im Bereich von 0,5 bis 100 Gew.-%, vorzugsweise im Bereich von 1 bis 60 Gew.-% und insbesondere im Bereich von 2 bis 30 Gew.-%.

Die Verwendung von wasserlöslichen Polymeren PW führt neben einer verbesserten Redispergierbarkeit des Polymerisats überraschenderweise bei der Herstellung der erfindungsgemäßen farbstoffhaltigen Polymerisatdispersionen zu einer verringerten Koagulatbildung und zu einer erhöhten Lagerstabilität der farbstoffhaltigen Polymerisatdispersionen, was insbesondere dann von Bedeutung ist, wenn Polymerisatdispersionen mit höherem Farbstoffgehalt z. B. oberhalb 2 Gew.-%, insbesondere oberhalb 5 Gew.-%, bezogen auf die Gesamtmenge der zu polymerisierenden Monomere, hergestellt werden sollen.

Weiterhin können erfindungsgemäße Polymerisatpulver, die erhältlich sind durch Trocknen von solchen erfindungsgemäßen farbstoffhaltigen Polymerisatdispersionen, die kein Polymer PW enthalten, durch Behandeln mit wässrigen Lösungen der Polymere PW dispergiert werden. Dies gilt insbesondere dann, wenn die Glasübergangstemperatur der Polymermatrix der farbstoffhaltigen Polymerisate wenigstens 60 °C beträgt.

Eine gute Redispergierbarkeit des erfindungsgemäßen farbstoffhaltigen Polymerisats kann auch dadurch erreicht werden, wenn man bei der Herstellung der erfindungsgemäßen farbstoffhaltigen Polymerisatdispersionen eine Monomermischung einsetzt, die 0,5 bis 30 Gew.-%, vorzugsweise 1 bis 20 Gew.-% und speziell 2 bis 15 Gew.-%, bezogen auf die Gesamtmonomermenge, wenigstens eines Monomers A1, insbesondere wenigstens eines kationischen oder wenigstens eines Monomers mit Säuregruppe, und speziell Acrylsäure, Methacrylsäure oder das Natriumsalz der 2-Acrylamido-2-methylpropansulfonsäure enthält. Derartige Polymerisate sind auch ohne Einsatz der Polymere PW redispergierbar, wobei die Redispergierbarkeit durch Polymere PW verbessert werden kann.

Häufig enthalten die erfindungsgemäßen farbstoffhaltigen, wässrigen Zubereitungen als Hilfsmittel zusätzlich wenigstens eine anorganische oder organische Base.

Geeignete Basen sind beispielsweise Alkalimetallhydroxide, Ammoniak und basische Ammoniumsalze wie Ammoniumcarbonat, aliphatische Amine wie Mono-, Di- und Trialkylamine mit in der Regel bis zu vier Kohlenstoffatomen, heterocyclische Amine wie Morpholin und Piperazin und Alkanolamine wie Mono-, Di- und Trialkanolamine und Mono- und Dialkanolalkylamine mit üblicherweise bis zu vier Kohlenstoffatomen. Bevorzugt werden flüchtige Basen eingesetzt. Als besonders bevorzugte Base (D) sei z. B. Ammoniak genannt.

Die erfindungsgemäßen farbstoffhaltigen wässrigen Zubereitungen enthalten in Abhängigkeit von dem gewünschten pH-Wert üblicherweise 0,1 bis 10 Gew.-% Base.

Der pH-Wert der erfindungsgemäßen wässrigen, farbstoffhaltigen Zubereitungen liegt im Allgemeinen oberhalb pH 7 beispielsweise im Bereich von 9 bis 11.

Wasser stellt den Hauptbestandteil der erfindungsgemäßen Zubereitungen dar. Sein Gehalt beträgt in der Regel 35 bis 90 Gew.-%, bevorzugt 45 bis 80 Gew.-%.

Vorzugsweise enthalten die erfindungsgemäßen Zubereitungen als weiteres Hilfsmittel ein wasserlösliches Mittel mit wasserrückhaltender Wirkung, welches sie für das Ink-Jet-Verfahren besonders geeignet macht.

Als wasserlösliches Mittel mit wasserrückhaltender Wirkung eignen sich neben mehrwertigen, insbesondere 3 bis 8-Kohlenstoffatome enthaltenden Alkoholen, wie Glycerin, Erythrit, Pentaerythrit, Pentiten wie Arabit, Adonit und Xylit und Hexiten wie Sorbit, Mannit und Dulcit, vor allem Polyalkylenglykole und Polyalkylenglykolmonoalkylether, worunter auch die niederen (Di-, Tri- und Tetra-) Alkylenglykole und Alkylenglykolether verstanden werden sollen. Bevorzugt weisen diese Verbindungen mittlere Molekulargewichte von 100 bis 1500 auf, wobei Polyethylenglykole und Polyethylenglykolether mit einem mittleren Molekulargewicht von ≤ 800 besonders bevorzugt sind. Beispiele für diese Komponenten (F) sind Di-,Tri- und Tetraethylenglykol, Diethylenglykolmonomethyl-, - ethyl-, -propyl und -butylether und Triethylenglykolmonomethyl-, - ethyl-, -propyl- und -butylether.

Weiterhin sind als Mittel mit wasserrückhaltender Wirkung Pyrrolidon und N-Alkylpyrrolidone wie N-Methylpyrrolidon geeignet, die zusätzlich das Eindringen der Tinte in das Substratmaterial (z. B. Papier) unterstützen.

Beispiele für besonders bevorzugte Mittel mit wasserrückhaltender Wirkung sind Mono-, Di- und Triethylenglykolmonobutylether und N-Methylpyrrolidon.

Der Anteil der Mittel mit wasserrückhaltender Wirkung an den erfindungsgemäßen farbstoffhaltigen Zubereitungen beträgt in der Regel 0,1 bis 35 Gew.-%, insbesondere 5 bis 25 Gew.-%.

Dabei ist oft die Verwendung von Kombinationen der genannten Mittel mit wasserrückhaltender Wirkung zweckmäßig. Besonders geeignet ist z. B. eine Kombination von N-Methylpyrrolidon und Triethylenglykolmonobutylether.

Selbstverständlich können die erfindungsgemäßen Zubereitungen weitere Hilfsmittel, wie sie insbesondere für (wässrige) Ink-Jet-Tinten und in der Druck- und Lackindustrie üblich sind, enthalten. Genannt seien z. B. Konservierungsmittel (wie 1,2-Benzisothiazolin-3-on und dessen Alkalimetallsalze, Glutardialdehyd und/oder Tetramethylolacetylenharnstoff), Antioxidantien, Entgaser/Entschäumer (wie Acetylendiole und ethoxylierte Acetylendiole, die üblicherweise 20 bis 40 mol Ethylenoxid pro mol Acetylendiol enthalten und gleichzeitig auch dispergierend wirken), Mittel zur Regulierung der Viskosität, Verlaufshilfsmittel, Benetzer, Antiabsetzmittel, Glanzverbesserer, Gleitmittel, Haftverbesserer, Hautverhinderungsmittel, Mattierungsmittel, Emulgatoren, Stabilisatoren, Hydrophobiermittel, Lichtschutzadditive, Griffverbesserer und Antistatikmittel. Wenn diese Mittel Bestandteil der erfindungsgemäßen Pigmentzubereitungen sind, beträgt ihre Gesamtmenge in der Regel ≤ 1 Gew.-%, bezogen auf das Gewicht der Zubereitung.

Die erfindungsgemäßen wässrigen farbstoffhaltigen Zubereitungen weisen, wenn sie als Tinten, insbesondere für den Ink-Jet-Druck eingesetzt werden, vorzugsweise eine dynamische Viskosität von 1 bis 20 $mm^2$/sec, insbesondere 2 bis 10 $mm^2$/sec auf. Ferner hat es sich als günstig erwiesen, wenn die Oberflächenspannung der erfindungsgemäßen wässrigen, farbstoffhaltigen Zubereitungen 20 bis 70 mN/m, insbesondere 30 bis 50 mN/m beträgt.

Ferner hat es sich als günstig erwiesen, wenn die Polymermatrix der für diesen Zweck verwendeten farbstoffhaltigen Polymerisate eine Glasübergangstemperatur $T_G$ oberhalb 60 °C aufweist.

Bei der Herstellung der erfindungsgemäßen wässrigen, farbstoffhaltigen Zubereitungen geht man zweckmäßigerweise wie folgt vor:

Man mischt das erfindungsgemäße farbstoffhaltige Polymerisat, beispielsweise in Form eines Pulvers oder einer wässrigen Dispersion, zusammen mit den Hilfsmitteln und gegebenenfalls mit den Polymeren PW, das vorzugsweise in Form einer wässrigen Lösung eingesetzt wird, in Gegenwart von Wasser. Schließlich nimmt man in der Regel eine Endeinstellung der Zubereitung vor, indem man z. B. noch entsprechende Mengen Wasser und gegebenenfalls ein oder mehrere weitere Hilfsmittel, z. B. Mittel mit wasserrückhaltender Wirkung, zusetzt und nach dem Mischen mit einer Filtriervorrichtung mit Feinabtrennung im Bereich von in der Regel 10 bis 1 µm und vorzugsweise anschließend mit einer weiteren Filtriervorrichtung mit Feinabtrennung im Bereich von 1 bis 0,5 µm filtriert. Die erfindungsgemäßen farbstoffhaltigen Polymerisatdispersionen können auch als solche, beispielsweise für Tinten, eingesetzt werden.

Die erfindungsgemäßen wässrigen, farbstoffhaltigen Zubereitungen können vorteilhaft in dem ebenfalls erfindungsgemäßen Verfahren zum Bedrucken von flächigen oder dreidimensional gestalteten Substraten in Ink-Jet-Verfahren eingesetzt werden, welches dadurch gekennzeichnet ist, dass man die wässrigen, farbstoffhaltigen Zubereitungen auf das Substrat aufdruckt und den erhaltenen Druck anschließend fixiert.

Beim Ink-Jet-Verfahren werden die üblicherweise wässrigen Tinten in kleinen Tröpfchen direkt auf das Substrat gesprüht. Man unterscheidet dabei ein kontinuierliches Verfahren, bei dem die Tinte gleichmäßig durch eine Düse gepresst und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 bis

29, 1987, und Band 21 (6), Seiten 27 bis 32, 1989, beschrieben.

Besonders geeignet sind die erfindungsgemäßen wässrigen, farbstoffhaltigen Zubereitungen als Tinten für das Bubble-Jet-Verfahren und für das Verfahren mittels eines piezoelektrischen Kristalls.

Die erfindungsgemäßen wässrigen, farbstoffhaltigen Zubereitungen können auf alle Arten von Substratmaterialien gedruckt werden. Als Substratmaterialien seien z. B.

- cellulosehaltige Materialien wie Papier, Pappe, Karton, Holz und Holzwerkstoffe, die auch lackiert oder anderweitig beschichtet sein können,
- metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
- silikatische Materialien wie Glas, Porzellan und Keramik, die ebenfalls beschichtet sein können,
- polymere Materialien jeder Art wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copolymere und Blockcopolymere, biologisch abbaubare Polymere und natürliche Polymere wie Gelatine,
- textile Materialien wie Fasern, Garne, Zwirne, Maschenware, Webware, Non-wovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe,
- Leder, sowohl Naturleder als auch Kunstleder, als Glatt-, Nappa- oder Velourleder,
- Lebensmittel und Kosmetika

genannt.

Das Substratmaterial kann dabei flächig oder dreidimensional gestaltet sein und sowohl vollflächig als auch bildmäßig mit den erfindungsgemäßen wässrigen, farbstoffhaltigen Zubereitungen bedruckt werden.

Die erfindungsgemäßen wässrigen, farbstoffhaltigen Zubereitungen zeichnen sich als Tinten, insbesondere als Ink-Jet-Tinten mit insgesamt vorteilhaften Anwendungseigenschaften, vor allem gutem Laufverhalten, aus und ergeben Drucke hoher Reib-, Nassreib-, Licht- und Wasserechtheit. Die wässrigen, farbstoffhaltigen Zubereitungen eignen sich auch hervorragend zur Herstellung von Schreibtinten.

Weiterhin betrifft die vorliegende Erfindung pigmenthaltige wässrige Zubereitungen, enthaltend:

i. wenigstens ein farbstoffhaltiges Polymerisat, das in der Zubereitung in Form dispers verteilter Polymerisatteilchen vorliegt, das augewählt ist unter den Polymerisaten der erfindungsgemäßen wässrigen, farbstoffhaltigen Polymerdispersionen und den daraus erhältlichen Polymerisatpulver und das als Farbstoff wenigstens einen optischen Aufheller umfasst,

ii. wenigstens ein farbstofffreies, filmbildendes, wasserunlösliches Polymer, das aus ethylenisch ungesättigten Monomeren aufgebaut ist,

iii.wenigstens ein anorganisches Weißpigment und gegebenenfalls einen anorganischen Füllstoff, und

iv. übliche Hilfsmittel.

Derartige Zubereitungen finden als Beschichtungsmittel, insbesondere als Beschichtungsmittel für Papier und speziell als Papierstreichfarben Verwendung. Gegenüber konventionellen Beschichtungsmitteln die optische Aufheller in gelöster oder dispergierter Form enthalten, zeichnen sich die erfindungsgemäßen wässrigen Zubereitungen dadurch aus, dass die zur Erreichung eines gleichen Weißgrades erforderliche Menge an optischem Aufheller deutlich geringer ist. Zudem zeichnen sich derartige Zubereitung durch eine deutlich geringere Neigung zur Vergilbung, beispielsweise als Folge der Einwirkung von UV-Strahlung oder von Wärme aus.

Üblicherweise werden in derartigen Zubereitungen erfindungsgemäße Polymerisate eingesetzt, die 0,001 bis 5 gew.-% vorzugsweise 0,01 bis 2 Gew.-% und insbesondere 0,05 bis 1 Gew.-% optischen Aufheller, bezogen auf das

Gewicht der Polymermatrix des Polymerisats enthalten. Üblicherweise enthalten die erfindungsgemäßen wässrigen pigmenthaltigen Zubereitungen 0,5 bis 30 Gew.-%, vorzugsweise 1 bis 20 Gew.-%, insbesondere 2 bis 15 Gew.-% und speziell 3 bis 10 Gew.-%, bezogen auf den Feststoffgehalt der erfindungsgemäßen pigmenthaltigen Zubereitung, wenigstens eines farbstoffhaltigen Polymerisats, das als Farbstoff wenigstens einen optischen Aufheller enthält.

Als filmbildendes farbstofffreies Polymer werden in derartigen Zubereitungen Polymere eingesetzt, wie sie üblicherweise als Bindemittel auch in konventionellen wässrigen, pigmenthaltigen Beschichtungsmassen verwendet werden. Üblicherweise handelt es sich bei derartigen filmbildenden Polymere um konventionelle Emulsionspolymerisate. In den erfindungsgemäßen Zubereitungen liegen sie in Form dispergierter Polymerteilchen vor.

Das filmbildende, wasserunlösliche Polymer ist im Wesentlichen aus den vorgenannten ethylenisch ungesättigten Monomeren A2 aufgebaut. Übliche Monomere A2 sind in diesem Fall Vinylacetat, Vinylpropionat, gegebenenfalls mit Ethylen als Copolymer, vinylaromatische Monomere, insbesondere Styrol, $C_1$-$C_{10}$-Alkylester der Acrylsäure oder der Methacrylsäure, insbesondere Methylmethacrylat, n-Butylacrylat und 2-Ethylhexylacrylat, sowie Butadien. Üblich sind insbesondere Homo- und Copolymerisate des Vinylacetats mit Comonomeren, ausgewählt unter den vorgenannten Estern der Acrylsäure, Ethylen und Vinylpropionat, die Copolymere des Methylmethacrylats mit den vorgenannten Estern der Acrylsäure, die Copolymere des Styrols mit den vorgenannten Estern der Acrylsäure sowie Copolymere des Butadiens mit Styrol. Weiterhin enthalten die filmbildenden Polymere auch Monomere A1, vorzugsweise in einer Menge von 0,01 bis 10 Gew.-% und insbesondere 0,1 bis 5 Gew.-%. Daneben können die filmbildenden Polymere auch Monomere B, C und D enthalten. Vorzugsweise enthalten die filmbildenden Polymere keine monomere B, C und D.

Um eine Filmbildung zu gewährleisten, weist das filmbildende Polymer in der Regel eine Glasübergangstemperatur (gemäß ASTM-D 3418-82) unterhalb 50 °C und vorzugsweise unterhalb 40 °C, insbesondere unterhalb 30 °C. Im Allgemeinen liegt sie jedoch oberhalb -80 °C. Die Glasübergangstemperatur des filmbildenden Polymers hängt naturgemäß vom konkreten Verwendungszweck ab. Bei Bindemitteln für Dispersionsfarben liegt sie häufig oberhalb -20 °C. Sofern die Dispersionsfarben lösungsmittelfrei ausgestaltet werden, liegt die Glasübergangstemperatur häufig unterhalb 15 °C. Im Falle von Papierstreichmassen für den Tiefdruckbereich liegt die Glasübergangstemperatur des filmbildenden Polymers vorzugsweise im Bereich von -30 bis -10 °C und insbesondere im Bereich von -25 bis -20 °C, bei Papierstreichmassen für den Offset-Bereich vorzugsweise im Bereich von 0 bis 40 °C, insbesondere im Bereich von 0 bis 25 °C.

Hierbei erweist es sich als hilfreich, die Glasübergangstemperatur Tg des dispergierten Polymerisats abzuschätzen. Nach Fox (T.G. Fox, Bull. Am. Phys. Soc. (Ser. II) 1, 123 [1956] und Ullmann's Enzyklopädie der technischen Chemie, Weinheim (1980), S. 17, 18) gilt für die Glasübergangstemperatur von Mischpolymerisaten bei großen Molmassen in guter Nährung

$$\frac{1}{T_g} = \frac{X_1}{T_g^{\ 1}} + \frac{X^2}{T_g^{\ 2}} + \cdots\cdots \frac{X^n}{T_g^{\ n}}$$

wobei $X^1$, $X^2$, ..., $X^n$ die Massenbrüche 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt. Demnach kann die Glasübergangstemperatur durch Wahl der Monomere in bekannter Weise eingestellt werden.

Die Herstellung filmbildenden Polymere erfolgt in der Regel in einer dem Fachmann bekannten Weise durch radikalische wässrige Emulsionspolymerisation der Monomere in Gegenwart wenigstens eines Polymerisationsinitiators und wenigstens einer grenzflächenaktiven Substanz, die ausgewählt ist unter den vorgenannten Emulgatoren und den Schutzkolloiden.

Die so erhältlichen Dispersionen des farbstofffreien filmbildenden Polymeren weisen in der Regel gewichtsmittlere Teilchengrößen im Bereich von 20 bis 1000 nm, insbesondere 50 bis 800 nm auf. Für die Anwendung in Papierstreichmassen liegt die mittlere Teilchengröße besonders bevorzugt im Bereich von 50 bis 200 nm, ganz besonders bevorzugt 100 bis 160 nm. Es können auch bimodale und multimodale Teilchengrößenverteilungen von Vorteil sein.

In den erfindungsgemäßen, pigmenthaltigen Zubereitungen ist das farbstofffreie, filmbildende Polymer Bindemittelbestandteil für das anorganische Weißpigment und die Füllstoffe. Derartige Zubereitungen enthalten das filmbildende Polymere als Bindemittel, vorzugsweise in Mengen von 1 bis 50 Gew.-%, insbesondere 2 bis 40 Gew.-%, bezogen auf den gesamten Feststoffgehalt der Zubereitung. Die Papierstreichmassen enthalten die filmbildenden Polymere insbesondere in einer Menge von 3 bis 30 Gew.-%, bezogen auf den gesamten Feststoffgehalt der Papierstreichmassen (Angabe bezieht sich auf Polymer als solche, nicht auf die Dispersion). Naturgemäß hängt der Bindemittelanteil von der verwendeten Druckfarbe, der jeweiligen Papiersorte und der Druckart ab. Insbesondere beträgt

der Bindemittelanteil im Tiefdruckbereich bei Verwendung lösungsmittelhaltiger Druckfarben 3 bis 6 Gew.-%, bei wässrigen Druckfarben 15 bis 20 Gew.-% und im Offset-Bereich 8 bis 20 Gew.-%. Hierbei ist zu berücksichtigen, dass die Polymermatrix der den optischen Aufheller enthaltenden Polymere ebenfalls als Bindemittel wirkt, sofern sie eine für die Filmbildung geeignete Glasübergangstemperatur aufweist. Geeignete filmbildende Polymere für Papierstreichmassen sind beispielsweise aus der EP-A 307 816 und der EP-A 833 752 bekannt. Vorzugsweise wird die Gesamtmenge an Polymer mit Aufheller und farbstofffreiem Polymer 50 Gew.-%, insbesondere 40 Gew.-% und besonders bevorzugt 30 Gew.-%, bezogen auf den gesamten Feststoffgehalt der Zubereitung, nicht überschreiten.

Üblicherweise stellen anorganische Weißpigmente und anorganische Füllstoffe die Hauptkomponente der erfindungsgemäßen pigmenthaltigen Zubereitungen dar. Ihr Anteil, bezogen den gesamten Feststoffgehalt der Zubereitungen liegt in der Regel im Bereich von 50 bis 98 Gew.-% und insbesondere im Bereich von 60 bis 90 Gew.-%. Häufig verwendete Pigmente und Füllstoffe sind beispielsweise Feldspäte, Silicate, Kaolin, Talkum, Glimmer, Magnesit, Dolomit, Erdalkalisulfate, wie Calciumsulfat und Bariumsulfat, Siliciumdioxid, Calciumsulfoaluminat, Titandioxid, Zinkoxid, Kreide oder Streichclay.

Weiterhin können die erfindungsgemäßen pigmenthaltigen Zubereitungen als Hilfsmittel übliche Dispergiermittel enthalten. Geeignete Dispergiermittel sind Polyanionen, beispielsweise von Polyphosphorsäuren oder von Polyacrylsäuren, welche üblicherweise in Mengen von 0,1 bis 3 Gew.-%, bezogen auf die Pigment-/Füllstoffmenge, enthalten sind.

Außerdem können die erfindungsgemäßen pigmenthaltigen Zubereitungen als Hilfsmittel sogenannte "Co-Binder" und Verdicker enthalten. Als natürliche Cobinder und Verdicker seien Stärke, Kasein, Gelatine und Alginate, als modifizierte Naturprodukte Hydroxyethylcellulose, Methylcellulose und Carboxymethylcellulose sowie kationisch modifizierte Stärke erwähnt. Es können aber auch übliche synthetische Cobinder und Verdicker, z. B. auf Vinylacetatoder Acrylatbasis, verwendet werden. Diese können in Mengen von 0,1 bis 10 Gew.-%, bezogen auf die Pigmentmenge enthalten sein.

Weitere Hilfsmittel sind, je nach Anwendungszweck, Entschäumer, Konservierungs- oder Hydrophobiermittel, Biozide, Farbstoffe und/oder Fasern. Auch können die Polymerzubereitungen zur Einstellung der Filmbildeeigenschaften der Polymere A Lösungsmittel oder Weichmacher enthalten.

Zur Herstellung der erfindungsgemäßen pigmenthaltigen Zubereitungen werden die Bestandteile in bekannter Weise gemischt, wobei das farbstofffreie Polymere im Allgemeinen in Form der wässrigen Dispersion verwendet wird.

Der Gehalt an Wasser in den erfindungsgemäßen pigmenthaltigen Zubereitungen, insbesondere in der Papierstreichmasse wird üblicherweise auf 30 bis 75 Gew.-%, bezogen auf die Papierstreichmasse, eingestellt.

Die erfindungsgemäßen pigmenthaltigen Zubereitungen sind insbesondere für die Verwendung als Papierstreichmasse geeignet. Papierstreichmassen dienen zum Beschichten von Papier, insbesondere für Papiere, die in Druckverfahren, z. B. Offsetdruck- oder Tiefdruckverfahren, eingesetzt werden sollen.

Die Papierstreichmasse kann nach üblichen Verfahren auf die zu beschichtenden Papiere aufgebracht werden (vgl. Ullmann's Enzyklopädie der Technischen Chemie, 4. Auflage, Bd. 17, S. 603 ff). Als zu beschichtende Papiere kommen Papiere unterschiedlichster Dicken, auch Karton u.ä. in Betracht. Die Papiere sind vorzugsweise mit 2 g ($m^2$) bis 50 g ($m^2$) der Papierstreichmasse (trocken) beschichtet.

Die erfindungsgemäßen Papierstreichmassen zeichnen sich insbesondere dadurch aus, dass damit beschichtete Papiere bei thermischer Belastung oder bei Belastung mit UV-Strahlung weniger stark vergilben. Zudem bedarf es zur Erzielung eines vergleichbaren Weißgrades einer sehr viel geringeren Menge an optischem Aufheller als bei Papierstreichmassen, die wasserlösliche optische Aufheller enthalten.

Beispiele

I. Analytik

Die Bestimmung des pH-Wertes der Dispersionen erfolgte mittels einer Glaselektrode.

Der LD-Wert wurde durch Vergleich der Lichtdurchlässigkeit einer 0,01 Gew.-%igen Probe (Schichtdicke 2,5 cm) der jeweiligen Polymerisatdispersionen gegen Wasser bestimmt.

Die Bestimmung der Tröpfchengröße in der Monomeremulsion ($\bar{d}_z$-Wert) erfolgte wie die Bestimmung der Polymerisatteilchengröße ($d_z$-Wert) in der oben beschriebenen Weise mittels eines Coulter N4 Plus Particle Analyzers an 0,01 gew.-%igen Proben der Dispersion bzw. Emulsion.

Die Bestimmung der Oberflächenspannung der farbstoffhaltigen Polymerisatdispersionen erfolgte mittels eines Ringtensionmeters TE 1C der Fa. Lauda in Anlehnung an ISO 1409 bei 20 °C und 1 atm.

Die Bestimmung der Koloristik der farbigen Polymerisate erfolgte durch vergleichende Beurteilung der gefriergetrockneten Polymerisatdispersionen (visuell) sowie anhand ihrer Ausfärbungen in Weich-PVC analog DIN 53775 (Chromophorkonzentration von 0,02 Gew. -% für fluoreszierende und 0,05 Gew.-% für nichtfluoreszierende Farbmittel, Werte bezogen auf Trockenmasse Dispersion). Hierzu werden Folien aus Weich-PVC bedruckt und mit einer weißen

Folie aus Weich-PVC kalandriert (Heißwalzung Zweiwalzenstuhl 160°C, 200 Umdrehungen, Walzenspalt 0,3 mm; Pressen des Fells bei 160 °C, 200 bar, 3 min, Distanzrahmenstärke 1 mm). Als Lack diente ein Alkyd-Melamin-Einbrennlack mit 5 gew.-%iger Pigmentierung, bezogen auf Trockenmasse Dispersion (Schichtdicke 100 µm feucht; Einbrennbedingungen 30 min, 130 °C). Als koloristischer Vergleich dienten die jeweils verwendeten monomeren Farbstoffe bei vergleichbarer Chromophordosierung (siehe Tabelle 2).

II. Erfindungsgemäß eingesetzte Farbstoffe und Herstellung der erfindungsgemäß eingesetzten copolymerisierbaren Perylenfarbstoffe der allgemeinen Formel III

Zur Herstellung der unter III. beschriebenen erfindungsgemäß eingesetzten Monomeremulsionen und der unter IV. beschriebenen erfindungsgemäßen Polymerisatdispersionen finden die folgenden Farbstoffe Verwendung:

Farbstoff 1: Lumogen® F Gelb 083:1,7-Bis(isobutyloxycarbonyl)-6,12-dicyanoperylen
Farbstoff 2: Lumogen® F Orange 240 (Fa. BASF; Perylentetracarbonsäurediimid-Fluoreszenzfarbstoff);
Farbstoff 3: Lumogen® F Rot 300 (Fa. BASF; Perylentetracarbonsäurediimid-Fluoreszenzfarbstoff);
Farbstoff 4: Lumogen® F Violett 570 (Fa. BASF; Naphthalimid-Fluoreszenzfarbstoff);
Farbstoff 5: Neopen® Gelb 075 (Fa. BASF; Solvent Yellow 162; Monoazofarbstoff);
Farbstoff 6: Neopen® Cyan 742 (Fa. BASF; Azamethinfarbstoff);
Farbstoff 6a: Neopen® Magenta 525 (Fa. BASF; Azamethinfarbstoff)
Farbstoff 6b: C.I. Solvent Red 49 (45170:1)(3',6'-Bis(diethylamino)fluoran;
Farbstoff 7: Neopen® Blau FF 4012 (Fa. BASF; Cu-Phthalocyaninfarbstoff);
Farbstoff 7a: Neopen® Blau 807 (Fa. BASF; Umsetzungsprodukt einer Mischung aus Cu-Phthalocyanin-trisulfochlorid und -tetrasulfochlorid mit 3-(2-Ethylhexoxy)propylamin);
Farbstoff 8: 5,9,14,28,23;27,32,36-Octabutoxy-2,3-naphthalocyanin (Fa. Aldrich);
Farbstoff 9: Ultraphor® SF-OO (Fa. BASF; o,o-Dicyanodistyrylbenzol);
Farbstoff 10: N-(n-Nonyl)perylen-3,4-dicarbonsäureimid;
Farbstoff 11: N-(2,6-Diisopropylphenyl)-1,6,9-tris(p-tert.butylphenoxy)perylen-3,4-dicarbonsäureimid

Farbstoff 5:

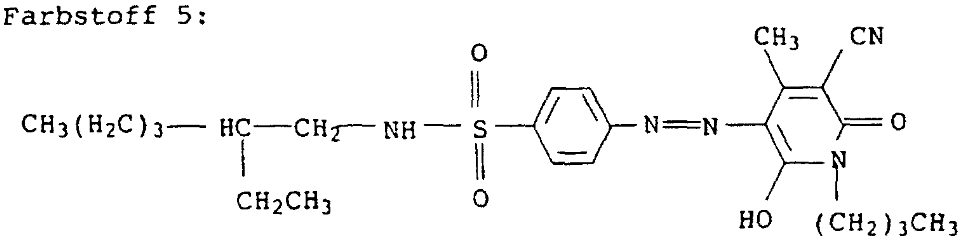

Farbstoff 6:

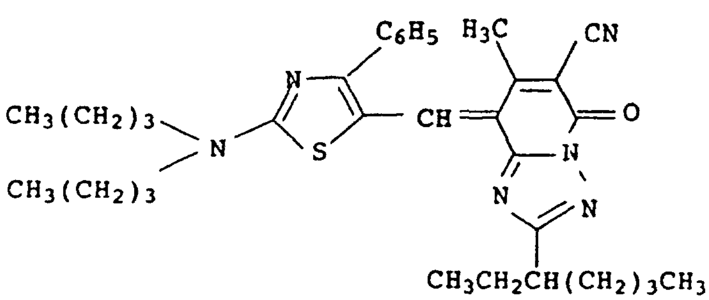

Farbstoff 6a:

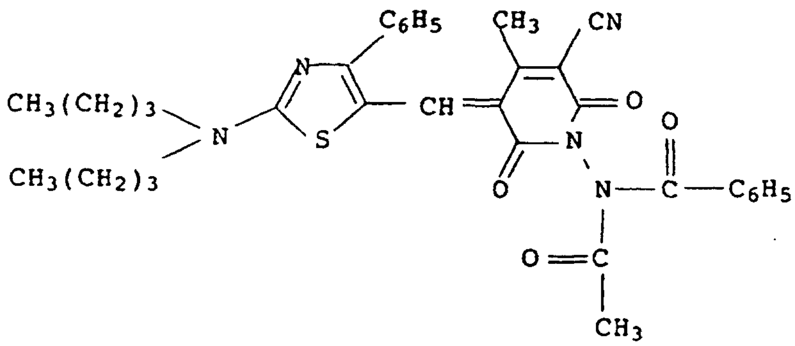

Erfindungsgemäß eingesetzte Farbstoffe 12a, 12b, 13, 14, 15a, 15b, 16, 17a, 17b, 18

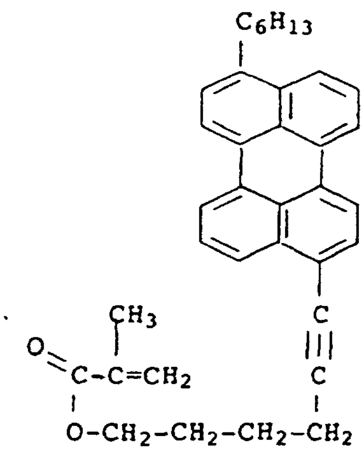

Farbstoff 12a

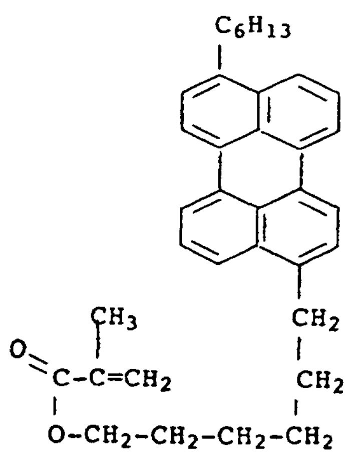

Farbstoff 12b

Farbstoff 13

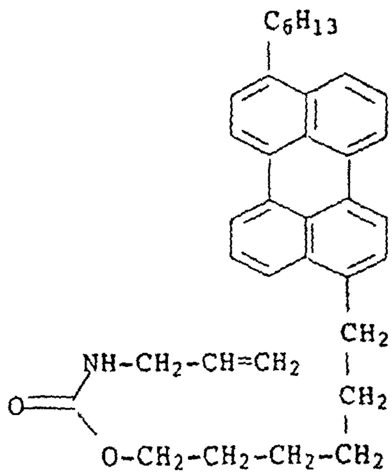

Farbstoff 14

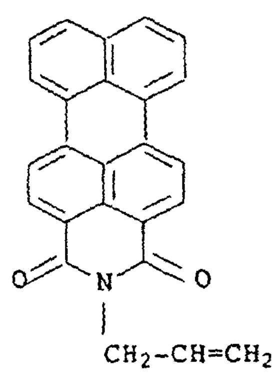

Farbstoff 15a

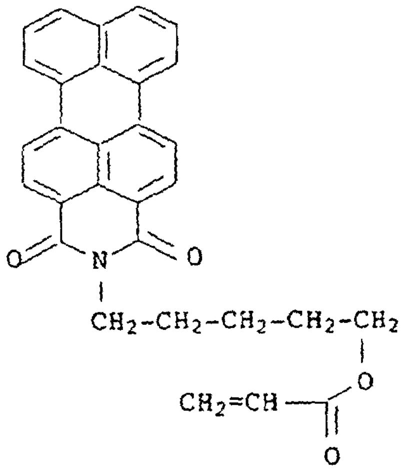

Farbstoff 15b

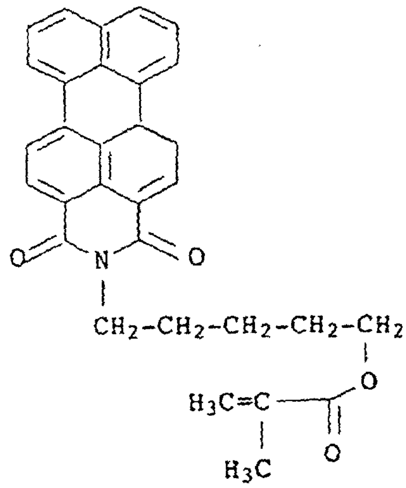

Farbstoff 16

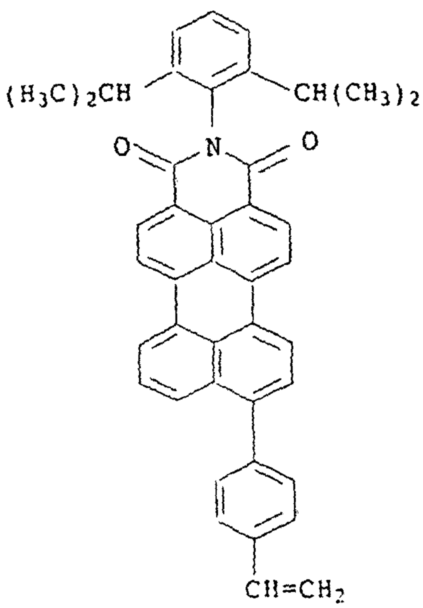

Farbstoff 17a

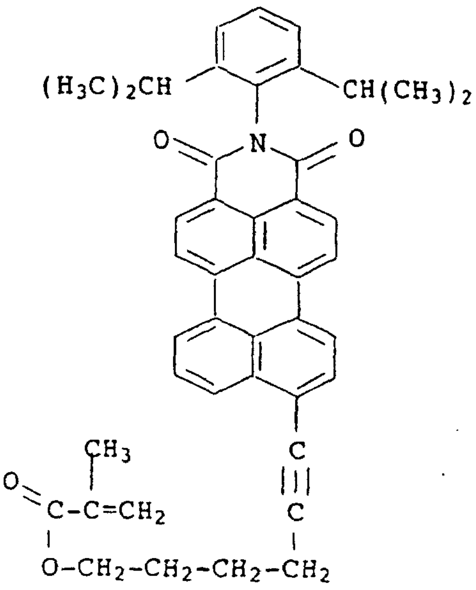

Farbstoff 17b

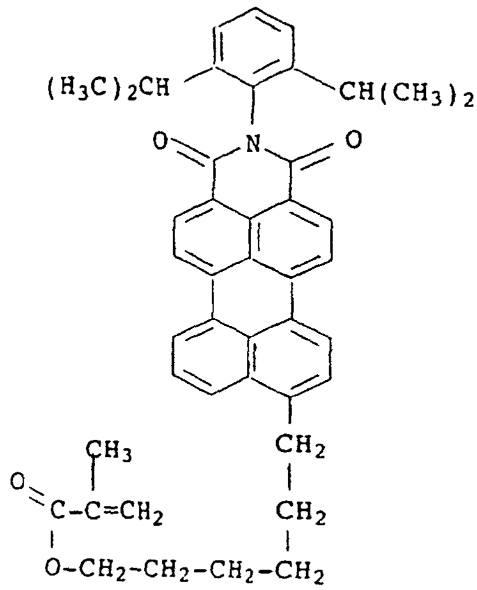

Farbstoff 18

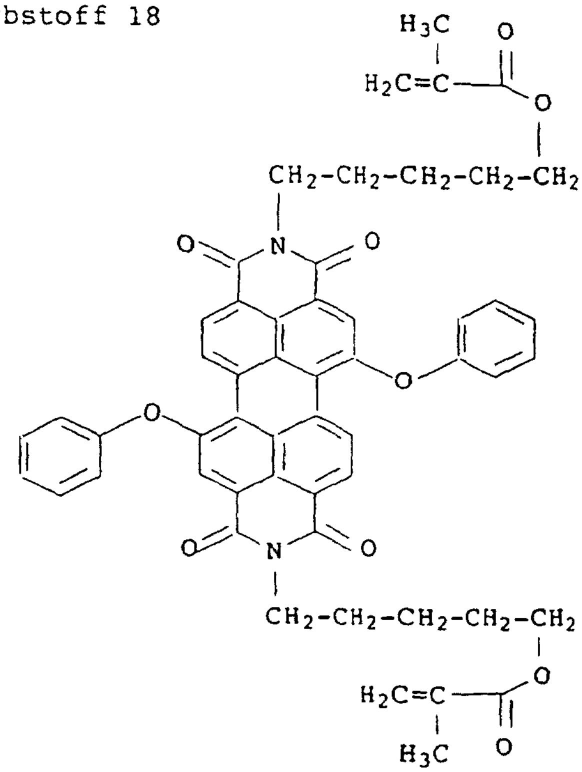

Herstellung der erfindungsgemäß eingesetzten Farbstoffe

Beispiel 1: Herstellung von N-Nonylperylen-3,4-dicarbonsäureimid (Farbstoff 10)

Eine Mischung aus 5g (15.5 mmol) Perylen-3,4-dicarbonsäureanhydrid (hergestellt nach Liebigs Ann. 1995, 1229-1244), 2.44 g (17 mmol) n-Nonylamin und 75 ml N-Methylpyrrolidon (NMP) wurde unter Stickstoff für 1.5 h auf

175 °C erhitzt. Nach dem Abkühlen auf Raumtemperatur wurde der entstandene Niederschlag abfiltriert, mit Methanol gewaschen und bei 80 °C im Vakuum getrocknet. Man erhielt 5.5 g (79 %) des gewünschten Produktes in Form dunkelroter Kristalle mit einem Schmelzpunkt von 201 °C.
Analytische Daten zu Farbstoff 10:
Elementaranalyse (Gew.-% ber./gef.): C: 83.2/83.3; H: 6.5/6.5; N: 3.1/3.1;
Masse (FD, 8 kV): m/z = 447 ($M^+$, 100 %);
UV/VIS ($CH_2Cl_2$): $\lambda_{max}$ ($\varepsilon$) = 482 (28791), 500 (32531) nm;
$^1H$-NMR (400 MHz, $CDCl_3$): $\delta$ = 8.02 (d, 2H), 7.82 (d, 2H), 7.70 (d, 2H), 7.59 (d, 2H), 7.51 (d, 2H), 4.05 (m, 2H), 1.78 (m, 2H), 1.45 (m, 2H), 1.34 (m, 10H), 0.90 (t, 3H) ppm; IR (KBr): $\nu$ = 1680 (s, C=O), 1650 (s, C=O) $cm^{-1}$.

Beispiel 2: Herstellung von N-(2,6-Diisopropylphenyl)-1,6,9-tris(p-tert.-butylphenoxy)perylen-3,4-dicarbonsäureimid (Farbstoff 11)

Eine Mischung aus 32.3 g (45 mmol) N-(2,6-Diisopropylphenyl)-1,6,9-tribromperylen-3,4-dicarbonsäureimid (hergestellt gemäß Beispiel 1a der WO 96/22 332), 27.0 g (180 mmol) p-tert.-Butylphenol, 16.6 g (120 mmol) wasserfreies, feinpulverisiertes Kaliumcarbonat und 1200 ml N-Methylpyrrolidon (NMP) wurde unter Rühren für 6 h auf 120 °C erhitzt. Nach dem Abkühlen auf Raumtemperatur wurde das Reaktionsgemisch unter Rühren in 4500 g einer wässrigen 6 gew.-%igen Salzsäure eingetragen, 2 h nachgerührt, der ausgefallene Feststoff abfiltriert, mit Wasser neutral gewaschen und bei 100 °C im Vakuum getrocknet. Die Filtration über eine kurze Kieselgelsäule mit Methylenchlorid als Eluens lieferte nach Entfernen des Lösungsmittels im Vakuum 38.9 g (93 %) des gewünschten Produktes in Form rotvioletter Kristalle mit einem Erweichungspunkt von 156 °C.
Analytische Daten zu Farbstoff 11:
Elementaranalyse (Gew.-% ber./gef.): C: 83.0/83.2; H: 6.9/6.8; N: 1.5/1.5;
Masse (FD, 8 kV): m/z = 926 ($M^+$, 100 %);
UV/VIS ($CH_2Cl_2$): $\lambda_{max}$ ($\varepsilon$) = 531 (38122) nm;
IR (KBr): $\nu$ = 1689 (s, C=O), 1652 (s, C=O) $cm^{-1}$.

Beispiel 3: Herstellung von 3-Hexyl-9(10)-(6-methacryloxy-1-hexinyl)perylen (Farbstoff 12a)

1g (2.3 mmol) 3-Hexyl-9(10)-(6-hydroxy-1-hexinyl)perylen (hergestellt durch alkalische Verseifung von 3-(6-Acetoxy-1-hexinyl)-9(10)-hexylperylen gemäß Liebigs Ann./ Recueil 1997, 395-407) wurde in 60 ml trockenem Dioxan gelöst, unter Stickstoff auf 45 °C erwärmt, mit 0.75 ml Triethylamin und 0.52 ml Methacrylsäurechlorid versetzt, 4 h bei 45 °C gerührt, abermals mit 0.52 ml Methacrylsäurechlorid versetzt, weitere 12 h bei 45 °C gerührt, auf Raumtemperatur abgekühlt, mit 250 ml Wasser versetzt und mit insgesamt 350 ml Methylenchlorid extrahiert. Das Lösungsmittel wurde im Vakuum abdestilliert und der Rückstand mit Methylenchlorid als Eluens über Kieselgel chromatographiert. 790 mg (68 %) des gewünschten Produktes konnten nach Entfernen des Lösungsmittels im Vakuum als gelber, feinkristalliner Feststoff isoliert werden.
Analytische Daten zu Farbstoff 12a:
Elementaranalyse (Gew.-% ber./gef.): C: 86.4/86.3; H: 7.2/7.3;
Masse (FD, 8 kV): m/z = 500.4 ($M^+$, 100 %);
UV/VIS (Dioxan): $\lambda_{max}$ ($\varepsilon$) = 455 (29712) nm;
$^1H$-NMR (300 MHz, $CDCl_3$): $\delta$ = 8.25-8.00 (m, 4H), 7.89-7.85 (m, 2H), 7.49-7.41 (m, 2H), 7.33-7.26 (m, 2H), 6.12 (s, 1H), 5.57 (s, 1H), 4.23 (t, 2H), 3.04-2.95 (t, 2H), 2.82-2.67 (m, 4H), 1.98 (s, 3H), 1.94-1.83 (m, 4H), 1.78-1.40 (m, 6H), 0.97 (t, 3H) ppm.

Beispiel 4: Herstellung von 3-Hexyl-9(10)-(6-methacryloxyhexyl)perylen (Farbstoff 12b)

Die zu Beispiel 3 analoge Umsetzung von 3-Hexyl-9(10)-(6-hydroxyhexyl)perylen (hergestellt gemäß Liebigs Ann./Recueil 1997, 395-407) mit Methacrylsäurechlorid lieferte nach Chromatographie über Kieselgel mit Methylenchlorid als Eluens das gewünschte Produkt in Form dunkelgelber Kristalle in einer
Ausbeute von 74 %.
Analytische Daten zu Farbstoff 12b:
Elementaranalyse (Gew.-% ber./gef.): C: 85.7/85.8; H: 8.0/7.9;
Masse (FD, 8 kV): m/z = 504 ($M^+$, 100 %);
UV/VIS (Dioxan): $\lambda_{max}$ ($\varepsilon$) = 450 (30514) nm;
$^1H$-NMR (300 MHz, $CDCl_3$): $\delta$ = 8.25-8.04 (m, 4H), 7.87-7.85 (m, 2H), 7.53-7.45 (m, 2H), 7.33-7.25 (m, 2H), 6.14-6.10 (m, 1H), 5.58-5.57 (m, 1H), 4.19 (t, 2H), 3.00 (t, 4H), 1.98 (s, 3H), 1.78-1.40 (m, 16H), 0.97 (t, 3H) ppm;
$^{13}C$-NMR (75 MHz, $CDCl_3$): $\delta$ = 167.5, 138.4, 138.0, 133.0, 132.9, 132.1, 132.0, 129.7, 129.6, 128.8, 126.7, 126.6,

126.3, 126.2, 126.1, 125.2, 123.7, 123.6, 120.0, 119.6, 119.5, 64.8, 33.4, 33.2, 31.8, 30.6, 30.4, 29.6, 29.5, 28.7, 26.0, 22.7, 18.4, 14.2 ppm.

Beispiel 5: Herstellung von 3-(N-Allylaminocarbonyloxyhexyl)-9(10)-hexylperylen (Farbstoff 13)

1 g (2.29 mmol) 3-Hexyl-9(10)-(6-hydroxyhexyl)perylen (hergestellt gemäß Liebigs Ann./Recueil 1997, 395-407) und 0.57 g (6.87 mmol) Allylisocyanat wurden unter Schutzgas in 200 ml trockenem Toluol gelöst und unter Rühren für 12 h unter Rückfluss erhitzt. Nach dem Abkühlen auf Raumtemperatur und dem anschließenden Abdestillieren des Lösungsmittels wurde der feste Rückstand in wenig Methylenchlorid aufgenommen, unter Rühren auf Methanol gefällt, abfiltriert, mit Methanol gewaschen und getrocknet. Man erhielt 1.1 g (85 %) des gewünschten Produktes als gelbes Pulver mit einem Schmelzpunkt von 118 °C.
Analytische Daten zu Farbstoff 13:
Elementaranalyse (Gew.-% ber./gef.): C: 83.2/83.1; H: 7.9/8.0; N: 2.7/2.7;
Masse (FD, 8 kV): m/z = 519.4 ($M^+$, 100 %);
UV/VIS (Dioxan): $\lambda_{max}$ ($\varepsilon$) = 450 (30548) nm;
$^1$H-NMR (300 MHz, $CDCl_3$): $\delta$ = 8.20-8.00 (m, 4H), 7.90-7.80 (m, 2H), 7.55-7.45 (m, 2H), 7.35-7.30 (m, 2H), 5.90-5.76 (m, 1H), 5.20-5.05 (m, 2H), 4.10-4.00 (t, 2H), 3.80-3.70 (m, 2H), 3.00 (t, 4H), 1.85-1.25 (m, 16H), 0.90 (t, 3H) ppm;
$^{13}$C-NMR (125 MHz, $CDCl_3$): $\delta$ = 139.5, 139.4, 139.1, 139.0, 136.8, 133.9, 132.9, 130.6, 129.7, 127.6, 127.1, 126.9, 124.4, 124.0, 120.8, 120.4, 114.9, 64.7, 54.7, 46.2, 44.0, 43.4, 34.0, 33.9, 32.6, 31.5, 30.5, 30.3, 30.1, 26.7, 23.5, 14.3 ppm.

Beispiel 6: Herstellung von N-Allylperylen-3,4-dicarbonsäureimid (Farbstoff 14)

Eine Mischung aus 5g (15.5 mmol) Perylen-3,4-dicarbonsäureanhydrid (hergestellt nach Liebigs Ann. 1995, 1229-1244), 11.4 g (0.2 mol) Allylamin und 1200 ml N-Methylpyrrolidon wurde in einem 2 l - Autoklaven für 7 h auf 85 °C erhitzt, auf Raumtemperatur abgekühlt, entspannt, das Lösungsmittel auf ca. 25 % des ursprünglichen Volumens eingeengt und die Fällung des Rohproduktes durch Zusatz der vierfachen Menge an Methanol vervollständigt. Der gebildete Niederschlag wurde durch Filtration isoliert, mit Methanol gewaschen und bei 60°C im Vakuum getrocknet. Die chromatographische Auftrennung über Kieselgel mit Chloroform/Methanol 40:1 als Eluens, gefolgt von einer zweifachen Rekristallisation aus Chloroform lieferte 4.83 g (86 %) des gewünschten Endproduktes in Form braunroter Kristalle, die sich bei Temperaturen oberhalb von 260 °C zersetzten.
Analytische Daten zu Farbstoff 14:
Elementaranalyse (Gew.-% ber./gef.): C: 83.1/82.9; H: 4.2/4.2; N: 3.9/3.9;
Masse (FD, 8 kV): m/z = 361 ($M^+$, 100 %);
UV/VIS ($CH_2Cl_2$): $\lambda_{max}$ ($\varepsilon$) = 485 (33852), 502 (37056) nm;
$^1$H-NMR (400 MHz, DMSO-$d_6$): $\delta$ = 8.10 (d, 2H), 7.75 (d, 2H), 7.71 (d, 2H), 7.40 (t, 2H), 7.25 (d, 2H), 5.98 (m, 1H), 5.17 (dd, 2H), 4.22 (d, 2H) ppm;
IR (KBr): $\nu$ = 1680 (s, C=O), 1651 (s, C=O) $cm^{-1}$.

Beispiel 7: Herstellung von N-(5-Acryloxypentyl)perylen-3,4-dicarbonsäureimid (Farbstoff 15a)

1. Eine Mischung aus 10 g (31 mmol) Perylen-3,4-dicarbonsäureanhydrid (hergestellt nach Liebigs Ann. 1995, 1229-1244), 3.6 g (35 mmol) 5-Amino-1-pentanol und 250 ml NMP wurde für 1.5 h unter Stickstoff auf 175 °C erwärmt. Nach dem Abkühlen auf Raumtemperatur wurde der ausgefallene rotbraune Niederschlag abfiltriert, mit Methanol gewaschen und bei 100°C im Vakuum getrocknet. Man erhielt 9.0 g (71 %) N-(5-Hydroxypentyl)perylen-3,4-dicarbonsäureimid in Form eines braunroten Pulvers mit einem Schmelzpunkt von 274 - 276 °C.
Analytische Daten zu N-(5-Hydroxypentyl)perylen-3,4-dicarbonsäureimid:
Elementaranalyse (Gew.-% ber./gef.): C: 79.6/79.4; H: 5.2/5.2; N: 3.4/3.4;
Masse (FD, 8 kV): m/z = 407.2 ($M^+$, 100 %);
UV/VIS ($CH_2Cl_2$): $\lambda_{max}$ ($\varepsilon$) = 482 (30101), 507 (33006) nm;
$^1$H-NMR (500 MHz, $C_2D_2Cl_4$): $\delta$ = 8.52 (d, 2H), 8.34 (d, 2H), 8.32 (d, 2H), 7.86 (d, 2H), 7.52 (t, 2H), 4.15 (t, 2H), 3.61 (t, 2H), 1.78 (m, 2H), 1.62 (m, 2H), 1.48 (m, 2H) ppm;
IR (KBr): $\nu$ = 1680 (s, C=O), 1650 (s, C=O) $cm^{-1}$.

2. 2 g (5 mmol) N-(5-Hydroxypentyl)perylen-3,4-dicarbonsäureimid aus 1. wurden unter Stickstoff in 60 ml Pyridin unter Erwärmen auf 80 °C gelöst, auf 65°C gekühlt und bei dieser Temperatur tropfenweise mit einer Lösung von

0.81 ml (10 mmol) Acrylsäurechlorid in 30 ml wasserfreiem Dioxan versetzt. Es wurde für weitere 1.5 h bei 65 °C gerührt, das Lösungsmittel destillativ entfernt, der Rückstand mit 20 ml Chloroform aufgenommen, filtriert, das Filtrat mit 100 ml Hexan versetzt und das ausgefallene Produkt durch Filtration isoliert. Die Chromatographie über eine kurze Kieselgelsäule mit Methylenchlorid als Eluens lieferte 1.5 g (65 %) des gewünschten Produktes als braurotes, bei Erwärmen stark zur
Polymerisation neigendes Pulver.
Analytische Daten zu Farbstoff 15a:
Elementaranalyse (Gew.-% ber./gef.): C: 78.1/78.2; H: 5.0/5.0; N: 3.0/3.0;
Masse (FD, 8 kV): m/z = 461.3 ($M^+$, 100 %);
UV/VIS ($CH_2Cl_2$): $\lambda_{max}$ ($\varepsilon$) = 484 (29711), 505 (31976) nm;
$^1$H-NMR (400 MHz, $CDCl_3$): $\delta$ = 8.00 (d, 2H), 7.88 (d, 2H), 7.71 (d, 2H), 7.62 (d, 2H), 7.32 (t, 2H), 6.21 (m, 1H), 5.82 (m, 1H), 5.58 (m, 1H), 4.19 (t, 2H), 4.10 (t, 2H), 1.81 (m, 4H), 1.58 (m, 2H) ppm;
IR (KBr): $\nu$ = 1731 (s, C=O, Acrylester) 1680 (s, C=O, Imid), 1651 (s, C=O, Imid) $cm^{-1}$.

Beispiel 8: Herstellung von N-(5-Methacryloxypentyl)perylen-3,4-dicarbonsäureimid (Farbstoff 15b)

2 g (5 mmol) N-(5-Hydroxypentyl)perylen-3,4-dicarbonsäureimid aus Beispiel 7, 1. wurden unter Stickstoff in 60 ml Pyridin unter Erwärmen auf 80 °C gelöst und bei dieser Temperatur tropfenweise mit einer Lösung von 0.97 ml (10 mmol) Methacrylsäurechlorid in 30 ml wasserfreiem Dioxan versetzt. Es wurde für weitere 1.5 h bei 80 °C gerührt, das Lösungsmittel destillativ entfernt, der Rückstand mit 30 ml Chloroform aufgenommen, filtriert, das Filtrat mit 100 ml Hexan versetzt und das ausgefallene Produkt durch Filtration isoliert. Nach der chromatographischen Reinigung über eine kurze Kieselgelsäule mit Methylenchlorid als Eluens erhielt man 1.6 g (70 %) des gewünschten Produktes als braunrotes Pulver.
Analytische Daten zu Farbstoff 15b:
Elementaranalyse (Gew.-% ber./gef.): C: 78.3/78.3; H: 5.3/5.3; N: 2.9/2.9;
Masse (FD, 8 kV): m/z = 475.3 ($M^+$, 100 %);
UV/VIS ($CH_2Cl_2$): $\lambda_{max}$ ($\varepsilon$) = 486 (29133), 507 (31342) nm;
$^1$H-NMR (400 MHz, $CDCl_3$): $\delta$ = 8.00 (d, 2H), 7.88 (d, 2H), 7.71 (d, 2H), 7.62 (d, 2H), 7.32 (t, 2H), 6.12 (m, 1H), 5.55 (m, 1H), 4.21 (t, 2H), 4.10 (t, 2H), 1.98 (s, 3H), 1.81 (m, 4H), 1.58 (m, 2H) ppm;
IR (KBr): $\nu$ = 1734 (s, C=O, Acrylester), 1681 (s, C=O, Imid), 1650 (s, C=O, Imid) $cm^{-1}$.

Beispiel 9: Herstellung von N-(2,6-Diisopropylphenyl)-9-(p-styryl)perylen-3,4-dicarbonsäureimid (Farbstoff 16)

Eine Mischung aus 5 g (9 mmol) 9-Brom-N-(2,6-diisopropylphenyl)perylen-3,4-dicarbonsäureimid (hergestellt analog Beispiel 6a der WO 96/22 332 mit N-(2,6-Diisopropylphenyl)perylen-3,4-dicarbonsäureimid aus Beispiel 28 der WO 97/22 607 als Ausgangsmaterial), 1.6 g (10.8 mmol) p-Styrolboronsäure, 0.9 g $Pd(PPh_3)_4$, 100 ml einer 2N Kaliumcarbonatlösung und 500 ml Toluol wurde unter Rühren in einer Argonatmosphäre für 12 h auf Rückflusstemperaturen (115-120 °C) erhitzt, nach dem Abkühlen auf Eis gefällt, die organische Phase abgetrennt, die wässrige mit 2 mal 200 ml Methylenchlorid extrahiert und die vereinigten organischen Phasen über Kaliumsulfat getrocknet. Anschließend entfernte man das Lösungsmittel im Vakuum, nahm den Rückstand in möglichst wenig Methylenchlorid auf. Aus dieser Lösung wurde das Produkt durch Zusatz von Methanol gefällt. Die chromatographische Reinigung über Kieselgel mit Methylenchlorid als Eluens lieferte 4.89 g (93 %) des gewünschten Produktes als leuchtendroten, kristallinen Feststoff mit einem Schmelzpunkt von >300 °C.
Analytische Daten zu Farbstoff 16:
Elementaranalyse (Gew.-% ber./gef.): C: 86.4/86.3; H: 5.7/5.7; N: 2.4/2.4;
Masse (FD, 8 kV): m/z = 584 ($M^+$, 100 %);
UV/VIS (Dioxan): $\lambda_{max}$ ($\varepsilon$) = 502 (41901), 519 (41062) nm;
$^1$H-NMR (300 MHz, $CDCl_3$): $\delta$ = 8.63 (d, 2H), 8.47-8.41 (m, 4H), 8.01 (d, 1H), 7.59-7.45 (m, 7H), 7.33 (d, 2H), 6.85-6.80 (m, 1H), 5.87 (d, 1H), 5.35 (d, 1H), 2.79-2.74 (m, 2H), 1.18 (d, 12 H) ppm;
$^{13}$C-NMR (75 MHz, $CDCl_3$): $\delta$ = 165.3, 147.2, 144.4, 140.8, 138.9, 138.7, 138.6, 137.5, 133.8, 133.2, 132.3, 131.7, 131.6, 131.4, 130.6, 130.5, 129.7, 129.6, 129.4, 128.2, 128.1, 127.6, 125.2, 125.1, 124.7, 122.2, 122.1, 121.5, 121.2, 115.9, 93.1, 30.3, 25.2 ppm.
IR (KBr): $\nu$ = 1692 (s, C=O), 1655 (s, C=O) $cm^{-1}$.

Beispiel 10: Herstellung von N-(2,6-Diisopropylphenyl)-9-(6-methacryloxy-1-hexinyl)perylen-3,4-dicarbonsäureimid (Farbstoff 17a)

1. 2.0 g (3.56 mmol) 9-Brom-N-(2,6-diisopropylphenyl)perylen-3,4-dicarbonsäureimid (hergestellt analog Beispiel 6a der WO 96/22 332 mit N-(2,6-Diisopropylphenyl)perylen-3,4-dicarbonsäureimid aus Beispiel 28 der WO 97/22 607 als Ausgangsmaterial) wurden unter Schutzgas in 500 ml einer Mischung aus einem Volumenteil absolutem Tetrahydrofuran (THF) und einem Volumenteil trockenem Piperidin gelöst, nacheinander mit 4 mol-% $Pd(PPh_3)_4$ (164 mg, 0.14 mmol), 5 mol-% CuI (32 mg, 0.18 mmol) und 1.14 g (7.12 mmol) 6-Acetoxy-1-hexin versetzt, langsam auf 70 °C erhitzt und 1 h bei dieser Temperatur gehalten. Nach dem Abkühlen auf Raumtemperatur wurde die Reaktionsmischung auf das dreifache Volumen eines Gemisches aus Eis und konzentrierter Salzsäure im Volumenverhältnis 3:1 gegeben, die organische Phase abgetrennt, die wässrige 3 mal mit jeweils 200 ml Methylenchlorid extrahiert, die vereinigten organischen Extrakte über Magnesiumsulfat getrocknet und das Lösungsmittel im Vakuum entfernt. Die Chromatographie an Kieselgel mit Methylenchlorid als Eluens lieferte 1.98 g (90 %) N-(2,6-Diisopropylphenyl-9-(6-acetoxy-1-hexinyl)perylen-3,4-dicarbonsäureimid als rotes Pulver mit einem Schmelzpunkt > 300 °C.
Analytische Daten zu N-(2,6-Diisopropylphenyl-9-(6-acetoxy-1-hexinyl)perylen-3,4-dicarbonsäureimid:
Elementaranalyse (Gew.-% ber./gef.): C: 81.4/81.2; H: 6.0/6.1; N: 2.3/2.3;
Masse (FD, 8 kV): m/z = 619.5 ($M^+$, 100 %);
UV/VIS (Dioxan): $\lambda_{max}$ ($\varepsilon$) = 492 (45955), 519 (49298) nm;
$^1$H-NMR (300 MHz, $CDCl_3$): $\delta$ = 8.61 (d, 2H), 8.38-8.24 (m, 5H), 7.64 (d, 2H), 7.47 (t, 1H), 7.33 (d, 2H), 4.18 (t, 2H), 2.79-2.74 (m, 2H), 2.67 (t, 2H), 2.07 (s, 3H), 1.93-1.82 (m, 4H), 1.16 (d, 12H) ppm;
$^{13}$C-NMR (125 MHz, $CDCl_3$): $\delta$ = 170.0, 162.9, 144.7, 136.3, 133.4, 131.0, 130.9, 130.1, 130.0, 128.4, 128.3, 128.2, 127.7, 126.7, 126.4, 125.7, 123.6, 123.1, 123.0, 122.1, 120.1, 119.4, 119.3, 97.4, 78.1, 63.0, 28.2, 24.3, 23.0, 20.0, 18.6, 17.1 ppm.

2. Ein Gemisch aus 1.98 g (3.2 mmol) N-(2,6-Diisopropylphenyl-9-(6-acetoxy-1-hexinyl)perylen-3,4-dicarbonsäureimid, 2.2 g (38 mmol) Kaliumhydroxid, 400 ml Isopropanol und 250 ml Wasser wurde 12 h zum Rückfluss erhitzt, durch Abdestillieren des organischen Solvens aufkonzentriert und mittels eiskalter verdünnter Salzsäure angesäuert. Der ausgefallene Niederschlag wurde abgetrennt und aus Eisessig umkristallisiert.
Man erhielt 1.8 g (97 %) N-(2,6-Diisopropylphenyl)-9-(6-hydroxy-1-hexinyl)perylen-3,4-dicarbonsäureimid als rotes Pulver mit einem Schmelzpunkt > 300 °C.
Analytische Daten zu N-(2,6-Diisopropylphenyl-9-(6-hydroxy-1-hexinyl)perylen-3,4-dicarbonsäureimid:
Elementaranalyse (Gew.-% ber./gef.): C: 83.2/83.3; H: 6.1/6.1; N: 2.4/2.4;
Masse (FD, 8 kV): m/z = 577.5 ($M^+$, 100 %);
UV/VIS (Dioxan): $\lambda_{max}$ ($\varepsilon$) = 492 (46203), 519 (50125) nm;
$^1$H-NMR (300 MHz, $CDCl_3$): $\delta$ = 8.61 (d, 2H), 8.37-8.21 (m, 5H), 7.66-7.57 (m, 2H), 7.47 (t, 1H), 7.33 (d, 2H), 3.78-3.74 (m, 2H), 3.66-3.61 (m, 2H), 2.67 (t, 2H), 1.86-1.82 (m, 4H), 1.14 (d, 12H) ppm;
$^{13}$C-NMR (125 MHz, $CDCl_3$): $\delta$ = 163.9, 145.6, 137.1, 136.7, 134.1, 131.8, 131.7, 130.9, 130.7, 130.3, 129.4, 129.1, 128.4, 127.5, 127.0, 126.5, 124.6, 123.9, 122.9, 120.8, 120.1, 98.8, 78.8, 62.3, 32.0, 29.1, 25.1, 23.9, 19.7 ppm.

3. Eine Lösung von 1 g (1.72 mmol) N-(2,6-Diisopropylphenyl)-9-(6-hydroxy-1-hexinyl)perylen-3,4-dicarbonsäureimid in 100 ml trockenem Dioxan wurde unter Stickstoff auf 45 °C erwärmt, mit 0.4 ml Triethylamin und 0.28 ml Methacrylsäurechlorid versetzt, 4 h bei 45°C gerührt, abermals mit 0.28 ml Methacrylsäurechlorid versetzt, weitere 12 h bei 45 °C gerührt, auf Raumtemperatur abgekühlt, mit 200 ml Wasser versetzt und mit insgesamt 400 ml Methylenchlorid extrahiert. Das Lösungsmittel wurde im Vakuum abdestilliert und der Rückstand mit Methylenchlorid als Eluens über Kieselgel chromatographiert. 800 mg (78 %) des gewünschten Produktes konnten nach Entfernen des Lösungsmittels im Vakuum als roter, feinkristalliner Feststoff isoliert werden.
Analytische Daten zu Farbstoff 17a:
Elementaranalyse (Gew.-% ber./gef.): C: 81.8/81.6; H: 6.1/6.1; N: 2.2/2.2;
Masse (FD, 8 kV): m/z = 645.5 ($M^+$, 100 %);
UV/VIS (Dioxan): $\lambda_{max}$ ($\varepsilon$) = 492 (48287), 519 (50034) nm;
$^1$H-NMR (300 MHz, $CDCl_3$): $\delta$ = 8.61-8.56 (m, 2H), 8.33-8.17 (m, 5H), 7.63-7.55 (m, 2H), 7.46 (t, 1H), 7.33 (d, 2H), 6.13 (s, 1H), 5.56 (s, 1H), 4.27 (t, 2H), 2.82-2.66 (m, 4H), 1.96 (s, 3H), 1.95-1.84 (m, 4H), 1.19 (d, 12 H) ppm;
$^{13}$C-NMR (75 MHz, $CDCl_3$): $\delta$ = 167.5, 163.9, 145.7, 137.2, 136.9, 136.4, 134.2, 131.9, 131.8, 131.1, 130.9, 130.4, 129.4, 129.2, 128.6, 127.6, 127.5, 127.2, 126.6, 125.4, 124.6, 124.0, 123.0, 120.9, 120.3, 120.2, 98.5, 79.1, 64.2,

29.2, 28.1, 25.4, 24.0, 19.6, 18.3, 17.9 ppm;
IR (KBr): ν = 1733 (s, C=O, Acrylester), 1696 (s, C=O, Imid), 1654 (s, C=O, Imid) $cm^{-1}$.

Beispiel 11: Herstellung von N-(2,6-Diisopropylphenyl)-9-(6-methacryloxyhexyl)perylen-3,4-dicarbonsäureimid (Farbstoff 17b)

Die Reduktion von 2 g (3.2 mmol) N-(2,6-Diisopropylphenyl-9-(6-acetoxy-1-hexinyl)perylen-3,4-dicarbonsäureimid (vergl. Beispiel 10, 1.) gemäß der in Liebigs Ann./Recueil 1997, 395-407 für Alkinylperylene angegebenen Hydrierungsvorschrift lieferte in quantitativer Ausbeute das entsprechende Acetoxyhexylderivat, welches gemäß Beispiel 10, 2. in 98 %-iger Ausbeute zu N-(2,6-Diisopropylphenyl)-9-(6-hydroxyhexyl)perylen-3,4-dicarbonsäureimid verseift werden konnte. Dessen Umsetzung mit Methacrylsäurechlorid gemäß Beispiel 10, 3. lieferte in 81 %-iger Ausbeute das gewünschte Produkt als roten, amorphen Feststoff.
Analytische Daten zu Farbstoff 17b:
Elementaranalyse (Gew.-% ber./gef.): C: 81.3/81.2; H: 6.7/6.8; N: 2.15/2.1;
Masse (FD, 8 kV): m/z = 649.5 ($M^+$, 100 %);
UV/VIS (Dioxan): $\lambda_{max}$ (ε) = 489 (48003), 511 (49732) nm;
$^1$H-NMR (300 MHz, $CDCl_3$): δ = 8.61-8.52 (m, 2H), 8.38-8.21 (m, 5H), 7.63-7.55 (m, 2H), 7.49 (t, 1H), 7.34 (d, 2H), 6.12 (s, 1H), 5.58 (s, 1H), 4.21 (t, 2H), 3.00 (t, 2H), 2.80 (m, 2H), 1.97 (s, 3H), 1.81-1.44 (m, 8H), 1.19 (d, 12 H) ppm;
$^{13}$C-NMR (75 MHz, $CDCl_3$): δ = 167.3, 163.8, 145.6, 137.0, 136.9, 136.3, 134.4, 131.7, 131.6, 131.1, 130.9, 130.6, 129.5, 129.1, 128.4, 127.8, 127.2, 127.1, 126.6, 125.4, 124.6, 124.0, 123.0, 120.9, 120.3, 120.2, 64.2, 33.7, 31.0, 29.2, 28.1, 25.4, 24.0, 19.6, 18.3, 17.9 ppm;
IR (KBr): ν = 1735 (s, C=O, Acrylester), 1696 (s, C=O, Imid), 1656 (s, C=O, Imid) $cm^{-1}$.

Beispiel 12: Herstellung von N,N'-Bis(5-methacryloxypentyl)-1,7-diphenoxyperylen-3,4:9,10-tetracarbonsäurediimid (Farbstoff 18)

1. Eine Mischung aus 5 g (8.6 mmol) 1,7-Diphenoxyperylen-3,4:9,10-tetracarbonsäuredianhydrid (aus PCT/EP96/05519), 2.1 g (20 mmol) 5-Amino-1-pentanol und 75 ml N-Methylpyrrolidon wurde für 1.5 h unter Stickstoff auf 175 °C erwärmt. Nach dem Abkühlen auf Raumtemperatur wurde der ausgefallene tiefviolette Niederschlag abfiltriert, mit viel Methanol gewaschen und bei 100 °C im Vakuum getrocknet. Man erhielt 5.9 g (92 %) N,N'-Bis(5-hydroxypentyl)-1,7-diphenoxyperylen-3,4:9,10-tetracarbonsäurediimid in Form eines schwarzvioletten Pulvers mit einem Schmelzpunkt von > 300 °C.
Analytische Daten zu N,N'-Bis(5-hydroxypentyl)-1,7-diphenoxyperylen-3,4:9,30-tetracarbonsäurediimid:
Elementaranalyse (Gew.-% ber./gef.): C: 74.0/73.8; H: 5.1/5.1; N: 3.75/3.7;
Masse (FD, 8 kV): m/z = 746.4 ($M^+$, 100 %);
UV/VIS ($CH_2Cl_2$): $\lambda_{max}$ (ε) = 404 (8312), 515 (38122), 550 (57103) nm;
IR (KBr): ν = 1695 (s, C=O), 1653 (s, C=O) $cm^{-1}$.

2. 2.8 g (3.8 mmol) N,N'-Bis(5-hydroxypentyl)-1,7-diphenoxyperylen-3,4:9,10-tetracarbonsäurediimid aus 1. wurden in 75 ml Pyridin gelöst, unter Stickstoff auf 80 °C erwärmt und bei dieser Temperatur tropfenweise mit einer Lösung von 1.5 ml (15.2 mmol) Methacrylsäurechlorid in 20 ml wasserfreiem Dioxan versetzt. Es wurde für weitere 1.5 h bei 80 °C gerührt, das Lösungsmittel destillativ entfernt, der Rückstand mit wenig (ca. 20 ml) Chloroform aufgenommen, filtriert, das Filtrat mit ca. 100 ml Hexan versetzt und das ausgefallene Produkt durch Filtration isoliert. Die Chromatographie über eine kurze Kieselgelsäule mit Methylenchlorid als Eluens lieferte 1.5 g (45 %) des gewünschten Produktes als schwarzviolettes, bei Erwärmen zur Polymerisation neigendes Pulver.
Analytische Daten zu Farbstoff 18:
Elementaranalyse (Gew.-% ber./gef.): C: 73.45/73.4; H: 5.25/5.2; N: 3.2/3.2;
Masse (FD, 8 kV): m/z = 483 ($M^+$, 100 %);
UV/VIS ($CH_2Cl_2$): $\lambda_{max}$ (ε) = 403 (8111), 514 (37001), 549 (55865) nm;
$^1$H-NMR (200 MHz, $CDCl_3$): δ = 9.53 (d, 2H), 8.56 (d, 2H), 8.28 (s, 2H), 7.48 (m, 4H), 7.28 (m, 2H), 7.16 (m, 4H), 6.08 (m, 2H), 5.51 (m, 2H), 4.16 (m, 8H), 1.92 (s, 6H), 1.81 (m, 8H), 1.53 (m, 4H) ppm;
IR (KBr): ν = 1734 (s, C=O, Acrylester), 1694 (s, C=O, Imid), 1654 (s, C=O, Imid) $cm^{-1}$.

III. Herstellung der erfindungsgemäß eingesetzten Monomeremulsion (allgemeine Herstellungsvorschrift)

In einem Reaktionsgefäß mit Rührer wurde eine wässrige Emulgatorlösung vorgelegt (Vorlage). Die Bestandteile dieser Lösung sind in Tabelle 1 angegeben. Hierzu gab man innerhalb 2 Minuten eine Lösung des jeweiligen Farbstoffs in den zu polymerisierenden Monomeren (Monomer/Farbstofflösung). Die Bestandteile dieser Lösung sind in Tabelle 1 angegeben. Anschließend rührte man weitere 10 Minuten. Die dabei resultierenden, konventionellen, farbstoffhaltigen Monomeremulsionen wurden anschließend wie folgt zu einer wässrigen Monomermikroemulsion mittels Ultraschall homogenisiert:

Als Ultraschallquelle diente ein Branson-Sonifier II 450. Unter Rühren wurde jeweils 1 Liter der wässrigen Makroemulsion 5 Minuten mit der Einstellung duty cycle 25 %, output control 10, und jeweils 10 Minuten mit duty cycle 100 % und output control 10 beschallt. Hierbei wurden wässrige, farbstoffhaltige Miniemulsionen erhalten. Die Tröpfchengrößen dieser Mini-Emulsionen ($\bar{d}_z$-Werte) sind in Tabelle 2 angegeben.

IV. Herstellung der erfindungsgemäßen Polymerisatdispersionen

Die nach III erhältlichen Miniemulsionen wurden in einem Polymerisationsgefäß vorgelegt und auf 85 °C erwärmt. Hierzu gab man unter Rühren auf einmal eine Lösung von Natriumperoxodisulfat in Wasser (Initiatorlösung). Die Zusammensetzung der Initiatorlösung ist in Tabelle 1 angegeben. Nach Beendigung der Initiatorzugabe ließ man 2,5 Stunden bei 80 - 85 °C unter Rühren nachreagieren und kühlte dann auf 25 °C ab. Die Eigenschaften der so erhaltenen wässrigen Polymerisatdispersionen sowie die Koloristik der aus ihnen durch Gefriertrocknung gewonnenen, farbigen Polymerpulver sind in Tabelle 2 zusammengefasst.

Tabelle 1

| Bsp. | Vorlage | | Monomer-/Farbstofflösung | | | | | Initiatorlösung | |
|---|---|---|---|---|---|---|---|---|---|
| | $H_2O$ (g) | Emulgator Typ[1]/(g) | Farbstoff Nr. / (g) | SA[2] (g) | S[3] (g) | MMA[4] (g) | Vernetzer Typ[5] / (g) | $H_2O$ (g) | NPS[6] (g) |
| 13 | 403 | A / 4.0 | 1 / 1.0 | 5 | 95 | - | a / 2 | 10 | 0.5 |
| 14 | 415 | A / 4.0 | 1 / 1.0 | 5 | 95 | - | a / 5 | 10 | 0.5 |
| 15 | 403 | A / 4.0 | 2 / 1.0 | 5 | 95 | - | a / 2 | 10 | 0.5 |
| 16 | 415 | A / 4.0 | 2 / 1.0 | 5 | 95 | - | a / 5 | 10 | 0.5 |
| 17 | 415 | A / 4.0 | 2 / 2.0 | 5 | 95 | - | a / 5 | 10 | 0.5 |
| 18 | 403 | A / 4.0 | 2 / 1.0 | 5 | 95 | - | c / 2 | 10 | 0.5 |
| 19 | 403 | A / 4.0 | 3 / 1.0 | 5 | 95 | - | a / 2 | 10 | 0.5 |
| 20 | 415 | A / 4.0 | 3 / 1.0 | 5 | 95 | - | a / 5 | 10 | 0.5 |
| 21 | 403 | A / 4.0 | 3 / 1.0 | 5 | 95 | - | b / 2 | 10 | 0.5 |
| 22 | 403 | A / 4.0 | 3 / 1.0 | 5 | 95 | - | c / 2 | 10 | 0.5 |
| 23 | 1162 | A / 11.2 | 3 / 2.8 | 14 | 266 | - | a / 14 | 28 | 1.4 |

Fortsetung Tabelle 1:

| | | | | | | | | | |
|---|---|---|---|---|---|---|---|---|---|
| 24 | 1173 | A / 11.2 | 3 / 5.6 | 14 | 266 | - | a / 14 | 28 | 1.4 |
| 25 | 407 | A / 4.0 | 3 / 1.0 | 5 | - | 95 | a / 5 | 20 | 1.0 |
| 26 | 411 | B / 2.0 | 3 / 1.0 | 5 | - | 95 | a / 5 | 20 | 1.0 |
| 27 | 411 | C / 2.1 | 3 / 1.0 | 5 | - | 95 | a / 5 | 20 | 1.0 |
| 28 | 977 | A / 9.6 | 3 / 2.4 | 12 | - | 228 | a / 12 | 48 | 2.4 |
| 29 | 616.5 | A / 6.0 | 3 / 3.0 | 7.5 | - | 142.5 | a / 7.5 | 30 | 1.5 |
| 30 | 1153 | A / 11.2 | 4 / 0.56 | 14 | 266 | - | a / 14 | 28 | 1.4 |
| 31 | 1156 | A / 11.2 | 4 / 1.4 | 14 | 266 | - | a / 14 | 28 | 1.4 |
| 32 | 788.5 | A / 7.6 | 4 / 1.9 | 9.5 | 180.5 | - | a / 9.5 | 19 | 0.95 |
| 33 | 419 | A / 4.0 | 4 / 2.0 | 5 | 95 | - | a / 5 | 10 | 0.5 |
| 34 | 610.5 | A / 6.0 | 5 / 1.5 | 7.5 | - | 142.5 | a / 7.5 | 30 | 1.5 |
| 35 | 616.5 | B / 3.0 | 5 / 1.5 | 7.5 | - | 142.5 | a / 7.5 | 30 | 1.5 |
| 36 | 616 | C / 3.2 | 5 / 1.5 | 7.5 | - | 142.5 | a / 7.5 | 30 | 1.5 |
| 37 | 610.5 | A / 6.0 | 6 / 1.5 | 7.5 | - | 142.5 | a / 7.5 | 30 | 1.5 |
| 38 | 616.5 | B / 3.0 | 6 / 1.5 | 7.5 | - | 142.5 | a / 7.5 | 30 | 1.5 |
| 39 | 616 | C / 3.2 | 6 / 1.5 | 7.5 | - | 142.5 | a / 7.5 | 30 | 1.5 |

Fortsetzung Tabelle 1

| | | | | | | | | | |
|---|---|---|---|---|---|---|---|---|---|
| 40 | 610.5 | A / 6.0 | 7 / 1.5 | 7.5 | - | 142.5 | a / 7.5 | 30 | 1.5 |
| 41 | 616.5 | B / 3.0 | 7 / 1.5 | 7.5 | - | 142.5 | a / 7.5 | 30 | 1.5 |
| 42 | 616 | C / 3.2 | 7 / 1.5 | 7.5 | - | 142.5 | a / 7.5 | 30 | 1.5 |
| 43 | 415 | A / 4.0 | 8 / 1.0 | 5 | 95 | - | a / 5 | 14 | 1.5 |
| 44 | 415 | A / 4.0 | 8 / 1.0 | 5 | 95 | - | a / 5 | 20 | 3.0 |
| 45 | 419 | A / 4.0 | 8 / 2.0 | 5 | 95 | - | a / 5 | 14 | 1.5 |
| 46 | 423 | A / 4.0 | 8 / 3.0 | 5 | 95 | - | a / 5 | 14 | 1.5 |
| 47 | 427 | A / 4.0 | 8 / 4.0 | 5 | 95 | - | a / 5 | 14 | 1.5 |
| 48 | 431 | A / 4.0 | 8 / 5.0 | 5 | 95 | - | a / 5 | 14 | 1.5 |
| 49 | 1174 | A / 11.4 | 9 / 0.6 | 14.25 | 271 | - | a / 14.25 | 28.5 | 1.4 |
| 50 | 1156 | A / 11.2 | 9 / 1.4 | 14 | 266 | - | a / 14 | 28 | 1.4 |
| 51 | 400 | A / 4.0 | 10 / 0.25 | 5 | 95 | - | a / 2 | 10 | 0.5 |
| 52 | 415 | A / 4.0 | 11 / 1.0 | 5 | 95 | - | a / 5 | 10 | 0.5 |
| 53 | 400 | A / 4.0 | 12a / 0.2 | 5 | 95 | - | a / 2 | 10 | 0.5 |
| 54 | 400 | A / 4.0 | 12b / 0.2 | 5 | 95 | - | a / 2 | 10 | 0.5 |
| 55 | 391 | A / 4.0 | 13 / 0.05 | 5 | 95 | - | - | 10 | 0.5 |
| 56 | 391 | A / 4.0 | 14 / 0.05 | 5 | 95 | - | - | 10 | 0.5 |

Fortsetzung Tabelle 1

| | | | | | | | | | |
|---|---|---|---|---|---|---|---|---|---|
| 57 | 327 | A / 3.3 | 15a / 0.82 | 4.1 | 77.4 | - | a / 1.6 | 10 | 0.4 |
| 58 | 400 | A / 4.0 | 15b / 0.25 | 5 | 95 | - | a / 2 | 10 | 0.5 |
| 59 | 401 | A / 4.0 | 15b / 0.5 | 5 | 95 | - | a / 2 | 10 | 1.0 |
| 60 | 400 | A / 4.0 | 16 / 0.25 | 5 | 95 | - | a / 2 | 10 | 0.5 |
| 61 | 400 | A / 4.0 | 17a / 0.2 | 5 | 95 | - | a / 2 | 10 | 0.5 |
| 62 | 400 | A / 4.0 | 17b / 0.2 | 5 | 95 | - | a / 2 | 10 | 0.5 |
| 63 | 445.5 | A / 4.4 | 18 / 0.55 | 5.5 | - | 104.5 | a / 5.5 | 22 | 1.1 |

1) Emulgator A: 15 Gew.-%ige wäßrige Natriumlaurylsulfatlösung; Emulgator B: 2-Sulfobernsteinsäure-bis(2'-ethylhexyl)ester-Natriumsalz (50 Gew. -%ige wäßrige Lösung); C: 1:1-Mischung aus Emulgator B (50 Gew.-%ig) und Dowfax® 2A1 (Fa. DOW, 45 Gew.-%ig)

2) SA: Stearylacrylat

3) S: Styrol

4) MMA: Methylmethacrylat

5) a: Butan-1,4-dioldiacrylat; b: 1,4-Divinylbenzol; c: Methacryloxypropyltrimethoxysilan

6) NPS: Natriumperoxodisulfat

Tabelle 2:

| Bsp. | Eigenschaften der Monomer-emulsion III[7)] | Eigenschaften der Polymerisatdispersion IV[8)] | | | | Koloristische Eigenschaften der (getrockneten) Polymerisatdispersion IV | |
|---|---|---|---|---|---|---|---|
| | $d_Z$ ME (nm) | FG (%) | pH | LD (%) | $d_Z$ PE (nm) | Farbton[9)] (Monomer-/ Aggregatbande) | Fluoreszenz[10)] (Intensität) |
| 13 | 131 | 18.0 | 2.4 | n.b. | 138 | gelbbraun (A) | keine |
| 14 | 154 | 19.1 | 2.4 | n.b. | 152 | gelb (M) | grüngelb (w) |
| 15 | 158 | 15.2 | 2.4 | n.b. | 173 | orange (M) | orange (w) |
| 16 | 132 | 18.9 | 2.4 | 58 | 141 | orange (M) | orange (s) |
| 17 | 126 | 19.2 | 2.4 | 73 | 110 | orange (M) | orange (s) |
| 18 | 144 | 19.3 | 2.4 | 56 | 144 | orange (M) | orange (s) |
| 19 | 147 | 20.0 | n.b. | n.b. | 142 | blaustichig rot (M) | magenta (s) |
| 20 | 168 | 19.0 | 2.4 | n.b. | 177 | blaustichig rot (M) | magenta (s) |
| 21 | 137 | 17.6 | 2.4 | n.b. | 152 | blaustichig rot (M) | magenta (s) |
| 22 | 111 | 19.0 | 2.4 | n.b. | 117 | blaustichig rot (M) | magenta (s) |

Fortsetzung Tabelle 2

| | | | | | | | |
|---|---|---|---|---|---|---|---|
| 23 | 125 | 19.7 | 2.2 | 67 | 125 | blaustichig rot (M) | magenta (s) |
| 24 | 146 | 19.7 | 2.2 | n.b. | 134 | blaustichig rot (M) | magenta (s) |
| 25 | 95 | 20.0 | 2.4 | 87 | 106 | blaustichig rot (M) | magenta (s) |
| 26 | 108 | 20.0 | 2.5 | 87 | 106 | blaustichig rot (M) | magenta (s) |
| 27 | 103 | 20.0 | 2.4 | 87 | 104 | blaustichig rot (M) | magenta (s) |
| 28 | 86 | 19.9 | 2.3 | n.b. | 112 | blaustichig rot (M) | magenta (s) |
| 29 | 98 | 19.9 | 2.4 | n.b. | 107 | blaustichig rot (M) | magenta (s) |
| 30 | 142 | 19.7 | 2.2 | n.b. | 140 | farblos (M) | violett (s) |
| 31 | 159 | 19.4 | 2.2 | n.b. | 155 | farblos (M) | violett (s) |
| 32 | 166 | 19.6 | 2.2 | n.b. | 147 | farblos (M) | violett (s) |
| 33 | 172 | 19.2 | 2.3 | 60 | 134 | blaßgelb (A) | violett (m) |
| 34 | 122 | 20.0 | 2.4 | n.b. | 138 | gelb (M) | - |
| 35 | 120 | 20.0 | 2.4 | n.b. | 131 | gelb (M) | - |
| 36 | 131 | 20.0 | 2.4 | n.b. | 142 | gelb (M) | - |
| 37 | 107 | 20.0 | 2.4 | n.b. | 145 | rotstichig blau (M) | - |

Fortsetzung Tabelle 2:

| | | | | | | | |
|---|---|---|---|---|---|---|---|
| 38 | 104 | 20.0 | 2.5 | n.b. | 120 | rotstichig blau (M) | - |
| 39 | 118 | 20.0 | 2.4 | n.b. | 110 | rotstichig blau (M) | - |
| 40 | 137 | 20.0 | 2.3 | n.b. | 125 | grünstichig blau (M) | - |
| 41 | 168 | 20.0 | 2.4 | n.b. | 119 | grünstichig blau (M) | - |
| 42 | 125 | 20.0 | 2.3 | n.b. | 121 | grünstichig blau (M) | - |
| 43 | 146 | 19.3 | 2.2 | 28 | 199 | schmutzig-braun (M) | - |
| 44 | 130 | 19.7 | 1.9 | 36 | 182 | schmutzig-braun (M) | - |
| 45 | 142 | 19.6 | 2.4 | 32 | 193 | schmutzig-braun (M) | - |
| 46 | 130 | 19.9 | 2.8 | 29 | 201 | schmutzig-braun (M) | - |
| 47 | 142 | 19.7 | 4.6 | n.b. | 194 | schmutzig-braun (M) | - |
| 48 | 147 | 19.7 | 6.7 | n.b. | 201 | schmutzig-braun (M) | - |
| 49 | 155 | 19.7 | 2.2 | n.b. | 142 | farblos (M) | violett (s) |
| 50 | 173 | 19.7 | 2.1 | n.b. | 143 | farblos (M) | violett (s) |

Fortsetzung Tabelle 2:

| | | | | | | | |
|---|---|---|---|---|---|---|---|
| 51 | 170 | 18.5 | 2.5 | n.b. | 134 | gelbstichig orange (M) | gelbstichig orange (s) |
| 52 | 147 | 18.6 | 2.2 | n.b. | 150 | rot (M) | gelbstichig rot (s) |
| 53 | 165 | 19.6 | n.b. | n.b. | 143 | gelb (M) | grünstichig gelb (s) |
| 54 | 158 | 19.8 | 2.4 | n.b. | 149 | gelb (M) | grünstichig gelb (s) |
| 55 | 139 | 18.7 | 2.4 | 56 | 147 | gelb (M) | grünstichig gelb (s) |
| 56 | 151 | 19.2 | 2.4 | 55 | 144 | gelbstichig orange (M) | gelbstichig orange (m) |
| 57 | 130 | 14.2 | n.b. | n.b. | 147 | gelbbraun (A) | gelbstichig orange (w) |
| 58 | 139 | 18.3 | 2.2 | n.b. | 139 | gelbstichig orange (M) | gelbstichig orange (s) |
| 59 | 171 | 19.3 | 2.3 | n.b. | 144 | gelbstichig orange (M) | gelbstichig orange (s) |
| 60 | 146 | 18.9 | 2.2 | n.b. | 138 | orange (M) | orange (s) |
| 61 | 176 | 19.5 | n.b. | n.b. | 138 | orange (M) | orange (s) |
| 62 | 166 | 19.6 | 2.3 | n.b. | 141 | orange (M) | gelbstichig orange (s) |
| 63 | 167 | 19.6 | 2.3 | n.b. | 124 | rot (M) | rot (s) |

7) $d_Z$ $^{ME}$: mittlerer Monomertröpfchen-Durchmesser

8) FG: Feststoffgehalt (Soll: 20.0 Gew.-%), LD: Lichtdurchlässigkeit, $d_Z$ $^{PE}$: mittlerer Durchmesser der Polymerteilchen, n.b.: nicht bestimmt

9) visuell bestimmt; (M): Absorptionsbande des molekulardispers verteilten, d.h. nicht-aggregierten Farbstoffs; (A): Absorptionsbanden höherer Farbstoffaggregate

10) visuell an der Kunststoffausfärbung bestimmt; (w): schwach (ca. 0-30 % der Fluoreszenzintensität einer Lösung des entsprechenden Farbstoffs mit gleicher Chromophorkonzentration); (m): mittel (ca. 30-70 % der der Fluoreszenzintensität einer Lösung des entsprechenden Farbstoffs mit gleicher Chromophorkonzentration); (s): (> 70 % der Fluoreszenzintensität einer Lösung des entsprechenden Farbstoffs mit gleicher Chromophorkonzentration)

V. Herstellung redispergierbarer farbstoffhaltiger Polymerisate (Beispiele 64 bis 101):

1. Herstellung durch Batchverfahren (allgemeine Vorschrift):

1.1 Herstellung der farbstoffhaltigen Miniemulsion

In einem Reaktionsgefäß mit Rührer wurde eine wässrige Emulgatorlösung vorgelegt (Vorlage). Die Bestandteile dieser Lösung sind in Tabelle 3 angegeben. Hierzu gab man innerhalb 2 Minuten eine Lösung des jeweiligen Farbstoffs in den zu polymerisierenden Monomeren (Monomer/Farbstofflösung). Die Bestandteile dieser Lösung sind in Tabelle 3 angegeben. Anschließend rührte man weitere 10 Minuten. Die dabei resultierenden, konventionellen, farbstoffhaltigen Monomeremulsionen wurden anschließend wie folgt zu einer wässrigen Monomermikroemulsion mittels Ultraschall homogenisiert:

Als Ultraschallquelle diente die in Figur 4 der DE 197 56 874 beschriebene Vorrichtung, ausgerüstet mit einer Durchflusszelle mit einem Gefäßdurchmesser von 42 mm und einer Höhe von 25 mm. Die Sonotrode hatte einen Durchmesser von 40 mm und eine Leistung von 1 000 W. Unter Rühren wurde jeweils ca. 0,5 Liter der wässrigen Makroemulsion mit einer Durchflussgeschwindigkeit von 30 1/h mit einer Leistung von 1 000 W beschallt. Hierbei wurden wässrige, farbstoffhaltige Mini-Emulsionen erhalten. Die Tröpfchengrößen dieser Mini-Emulsionen ($\bar{d}_z$-Werte) sind in Tabelle 5 angegeben.

1.2 Polymerisation der farbstoffhaltigen Miniemulsion

Die so erhaltene Miniemulsion wurde in einem Polymerisationsgefäß vorgelegt und auf 85 °C erwärmt. Dann gab man unter Rühren in einer Portion die Initiatorlösung (siehe Tabelle 3) zu, ließ 2,5 h bei 80 bis 85 °C nachreagieren und kühlte dann auf 25 °C ab. Die Eigenschaften der so erhaltenen Polymeristadispersion sind in Tabelle 5 angegeben.

2. Herstellung durch Zulaufverfahren (allgemeine Vorschrift):

Zunächst wurde in der unter V 1.1 beschriebenen Weise aus Vorlage 1 und einer Monomer/Farbstofflösung eine Miniemulsion hergestellt. Deren Zusammensetzung ist in Tabelle 4 angegeben.

Die so erhaltenen Mini-Emulsion wurde in ein Zulaufgefäß überführt. In einem Polymerisationsgefäß wurde Wasser und ein Teil der Initiatorlösung (IL) vorgelegt (Vorlage 2; siehe Tabelle 4). Man erwärmte die Vorlage 2 auf 85 °C und gab dann, zeitgleich beginnend innerhalb 3 h unter Beibehaltung der 85 °C die farbstoffhaltige Mini-Emulsion und die wässrige Initiatorlösung in das Polymerisationsgefäß. Die Eigenschaften der farbstoffhaltigen Polymerisatdispersionen sind in Tabelle 5 angegeben.

In den Tabellen 3 bis 14 werden die folgenden Abkürzungen verwendet:

| | |
|---|---|
| AMPS: | 2-Acrylamido-2-methylpropansulfonsäure-Natriumsalz |
| AN: | Acrylnitril |
| AS: | Acrylsäure |
| BA: | n-Butylacrylat |
| BDDA: | Butandioldiacrylat |
| DVB: | Divinylbenzol |
| E: | Emulgator |
| HD: | Hexadecan |
| IL: | Initiatorlösung |
| L370: | Luviquat® FC 370 |
| LA: | Laurylacrylat |
| LH: | Luviquat® Hold |
| MAS: | Methacrylsäure |
| MMA: | Methylmethacrylat |
| NaPS: | Natriumperoxodisulfat |
| PW: | Wasserlösliches Polymer |
| S: | Styrol |
| SA: | Stearylacrylat |
| T: | Tamol® NN4501 |
| V50: | 2,2'-Azobis(2-amidinopropan)dihydrochlorid |

Luviquat® FC 370 ist eine etwa 40 gew.-%ige wässrige Lösung eines Copolymerisats aus Vinylpyrrolidon

und 1-Vinyl-3-methylimidzoliumchlorid im Gew.-verhältnis 7:3, mit einem K-Wert (nach Fikentscher; bestimmt in Anlehnung an DIN 53726 als 1 gew.-%iger Lösung in 3 gew.-%iger wässriger NaCl-Lösung im Bereich von 41 bis 49 (Hersteller: BASF AG, Ludwigshafen).

Luviquat® Hold ist eine etwa 20 gew.-%ige wässrige Lösung eines Terpolymerisats aus Vinylcaprolactam, Vinylpyrrolidon und 1-Vinyl-3-methyl-imidzoliummethylsulfonat im Gew.-verhältnis 5:4:1, mit einer Viskosität (nach Brookfield LV; bestimmt als 1 gew.-%iger Lösung ? in Anlehnung an DIN 53018 im Bereich von 1,5 bis 4 (Hersteller: BASF AG, Ludwigshafen).

Tamol® NN 4501 ist das pulverförmige Natriumsalz eines niedermolekularen Formaldehydkondensationsprodukts eines Isomergemischs aus α- und β-Napththalinsulfonsäure, dessen 45 gew-%ige, wässrige Lösung einer mittleren Viskosität (nach Brookfield) von etwa 70 mPa·s (bestimmt bei 23 °C) aufweist (Hersteller: BASF AG, Ludwigshafen).

Als Emulgator wurde, sofern nichts anderes angegeben ist, der Bis-2-Ethylhexylester der Sulfobernsteinsäure (als Natriumsalz in Form einer 60-gew.-%igen, wässrigen Lösung) verwendet (LUMITEN® IRA der BASF AG).

Tabelle 3: Herstellung farbstoffhaltiger Dispersionen nach Batchfahrweise (Erfindungsgemäße Beispiele 64 bis 78)

| Bsp. | Vorlage | | | Monomer/Farbstofflösung | | | | | | Initiatorlösung | |
|---|---|---|---|---|---|---|---|---|---|---|---|
| | $H_2O$ [g] | Polymer PW/ Monomer Al; [g] | E [g] | Farbstoff | Coemulgator[4] [g] | S [g] | MMA [g] | DVB [g] | Monomer Al [g]. | $H_2O$ [g] | Initiator [g] |
| 64 | 448,6 | - | 2,4 | 5g Nr. 3 | SA; 5 | - | 90 | 5 | AS; 5 | 19 | 1 NaPS |
| 65 | 450,9 | - | 0,6 | 5g Nr. 5 | HD; 5 | - | 90 | 5 | MAS; 10 | 19 | 1 NaPS |
| 66 | 450,9 | - | 0,6 | 5g Nr. 6 | LA; 5 | - | 85 | 5 | MAS: 10 | 19 | 1 NaPS |
| 67 | 460,7 | T; 11,1 | 1,2 | 5g Nr. 6 | HD; 5 | - | 100 | 5 | - | 19 | 1 NaPS |
| 68 | 422,8 | LH; 25,0 | 1,2 | 5g Nr. 3 | LA; 5 | - | 95 | 5 | - | 15,6 | 0,4 V50 |
| 69 | 412,1 | AMPS; 5,0 | 1,2 | 5g Nr. 3 | HD; 5 | - | 100 | 5 | - | 15,6 | 0,4 V50 |
| 70 | 431,9 | L370;4,88 | 1,2 | 5g Nr. 6 | - | - | 90 | 5 | AS; 10 | 19 | 1 NaPS |
| 71 | 442,4 | L370; 12,2 | 2,4 | 5g Nr. 6a | - | - | 100 | 5 | - | 15,6 | 0,4 V50 |
| 72 | 448,6 | - | 2,4 | 5g Nr. 1 | SA; 5 | - | 90 | 5 | AS; 10 | 19 | 1 NaPS |
| 73 | 450,9 | - | 0,6 | 5g Nr. 7 | HD; 5 | - | 90 | 5 | MAS; 10 | 19 | 1 NaPS |
| 74 | 429 | - | 2,0 | 10g Nr.6a | SA; 5 | 60 | 30 | 5 | MAS; 5 | 19 | 1 NaPS |
| 75 | 427,8 | - | 1,2 | 10g Nr. 6 | SA; 5 | - | 90 | 5 | AS; 5 | 19 | 1 NaPS |
| 76 | 441,7 | T; 11,1 | 1,2 | 10g Nr. 6 | SA; 5 | - | 95 | 5 | - | 19 | 1 NaPS |
| 77 | 427,8 | - | 1,2 | 10g Nr. 5 | SA; 5 | - | 90 | 5 | AS; 5 | 19 | 1 NaPS |
| 78 | 419 | - | 2,0 | 10g Nr.6a | HD; 5 | 60 | 35 | 5 | AS; 5 | 57 | 3 NaPS |

Tabelle 4: Herstellung farbstoffhaltiger Dispersionen nach Zulauffahrweise (Erfindungsgemäße Beispiele 79 bis 101)

| Bsp. | Vorlage 1 | | | Monomer/Farbstofflösung | | | | | | Vorlage 2 | | Initiator | |
|---|---|---|---|---|---|---|---|---|---|---|---|---|---|
| | $H_2O$ [g] | PW [g] | E [g] | Farbstoff | Coemulgator | S [g] | MMA [g] | DVB [g] | Monomer A1 [g] | $H_2O$ [g] | IL [g] | $H_2O$ [g] | NaPS [g] |
| 79 | 133 | - | 2,4 | 5 g Nr. 3 | 5 g SA | - | 95 | 5 | 5 g AS | 100 | 4 | 39 | 1 |
| 80 | 121,6 | - | 2,4 | 5 g Nr. 6 | 5 g SA | - | 95 | 5 | 5 g AS | 100 | 4 | 39 | 1 |
| 81 | 120,4 | - | 0,6 | 5 g Nr. 5 | - | - | 90 | 5 | 10 g MAS | 100 | 4 | 39 | 1 |
| 82 | 132,1 | - | 0,6 | 5 g Nr. 6 | 5 g LA | - | 90 | 5 | 10 g MAS | 100 | 4 | 39 | 1 |
| 83 | 629 | - | 6 | 30 g Nr.6a | 15 g HD | 180 | 105 | 15 | 15 g AS | 125 | 12 | 125 | |
| 84 | 254,9 | - | 4,8 | 10 g Nr. 3 | 10 g SA | - | 190 | 10 | 10 g MAS | 100 | 8 | 78 | 2 |
| 85 | 236,3 | - | 4,8 | 10 g Nr. 6 | 10 g SA | - | 180 | 10 | 10 g AS | 100 | 8 | 78 | 2 |
| 86 | 234,8 | - | 1,2 | 10 g Nr. 5 | - | - | 180 | 10 | 20 g MAS | 100 | 8 | 78 | 2 |
| 87 | 253,4 | - | 1,2 | 10 g Nr. 6 | 10 g LA | - | 180 | 10 | 20 g MAS | 100 | 8 | 78 | 2 |
| 88 | 240,1 | - | 4,8 | 10 g Nr. 3 | 10 g SA | - | 190 | 10 | 2 g AS | 100 | 8 | 78 | 2 |
| 89 | 261,4 | 22,2; T | 2,4 | 20 g Nr. 6 | 10 g SA | - | 190 | 10 | - | 100 | 8 | 78 | 2 |
| 90 | 273,6 | - | 2,4 | 20 g Nr. 6 | 10 g HD | - | 190 | 10 | 10 g MAS | 100 | 8 | 78 | 2 |
| 91 | 255 | - | 2,4 | 20 g Nr. 5 | 10 g SA | - | 180 | 10 | 10 g MAS | 100 | 8 | 78 | 2 |
| 92 | 223,3 | - | 2,4 | 10 g Nr. 3 | 10 g SA | - | 180 | 10 | 10 g AS | 100 | 8 | 78 | 2 |
| 93 | 223,3 | - | 4,8 | 10 g Nr. 3 | 10 g SA | - | 180 | 10 | 10 g AS | 100 | 8 | 78 | 2 |
| 94 | 223,3 | - | 4,8 | 10 g Nr. 6 | 10 g SA | - | 180 | 10 | 10 g AS | 100 | 8 | 78 | 2 |
| 95 | 222,7 | - | 1,2 | 10 g Nr. 5 | - | - | 180 | 10 | 20 g MAS | 100 | 8 | 78 | 2 |
| 96 | 236,9 | - | 4,8 | 10 g Nr. 3 | 10 g HD | - | 190 | 10 | 10 g AS | 100 | 8 | 78 | 2 |
| 97 | 236,2 | - | 1,2 | 10 g Nr. 6 | 10 g LA | - | 180 | 10 | 20 g MAS | 100 | 8 | 78 | 2 |
| 98 | 235 | 22,2; T | 2,4 | 20 g Nr. 6 | 10 g SA | - | 190 | 10 | - | 100 | 8 | 78 | 2 |
| 99 | 250 | - | 2,4 | 20 g Nr. 6 | 10 g HD | - | 190 | 10 | 10 g MAS | 100 | 8 | 78 | 2 |
| 100 | 236,4 | - | 2,4 | 20 g Nr. 5 | 10 g SA | - | 180 | 10 | 10 g MAS | 100 | 8 | 78 | 2 |
| 101 | 259,7 | - | 4 | 20 g Nr.6a | 10 g HD | 120 | 70 | 10 | 10 g AS | 100 | 8 | 74 | 6 |

Tabelle 5:

| Eigenschaften der farbstoffhaltigen Polymerisatdispersionen (erfindungsgemäße Beispiele 64 bis 101) | | | | | |
|---|---|---|---|---|---|
| Bsp.Nr. | Feststoffgehalt [Gew.%] | Tröpfchengröße Emulsion $\overline{d_z}$-Werte | Teilchengröße Dispersion $d_z$-Werte | Oberflächenspannung [mN/m] | |
| 64 | 19,2 | 137 | 142 | 37,3 | |
| 65 | 19,3 | 201 | 317 | 39,6 | |
| 66 | 19,7 | 178 | 297 | 40,8 | |
| 67 | 19,3 | 120 | 201 | 42,8 | |
| 68 | 19,4 | 211 | 411 | 36,9 | |
| 69 | 19,3 | 205 | 386 | 37,7 | |
| 70 | 19,5 | 210 | 430 | 36,8 | |
| 71 | 19,1 | 196 | 481 | 36,6 | |
| 72 | 19,4 | 128 | 172 | 37,9 | |
| 73 | 19,6 | 160 | 182 | 38,2 | |
| 74 | 19,2 | 177 | 136 | 44,4 | |
| 75 | 19,9 | 105 | 179 | 41,2 | |
| 76 | 19,8 | 143 | 168 | 40,7 | |
| 77 | 20 | 188 | 184 | 39,8 | |
| 78 | 19,2 | 167 | 171 | 38,1 | |
| 79 | 29,3 | 124 | 185 | 31,9 | |
| 80 | 28,9 | 130 | 167 | 32,6 | |
| 81 | 28,7 | 253 | 301 | 36,5 | |
| 82 | 29,2 | 192 | 322 | 38,6 | |
| 83 | 28,3 | 183 | 255 | 33,6 | |
| 84 | 34,7 | 121 | 190 | 32,4 | |
| 85 | 35 | 112 | 258 | 31,4 | |
| 86 | 34,4 | 235 | 373 | 35,8 | |
| 87 | 34,8 | 201 | 370 | 36,3 | |
| 88 | 34,9 | 131 | 195 | 35,7 | |
| 89 | 34,4 | 141 | 205 | 39,9 | |
| 90 | 34,5 | 104 | 281 | 38,7 | |
| 19 | 34,7 | 185 | 251 | 37,1 | |
| 92 | 42,3 | 125 | 130 | 38,2 | |
| 93 | 42,5 | 134 | 217 | 37,6 | |
| 94 | 42,1 | 156 | 199 | 41,8 | |
| 95 | 42,5 | 118 | 151 | 40,3 | |
| 96 | 42,4 | 205 | 220 | 38,9 | |
| 97 | 41,9 | 217 | 228 | 35,9 | |
| 98 | 42,2 | 204 | 210 | 36,1 | |
| 99 | 42,5 | 195 | 219 | 36,9 | |
| 100 | 42,4 | 138 | 140 | 39,2 | |
| 101 | 42,2 | 157 | 182 | 38,5 | |

VI. Anwendungstechnische Prüfung der Dispersionen der Beispiele 64 bis 101

1. Redispergierbarkeit:

Zur Bestimmung der Redispergierbarkeit der erfindungsgemäßen farbstoffhaltigen Polymerisate gab man einen Tropfen einer auf einen Feststoffgehalt von 20 Gew.-% eingestellten Probe der jeweiligen farbstoffhaltigen Polymerisatdispersion in eine Petrischale und ließ diese über Nacht trocknen. Dann gab man drei Tropfen Wasser in die Petrischale auf das eingetrocknete Polymerisat und schüttelte leicht, um das Polymerisat zu redispergieren. Der Grad

der Redispergierung wurde wie folgt visuell beurteilt: 1 = vollständige Redispergierung, 2 = nahezu vollständige Redispergierung, 3 = etwa 50 % Redispergierung, 4 = teilweise Redispergierung; 5 keine beobachtbare Redispergierung.
Alle Dispersionen der Beispiele 64 bis 101 zeigten einen Grad der Redispergierbarkeit von 1.

2. Druckqualität:

2.1 Herstellung einer Tintenformulierung: Die reinen Dispersionen der Beispiele 64 bis 101 wurden mit Triethanolamin auf pH 7 eingestellt. Die Prüfung der Verdruckbarkeit wurde sowohl an den neutralisierten Dispersionen als auch an Zubereitungen aus 9 Gew.-Teilen neutralisierter Dispersion und 1 Gew.-Teil Butyltriglykol.

2.2 Bestimmung der Druckqualität:

Die erfindungsgemäßen Tintenformulierungen gemäß 2.1 wurden in einem handelsüblichen Ink-Jet-Drucker der Fa. Epson (Stylus Color 500) sowohl auf handelsüblichem Papier für LaserDrucker (80 g/m2; Intercopy) und auf Spezialpapier für hochauflösenden Tintenstrahl-Druck (Paper for 720 dpi printing; Epson) verdruckt. Als Prüfdruckmuster diente ein Schachbrettmuster (Vollfarbig/unbedruckt: 1 x 1 cm).
Zur Prüfung der Reibechtheit der Drucke wurde 10 s mit dem Finger mit leichtem Druck mehrmals mit kreisenden Bewegungen über bedruckte und nichtbedruckte Stellen gefahren. Kein Verschmieren des Drucks wurde mit der Note 1 und starkes Verschmieren mit der Note 6 bewertet.
Die Nassreibechtheit wurde analog geprüft, nur wurde der Druck vor dem Verreiben mit VE-Wasser überspült. Kein Ausbluten/ Verschmieren des Drucks wurde mit der Note 1 und starkes Ausbluten/Verschmieren mit der Note 6 bewertet.
Reib- und Nassreibechtheit der mit neutralisierten Dispersionen der Beispiele 64 bis 101 erhaltenen Drucke, sowie der mit den entsprechenden lösungsmittelhaltigen Tinten erhaltenen Drucke wurden durchweg mit der Note 1 bewertet.

VII.Herstellung erfindungsgemäßer farbstoffhaltiger Polymerisatdispersionen (Beispiele 102 bis 118)

1. In einem Reaktionsgefäß mit Rührer wurden, bezogen auf 100 Gew.-Teile Hauptmonomere etwa 430 bis 450 Gew.-Teile Wasser, 0,6 Gew.-Teile Natriumdodecylsulfat sowie das in Tabelle 6 angegebene wasserlösliche Polymer PW vorgelegt. Zu dieser Lösung gab man innerhalb 2 Minuten eine Lösung des jeweiligen Farbstoffs in den zu polymerisierenden Monomeren (Monomer/Farbstofflösung). Die Bestandteile dieser Lösung sind in Tabelle 6 angegeben. Anschließend rührte man weitere 10 Minuten. Die dabei resultierenden, konventionellen, farbstoffhaltigen Monomeremulsionen wurden anschließend in der unter III beschriebenen Weise mittels Ultraschall homogenisiert.

   Die so erhaltenen Miniemulsionen wurden in einem Polymerisationsgefäß vorgelegt und auf 85 °C erwärmt. Hierzu gab man unter Rühren auf einmal 10 Gew.-Teile, bezogen auf 100 Gew.-Teile Monomere, einer 10 gew.-%igen Lösung von Natriumperoxodisulfat in Wasser (Initiatorlösung). Nach Beendigung der Initiatorzugabe ließ man 3,5 Stunden bei 80 - 85 °C unter Rühren nachreagieren und kühlte dann auf 25 °C ab. Die Eigenschaften der so erhaltenen wässrigen Polymerisatdispersionen sind in Tabelle 7 zusammengefasst.

2. Polymere PW:

   Typ A ist das Ammoniumsalz eines Copolymers aus Maleinsäure und 2,4,4'-Trimethylpent-1-en, das durch ammoniakalische Hydrolyse einens Copolymers aus Maleinsäureanhydrid und 2,4,4'-Trimethylpent-1-en erhalten wird. Letzteres Copolymer ist gemäß Beispiel 3 der EP-A 9169 erhältlich. Anstatt wie in Beispiel 3 der EP-A 9169 das unhydrolysierte Copolymer durch Sprühtrocknung zu isolieren, werden zur Suspension 325 Teile Wasser gegeben und überschüssiges Disobuten durch Wasserdampfdestillation (Badtemperatur 80 °C) abdestilliert. Dabei wird nach Erreichen einer Innentemperatur von 98 °C noch 1 h Wasserdampf eingeleitet. Nach Zugabe von weiteren 200 Teilen Wasser und 170 Teilen 25 gew.-%igem Ammoniak wird bei 60 °C gerührt, bis eine beinahe klare wässrige Lösung erhalten wird (ca. 1 h). Anschließend wird der Feststoffgehalt mit Wasser auf 22 % eingestellt. Der pH-Wert der Lösung liegt bei 9. Der K-Wert des Copolymerisats (nach Fikentscher bestimmt als 1 gew.-%ige Lösung in Dimethylformamid) liegt im Bereich von 30-40.

   Typ B ist das Natriumsalz eines Copolymers aus Maleinsäure und 2,4,4'-Trimethylpent-1-en, das durch Hydrolyse eines Copolymers aus Maleinsäureanhydrid und 2,4,4'-Trimethylpent-1-en erhalten wird. Letzteres

Copolymer ist gemäß Beispiels 3 der EP-A 9169 erhältlich. Anstatt wie in Beispiel 3 der EP-A 9169 das unhydrolysierte Copolymer durch Sprühtrocknung zu isolieren, werden zur Suspension 325 Teile Wasser gegeben und überschüssiges Disobuten durch Wasserdampfdestillation (Badtemperatur 80 °C) abdestilliert. Dabei wird nach Erreichen einer Innentemperatur von 98 °C noch 1 h Wasserdampf eingeleitet. Nach Zugabe von weiteren 220 Teilen Wasser und 200 Teilen 50 gew.-%iger Natronlauge wird bei 100 °C gerührt, bis eine beinahe klare wässrige Lösung erhalten wird (ca. 4 h). Anschließend wird der Feststoffgehalt mit Wasser auf 25 % eingestellt. Der pH-Wert der Lösung liegt bei 10. Der K-Wert des Copolymerisats (nach Fikentscher bestimmt als 1 gew.-%iger Lösung in Dimethylformamid) liegt im Bereich von 30-40.

Typ C ist eine 44 gew.-%ige, wässrige Lösung eines Reaktionsprodukts, erhältlich durch Umsetzung von 420 gew.-Teilen eines Copolymerisats aus 54 Gew.-% Maleinsäureanhydrid und 46 Gew.-% 2,4,4'-Trimethylpent-1-en mit 261 Gew.-Teilen $C_{13/15}$-Alkyloxyheptaethylenoxid, und nachträgliche Neutralisation der nicht veresterte Säuregruppen mit Natronlauge gemäß Beispiel 7 der EP-A 367 049. Der pH-Wert der Lösung beträgt etwa 7,5. Der K-Wert des Copolymerisats (nach Fikentscher bestimmt als 1 Gew.-%ige Lösung des Polymers in Cyclohexanon) liegt im Bereich von 14 bis 18.

Tabelle 6: Einsatzstoffe

| Bsp. | Polymer PW | [%]1) | Farbstoff | [%]1) | Hauptmonomere MMA % | S % | SA % | BDDA [%]1) |
|---|---|---|---|---|---|---|---|---|
| 102 | Typ A | 11,5 | 4 | 1 | 95 | - | 5 | 5 |
| 103 | Typ A | 16,1 | 4 | 1 | 95 | - | 5 | 5 |
| 104 | Typ A | 16,2 | 4 | 10 | 95 | - | 5 | 10 |
| 105 | Typ B | 2,5 | 4 | 1 | 95 | - | 5 | 5 |
| 106 | Typ B | 5,0 | 4 | 1 | 95 | - | 5 | 5 |
| 107 | Typ A | 16,1 | 6a | 3 | 85 | 10 | 5 | 10 |
| 108 | Typ A | 14,0 | 6a | 1 | 95 | - | 5 | 10 |
| 109 | Typ A | 16,5 | 3 | 7,5 | 95 | - | 15 | 10 |
| 110 | Typ A | 14,4 | 6 | 4 | 95 | - | 5 | 10 |
| 111 | Typ A | 16,5 | 6 | 10 | 95 | - | 5 | 10 |
| 112 | Typ A | 15,1 | 7 | 10 | 95 | - | 5 | 10 |
| 113 | Typ C | 41,7 | 7 | 30 | 95 | - | 5 | 10 |
| 114 | Typ C | 49,0 | 4 | 1 | 95 | - | 5 | 5 |
| 114 | - | - | 4 | 1 | 95 | - | 5 | 5 |
| 115 | - | - | 4 | 2 | 95 | - | 5 | 5 |
| 116 | - | - | 6a | 3 | 85 | 10 | 5 | 10 |
| 117 | - | - | 6 | 1 | 95 | - | 5 | 5 |

1) Alle %-Angaben geben den Gewichtsanteil der jeweiligen Wirksubstanz, bezogen auf das Gesamtgewicht der Hauptmonomere an.

VIII. Anwendungstechnische Prüfung der Dispersionen der Beispiele 102 bis 118

1. Die Bestimmung der in Tabelle 7 angegebenen Redispergierbarkeit der Dispersionen der Beispiel 102 bis 118 erfolgte in der unter VI 1. beschriebenen Weise.

Tabelle 7:

| Eigenschaften der Dispersionen der Beispiele 102 bis 118 | | | | |
|---|---|---|---|---|
| Bsp. | LD-Wert [%] | Feststoffgehalt [%] | Oberflächenspannung [N/m] | Redispergierbarkeit |
| 102 | 95,1 | 19,1 | 45,0 | 2 |
| 103 | 94,9 | 19,3 | 41,7 | 1 |
| 104 | 93,0 | 20,1 | 43,9 | 1 |
| 105 | 87,1 | 19,6 | 48,1 | 2 |
| 106 | 92,5 | 16,8 | 46,3 | 1 |
| 107 | 89,0 | 18,3 | 42,3 | 1 |
| 108 | 92,5 | 19,3 | 45,1 | 2 |
| 109 | 62,4 | 19,2 | 45,5 | 2 |
| 110 | 96,0 | 19,3 | 44,5 | 2 |
| 111 | 95,6 | 18,0 | 42,6 | 1 |
| 112 | 90,7 | 18,8 | 39,3 | 2 |
| 113 | 89,0 | 18,3 | 35,5 | 3 |
| 114 | 99,0 | 19,0 | 36,7 | 3 |
| 115 | 88,6 | 19,7 | 59,0 | 5 |
| 116 | 88,4 | 19,5 | 57,7 | 5 |
| 117 | 82,9 | 18,9 | 56,7 | 5 |
| 118 | n.b. | 20,1 | n.b. | 5 |

2. Die Redispergierbarkeit von Polymerdispersionen, die in Abwesenheit eines Polymers PW hergestellt wurden, untersuchte man in der unter VI 1. beschriebenen Weise vor Zugabe und nach Zugabe einer wässrigen Lösung des Polymeren PW. In Tabelle 8 sind die Ergebnisse dieser Untersuchung zusammengefasst.

Tabelle 8: Redispergierbarkeit von Polymerdispersionen, die in Abwesenheit eines Polymers PW hergestellt wurden (Versuche R1 bis R11)

| Vers.-Nr. | Dispersion Bsp. | Polymer PW | Gew.-%[1)] | Redispergierbarkeit vorher | nachher |
|---|---|---|---|---|---|
| R1 | 115 | Typ A | 24,3 | 5 | 3 |
| R2 | 116 | Typ A | 25,0 | 5 | 3 |
| R3 | 116 | Typ A | 45,0 | 5 | 2 |
| R4 | 116 | Typ C | 30,0 | 5 | 3 |
| R5 | 116 | Typ C | 50,0 | 5 | 2 |
| R6 | 116 | Typ B | 5,0 | 5 | 2 |
| R7 | 116 | Typ B | 10,0 | 5 | 1 |
| R8 | 117 | Typ A | 19,8 | 5 | 3 |
| R9 | 117 | Typ C | 36,2 | 5 | 3 |
| R10 | 117 | Typ C | 46,9 | 5 | 2 |
| R11 | 118 | Typ C | 31,6 | 5 | 3 |

1) Gewichtsanteil der Wirksubstanz bezogen auf das feste farbstoffhaltige Polymerisat.

3. Untersuchung der Dispergierbarkeit gefriergetrockneter farbstoffhaltiger Polymerdispersionen (Versuche R12 bis R 15)

a) Dispersionen mit Polymer PW

Die erfindungsgemäßen Dispersionen der Beispiele 104, 108, und 118, sowie die Dispersion des Beispiels 115 nach Zugabe von Polymer PW vom Typ B, wurden unter Kühlung im Trockeneis/Acetonbad unter Anlegen von Vakuum gefriergetrocknet. Die so erhaltenen Pulver wurden mit der vierfachen Menge Wasser einen Tag intensiv gemischt. Alle Pulver waren vollständig dispergierbar. In Tabelle 9 ist weiterhin die Redispergierbarkeit der getrockneten Dispersion vor Gefriertrocknung und die Redispergierbarkeit der aus dem gefriergetrockneten Pulver erhaltenen Dispersionen angegeben (jeweils bestimmt gemäß der unter VI 1. beschriebenen Vorgehensweise).

Tabelle 9:

| Vers. Nr. | Dispersion Bsp. | Polymer PW [%][1)] | | Dispergierbarkeit d. Pulvers | Redispergierbarkeit | |
|---|---|---|---|---|---|---|
| | | | | | vorher | nachher |
| R12 | 104 | Typ A | 16,1 | + | 1 | 1 |
| R13 | 105 | Typ A | 14,0 | + | 2 | 1 |
| R14 | 115 | Typ C | 49,0 | + | 3 | 5 |
| R15 | 116 | Typ B | 14,6[2)] | + | 1 | 1 |

1) Gewichtsanteil der Wirksubstanz bezogen auf das feste farbstoffhaltige Polymerisat.
2) Polymer PW wurde zu der fertigen Dispersion aus Beispiel 115 gegeben.

b) Dispersionen ohne Polymer PW

Die erfindungsgemäße Dispersionen des Beispiels 115 wurde gemäß der unter a) beschriebenen Vorgehensweise gefriergetrocknet. Das so erhaltenen Pulver wurde mit der vierfachen Menge Wasser und der in Tabelle 10 angegebenen Menge des Polymeren pW (als wässrige Lösung) einen Tag intensiv gemischt. Alle Pulver waren vollständig dispergierbar. In Tabelle 10 ist weiterhin die Redispergierbarkeit der aus dem gefriergetrockneten Pulver erhaltenen Dispersionen angegeben (bestimmt gemäß der unter VI 1. beschriebenen Vorgehensweise).

Tabelle 10:

| Vers. Nr. | Dispersion Bsp. | Polymer PW [%][1)] | | Dispergierbarkeit d. Pulvers | Redispergierbarkeit |
|---|---|---|---|---|---|
| R16 | 115 | Typ A | 20,0 | +[2)] | 3 |
| R17 | 115 | Typ c | 40,0 | + | 1 |
| R18 | 115 | Typ C | 50,0 | + | 1 |
| R19 | 115 | Typ B | 5,0 | + | 1 |
| R20 | 115 | Typ B | 10,0 | + | 1 |

1) Gewichtsanteil der Wirksubstanz bezogen auf das feste farbstoffhaltige Polymerisat.
2) + : vollständige Dispergierbarkeit; keine beobachtbaren Pulverteilchen.

IX. Herstellung farbstoffhaltiger wässriger Polymerisatdispersionen mit einem hohen Farbstoffgehalt (Beispiele 119 bis 122):

Die Herstellung der farbstoffhaltigen Dispersionen der Beispiele 119 bis 122 erfolgte analog der in VII 1. beschriebenen Weise. Die Einsatzstoffe sind in Tabelle 11 angegeben.

Die jeweiligen Miniemulsionen wurden in einem Polymerisationsgefäß vorgelegt und auf 85 °C erwärmt. Hierzu gab man unter Rühren auf einmal den Initiator, ließ dann 3,5 Stunden bei 80 - 85 °C unter Rühren nachreagieren und kühlte dann auf 25 °C ab. Die Eigenschaften der so erhaltenen wässrigen Polymerisatdispersionen sind in Tabelle 12 zusammengefasst. Bei keiner der Proben bildete sich während der Polymerisation nennenswerte Mengen an Koagulat.

Tabelle 11:

| Bsp. | Polymer PW [%][1) ] | | Farbstoff [%][1)] | | Hauptmonomere MMA % | SA % | BDDA [%][1)] | Initiator[3)] |
|---|---|---|---|---|---|---|---|---|
| 119 | Typ A | 18 | 6b[2)] | 15 | 95 | 5 | 10 | A1 |
| 120 | Typ C | 18 | 7a | 30 | 95 | 5 | 10 | A1 |
| 121 | Typ C | 18 | 7a | 35 | 95 | 5 | 10 | A2 |
| 122 | Typ C | 18 | 7a | 35 | 95 | 5 | 10 | A3 |

1) Alle %-Angaben geben den Gewichtsanteil der jeweiligen Wirksubstanz, bezogen auf das Gesamtgewicht der Hauptmonomere an.
2) Farbstoff wurde zusammen mit 1 Gew.-Teil Ölsäure (bezogen auf 100 Gew.-Teile Farbstoff) in den Monomeren gelöst.

3) A1: 1 Gew.-% Wasserstoffperoxid, 0,15 Gew.-%, bez. auf 100 Gew.-% Hauptmonomere, Hydroxymethansulfinat-Natriumsalz.
A2: 0,3 Gew.-% Wasserstoffperoxid, 0,3 Gew.-%, bez. auf 100 Gew.-% Hauptmonomere, Hydroxymethansulfinat-Natriumsalz.
A3: 0,3 Gew.-% Wasserstoffperoxid, 0,3 Gew.-%, bez. auf 100 Gew.-% Hauptmonomere, Ascorbinsäure.

Tabelle 12:

| Bsp. | LD-Wert [%] | Feststoffgehalt [%] | Oberflächenspannung [mN/m] |
|---|---|---|---|
| 119 | 87,5 | 16,5 | 35,0 |
| 120 | 92,5 | 19,0 | 37,4 |
| 121 | 91,5 | 19,5 | 36,1 |
| 122 | 93,0 | 19,1 | 38,1 |

X. Herstellung wässriger Polymerdispersionen mit optischen Aufhellern

Optische Aufheller:

Typ 1: N-(Pent-2-yl)-4,5-bismethoxynaphthalin-1,8-dicarbonsäureimid;

Typ 2: o,o-Dicyanobisstyrylbenzol = 1,4-Bis(4"-cyanostyryl)benzol;
TYp 3: 1,4-Bis(4'-methoxycarbonylstyryl)benzol;
Typ 4: 1-(4'-Methoxycarbonylstyryl)-4-(4"-cyanostyryl)benzol.

1. Beispiele 123 bis 148

In einem Reaktionsgefäß mit Rührer wurde eine Lösung von Natriumlaurylsulfat in Wasser vorgelegt (Vorlage; Einsatzmengen siehe Tabelle 13). Hierzu gab man innerhalb 2 Minuten eine Lösung des jeweiligen optischen Aufhellers in den zu polymerisierenden Monomeren (Monomer/Aufhellerlösung). Die Bestandteile dieser Lösung sind in Tabelle 13 angegeben. Anschließend rührte man weitere 10 Minuten. Die dabei resultierenden, konventionellen, Monomeremulsionen wurden anschließend in der unter V 1.1 beschriebenen Weise homogenisiert und anschließend polymerisiert. Als Initiator wurde ein Lösung von 0,5 g Natriumperoxodisulfat in Wasser eingesetzt. Die Eigenschaften der Miniemulsionen und der erhaltenen Polymerdispersionen sind in Tabelle 14 angegeben.

Tabelle 13:

| Bsp. | Vorlage | | Monomer/optische Aufhellerlösung | | | | |
|---|---|---|---|---|---|---|---|
| | $H_2O$ [g] | Emulgator [g] | opt. Aufheller [g] | | SA [g] | Monomer A [g] | Vernetzer[1] [g] |
| 123 | 413 | 4,0 | Typ 1 | 0,5 | 5 | MMA 95 | a/5 |
| 124 | 411 | 4,0 | Typ 1 | 0,02 | 5 | MMA 95 | a/5 |
| 125 | 411 | 4,0 | Typ 1 | 0,1 | 5 | MMA 95 | a/5 |
| 126 | 413 | 4,0 | Typ 2 | 0,5 | 5 | MMA 95 | a/5 |
| 137 | 411 | 4,0 | Typ 2 | 0,1 | 5 | MMA 95 | a/5 |
| 128 | 411 | 4,0 | Typ 2 | 0,02 | 5 | MMA 95 | a/5 |
| 129 | 410 | 6,7 | Typ 1 | 0,01 | 5 | MMA 95 | b/5 |
| 130 | 410 | 6,7 | Typ 1 | 0,05 | 5 | MMA 95 | b/5 |
| 131 | 410 | 6,7 | Typ 1 | 0,1 | 5 | MMA 95 | b/5 |
| 132 | 412 | 6,7 | Typ 1 | 0,5 | 5 | MMA 95 | b/5 |
| 133 | 414 | 6,7 | Typ 1 | 1 | 5 | MMA 95 | b/5 |
| 134 | 418 | 6,7 | Typ 1 | 2 | 5 | MMA 95 | b/5 |
| 135 | 430 | 6,7 | Typ 1 | 5 | 5 | MMA 95 | b/5 |
| 136 | 410 | 6,7 | Typ 1 | 0,01 | 5 | BA 95 | b/5 |
| 137 | 410 | 6,7 | Typ 1 | 0,05 | 5 | BA 95 | b/5 |
| 138 | 410 | 6,7 | Typ 1 | 0,1 | 5 | BA 95 | b/5 |
| 139 | 412 | 6,7 | Typ 1 | 0,5 | 5 | BA 95 | b/5 |
| 140 | 414 | 6,7 | Typ 1 | 1 | 5 | BA 95 | b/5 |
| 141 | 418 | 6,7 | Typ 1 | 2 | 5 | BA 95 | b/5 |
| 142 | 410 | 6,7 | Typ 1 | 0,01 | 5 | S 95 | b/5 |
| 143 | 410 | 6,7 | Typ 1 | 0,05 | 5 | S 95 | b/5 |
| 144 | 410 | 6,7 | Typ 1 | 0,1 | 5 | S 95 | b/5 |
| 145 | 412 | 6,7 | Typ 1 | 0,5 | 5 | S 95 | b/5 |
| 146 | 414 | 6,7 | Typ 1 | 1 | 5 | S 95 | b/5 |
| 147 | 418 | 6,7 | Typ 1 | 2 | 5 | S 95 | b/5 |
| 148 | 430 | 6,7 | Typ 1 | 5 | 5 | S 95 | b/5 |

1) a: Butandioldiacrylat; b: Divinylbenzol

2. Beispiele 149 bis 158

In einem Reaktionsgefäß mit Rührer wurde eine Lösung Bis-(2-ethylhexyl)sulfosuccinat-Natriumsalz (LUMITEN® IRA der BASF) in Wasser vorgelegt (Vorlage; Einsatzmengen siehe Tabelle 13a). Hierzu gab man innerhalb 2 Minuten eine Lösung des jeweiligen optischen Aufhellers in den zu polymerisierenden Monomeren (Monomer/Aufhellerlösung). Die Bestandteile dieser Lösung sind in Tabelle 13 angegeben. Anschließend rührte man weitere 10 Minuten. Die dabei resultierenden, konventionellen, Monomeremulsionen wurden anschließend in der unter V 1.1 beschriebenen Weise homogenisiert und anschließend polymerisiert. Als Initiator wurde ein Lösung von 1 g Natriumperoxodisulfat in 19 ml Wasser eingesetzt. Die Eigenschaften der Miniemulsionen und der erhaltenen Polymerdispersionen sind in Tabelle 14 angegeben.

Tabelle 13a:

| Bsp. | Vorlage | | Monomer/optische Aufhellerlösung | | | | | |
|---|---|---|---|---|---|---|---|---|
| | $H_2O$ [g] | E [g] | opt. Aufheller/ [g] | SA [g] | S [g] | MA [g] | AN [g] | BA [g] |
| 149 | 387,8 | 1 | Typ2/0,25 | 5 | 47,5 | 47,5 | - | - |
| 150 | 387,8 | 1 | Typ2/0,25 | 5 | 85 | - | 10 | - |
| 151 | 387,8 | 1 | Typ2/0,25 | 5 | 47,5 | - | - | 47,5 |
| 152 | 387 | 0,6 | Typ3/0,01 | 5 | 47,5 | 47,5 | - | - |
| 153 | 387 | 0,6 | Typ3/0,01 | 5 | 85 | - | 10 | - |
| 154 | 387 | 0,6 | Typ3/0,01 | 5 | 47,5 | - | - | 47,5 |
| 155 | 397,5 | 3 | Typ4/2,0 | 5 | 47,5 | 47,5 | - | - |
| 156 | 397,5 | 3 | Typ4/2,0 | 5 | 85 | - | 10 | - |
| 157 | 397,5 | 3 | Typ4/2,0 | 5 | 47,5 | - | - | 47,5 |
| 158 | 397,5 | 3 | Typ4/2,0 | 5 | 95 | - | - | - |

Tabelle 14:

| Bsp.Nr. | FG [%] | TGR Emulsion $\overline{dz}$ nm | TGR Dispersion $d_z$ nm |
|---|---|---|---|
| 123 | 19,8 | 124 | 134 |
| 124 | 19,7 | 105 | 137 |
| 125 | 19,9 | 98 | 116 |
| 126 | 19,6 | 113 | 117 |
| 127 | 19,8 | 102 | 124 |
| 128 | 19,9 | 103 | 115 |
| 129 | 19,6 | 102 | 112 |
| 130 | 19,8 | 108 | 152 |
| 131 | 19,7 | 103 | 148 |
| 132 | 20 | 111 | 149 |
| 133 | 20 | 138 | 130 |
| 134 | 19,7 | 153 | 132 |
| 135 | 19,8 | 490 | 97 |
| 136 | 20 | 126 | 142 |
| 137 | 19,8 | 120 | 143 |
| 138 | 19,9 | 171 | 126 |

Tabelle 14: (fortgesetzt)

| Bsp.Nr. | FG [%] | TGR Emulsion $\overline{dz}$ nm | TGR Dispersion $d_z$ nm |
|---|---|---|---|
| 139 | 19,7 | 149 | 147 |
| 140 | 19,9 | 141 | 139 |
| 141 | 19,4 | 156 | 137 |
| 142 | 19 | 141 | 186 |
| 143 | 18,9 | 161 | 189 |
| 144 | 18,6 | 178 | 182 |
| 145 | 19,2 | 189 | 163 |
| 146 | 19 | 152 | 179 |
| 147 | 19,4 | 177 | 175 |
| 148 | 19 | 199 | 165 |
| 149 | 20 | 114 | 97 |
| 150 | 20 | 125 | 108 |
| 151 | 19,7 | 131 | 125 |
| 152 | 19,9 | 141 | 160 |
| 153 | 20,0 | 150 | 133 |
| 154 | 20,5 | 138 | 134 |
| 155 | 20,0 | 132 | 95 |
| 156 | 19,9 | 157 | 113 |
| 157 | 19,6 | 131 | 114 |
| 158 | 19,7 | 178 | 133 |

XI. Herstellung und anwendungstechnische Prüfung der erfindungsgemäßen pigmenthaltigen Zubereitungen (in Form einer Papierstreichmasse) (Beispiele A1 bis A10 und Vergleichsbeispielen VA1 und VA2)

Herstellung (Beispiele A1 bis A10):

Die erfindungsgemäßen Polymerisate mit optischem Aufheller wurden zusammen mit den im folgenden angegebenen Bestandteilen zu einer Papierstreichfarbe abgemischt (Teile sind Gewichtsteile). Der angegebene Feststoffgehalt wurde durch Zugabe von Wasser eingestellt.

| | |
|---|---|
| 70 Tle. | feinteilige Kreide (Hydrocarb 90) |
| 30 Tle. | feinteiliger Clay (Amazon 88) |
| 0,5 Tle. | Carboxymethylcellulose (CMC 7 L2T) |
| 0,4 Tle. | eines Natriumsalzes einer Polyacrylsäure mit einem Molekulargewicht von 4000 (Polysalz S der BASF AG) |
| 14 Tle. | Bindemittelpolymer in Form eines wässrigen Emulsionspolymerisats auf Basis von Styrol/Butylacrylat (Acronal® S728 der BASF AG) |
| 6 Tle. | Polymerisat mit opt. Aufheller (Tabelle 15) |

| | |
|---|---|
| Feststoffgehalt: | 60 % |
| pH-Wert: | 8,8 bis 9,1 (eingestellt mit NaOH) |

In gleicher Weise wurde Vergleichsbeispiel VA1 hergestellt. Im Unterschied zu den Beispielen A1 bis A10 enthält VA1 kein Polymerisat mit optischem Aufheller und 20 Teile (anstelle von 14 Teilen) Bindemittelpolymer.

Vergleichsbeispiel VA2 enthält im Unterschied zu VA1 zusätzlich 0,9 Gewichtsteile eines wasserlöslichen Aufhellers auf Stilben-Basis (Blankophor® PSG der Bayer AG, Leverkusen).

Verarbeitung:

Diese Papierstreichmassen wurden auf die folgenden Weisen weiterverarbeitet:

Als Rohpapier wurde ein holzhaltiges Streichrohpapier (unsatiniert) mit einem Flächengewicht von 38 $g/m^2$ verwendet. Der Auftrag der Streichmasse erfolgte beidseitig mit jeweils 6 $g/m^2$ auf einer Technikumsstreichmaschine (Auftragsverfahren: Walze, Dosierverfahren: Blade) mit einer Geschwindigkeit von 1000 m/min. Die Papierbahn wurde mittels einer IR—Trockeneinheit und Lufttrocknung auf eine Papierfeuchte von 5,0 % eingestellt.

Die Papierbahn wurde durch einmaligen Durchlauf durch einen Superkalander geglättet. Dabei betrug der Liniendruck 250 kN/m, die Bahngeschwindigkeit 300 m/min und die Temperatur 80 °C.

Untersuchung:

Die Qualität der beschichteten Papiere wurde anhand des Weißgrads CIE gemäß DIN 6174 untersucht. Die Messung erfolgte mit einem Spektralphotometer Typ Elrepho Datacolor 2000. Die Werte sind in Tabelle 15 angegeben.

Zur Bestimmung der Thermostabilität wurden die beschichteten Papiere 48 h bei 120 °C gelagert und anschließend in der beschriebenen Weise vermessen. Die Werte sind in Tabelle 15 angegeben.

Zur Bestimmung der UV-Stabilität wurden die beschichteten Papiere mittels einer Atlas Xenonlampe Suntest XLS Plus 8 h mit Licht im Bereich von 300-800 nm ($\lambda_{max}$ 450 nm) und einer Leistungsdichte von 250 $W/m^2$ belichtet und anschließend vermessen. Die Werte sind in Tabelle 15 angegeben.

Tabelle 15:

| Beispiele | Polymer mit optischem Aufheller (Bsp.) | optischer Aufheller | | Weißgrad CIE | |
|---|---|---|---|---|---|
| | | Typ | % 1) | UV3) | Thermo4) |
| VA1 | - | - | - | 18,6 | 32,9 |
| VA2 | - | B2) | 0,9 | 23,8 | 39,6 |
| A1 | 123 | 1 | 0,03 | 30,7 | 43,4 |
| A2 | 124 | 1 | 0,0012 | 31,1 | 43,0 |
| A3 | 125 | 1 | 0,006 | 32,7 | 42,0 |
| A4 | 126 | 2 | 0,03 | 32,4 | 42,1 |
| A5 | 127 | 2 | 0,006 | 31,4 | 42,7 |
| A6 | 128 | 2 | 0,0012 | 29,2 | 41,9 |
| A7 | 129 | 1 | 0,0006 | 29,3 | 41,5 |
| A8 | 130 | 1 | 0,003 | 28,9 | 42,0 |
| A9 | 136 | 1 | 0,0006 | 29,1 | 41,1 |
| A10 | 137 | 1 | 0,003 | 30,1 | 40,9 |

1) Gew.-%, bezogen auf 100 Gew.-% Füllstoff/Pigment

2) B = Blankophor PSG

3) nach 8 Stunden UV-Belastung (s. o.)

4) nach 48 Stunden thermischer Belastung (s. o.)

**Patentansprüche**

1. Verfahren zur Herstellung Farbstoff enthaltender, wässriger Polymerisatdispersionen durch wässrige Emulsionspolymerisation ethylenisch ungesättigter Monomere in Gegenwart von Radikale bildenden Initiatoren, wobei man wenigstens einen Teil der Monomere in Form einer Öl-in-Wasser-Emulsion E1 einsetzt, deren disperse Phase wenigstens einen öllöslichen Farbstoff enthält, **dadurch gekennzeichnet, dass** die disperse Phase von E1 im wesentlichen von farbstoffhaltigen Monomertröpfchen mit einem Durchmesser < 500 nm gebildet wird.

2. Verfahren nach Anspruch 1, **dadurch gekennzeichnet, dass** die ethylenisch ungesättigten Monomere wenigstens ein monoethylenisch ungesättigtes Monomer A mit einer Wasserlöslichkeit > 0,01 g/l und wenigstens ein monoethylenisch ungesättigtes Monomer B mit einer Wasserlöslichkeit < 0,01 g/l umfassen.

3. Verfahren nach einem der vorhergehenden Ansprüche, **dadurch gekennzeichnet, dass** die Öltröpfchen der Öl-in-Wasser-Emulsion E1 eine nicht copolymerisierbare Verbindung B' mit einer Wasserlöslichkeit < 0,01 g/l enthalten.

4. Verfahren nach einem der vorhergehenden Ansprüche, **dadurch gekennzeichnet, dass** die ethylenisch ungesättigten Monomere wenigstens ein Monomer C umfassen, das wenigstens zwei nicht konjugierte Doppelbindungen aufweist.

5. Verfahren nach einem der vorhergehenden Ansprüche, **dadurch gekennzeichnet, dass** die ethylenisch ungesättigten Monomere wenigstens ein von den Monomeren C verschiedenes, vernetzend wirkendes monoethylenisch ungesättigtes Monomer D umfassen.

6. Verfahren nach einem der vorhergehenden Ansprüche, **dadurch gekennzeichnet, dass** der öllösliche Farbstoff ausgewählt ist unter öllöslichen Derivaten des Naphthalins, des Perylens, des Terrylens, des Quaterrylens, des Diketopyrrolopyrrols, von Perinonfarbstoffen, Cumarinfarbstoffen, Oxazinfarbstoffen, Anthracenfarbstoffen, Azofarbstoffen, Anthrachinonfarbstoffen, Methinfarbstoffen, Azamethinfarbstoffen, Isoindolinund Isoindolinonfarbstoffen, Porphyrinen, Phthalocyaninen und Naphthalocyaninen.

7. Verfahren nach einem der vorhergehenden Ansprüche, **dadurch gekennzeichnet, daß** der öllösliche Farbstoff ein optischer Aufheller ist.

8. Verfahren nach Anspruch 7, **dadurch gekennzeichnet, daß** der optische Aufheller ausgewählt ist unter Verbindungen der Klassen der Bisstyrylbenzole, Stilbene, Benzoxazole, Cumarine, Pyrene oder Naphthaline.

9. Verfahren nach einem der vorhergehenden Ansprüche, **dadurch gekennzeichnet, dass** der öllösliche Farbstoff wenigstens eine copolymerisierbare, nicht zum Chromophor des Farbstoffs gehörende, ethylenisch ungesättigte Doppelbindung aufweist.

10. Verfahren nach Anspruch 9, worin der organische öllösliche Farbstoff ausgewählt ist unter Perylenfarbstoffen der allgemeinen Formel III

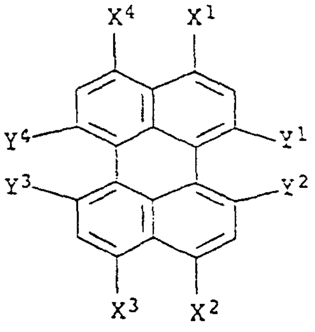

(III) ,

worin eine oder zwei der Gruppen $X^1$ bis $X^4$, $Y^1$ bis $Y^4$ für einen Rest der allgemeinen Formel IV

—X—S—P (IV)

stehen, worin

X ausgewählt ist unter einer Einfachbindung, Ethinylen oder $-(CH_2)_k$-X'- mit k = 0, 1, 2, 3 oder 4 und X' ausgewählt ist unter -O-; -N(R)-; -S-; -O-C(O)-; -O-C(O)-O-; - O-C(O)-N(R')-; -N(R')-C(O)-; -N(R')-C(O)-O-; -N(R')-C(O)-N(R")-; -C(O)-; -C(O)-O-; -C(O)-N(R')-; $-S(O)_2$-O-; $-S(O)_2$-N(R')-; -O-$S(O)_2$-; -N(R')-$S(O)_2$-;
hierin stehen R für Wasserstoff, lineares oder verzweigtes $C_1$-$C_6$-Alkyl, Aryl, Aryl-$C_1$-$C_6$-alkyl, $C_1$-$C_6$-Alkylcarbonyl, Arylcarbonyl oder Formyl, und R', R" unabhängig voneinander für Wasserstoff, lineares oder verzweigtes $C_1$-$C_5$-Alkyl, Aryl oder Aryl-$C_1$-$C_6$-alkyl, die gegebenenfalls durch OH, Halogen, $C_1$-$C_4$-Alkyl oder $C_1$-$C_4$-Alkyloxy substituiert sind,

S ausgewählt ist unter einer Einfachbindung, $C_1$-$C_{12}$-Alkylen, das durch ein oder mehrere, nicht benachbarte Sauerstoffatome, Schwefelatome oder (Alkyl)iminogruppen unterbrochen sein kann, 1,2-, 1,3-, 1,4-Phenylen, das gegebenenfalls ein oder zwei Substituenten aufweist, ausgewählt unter $C_1$-$C_4$-Alkyl, $C_1$-$C_4$-Alkyloxy oder Halogen, 1,2-, 1,3-oder 1,4-Xylylen, das gegebenenfalls wie Phenylen substituiert ist, und

P für eine polymerisierbare Gruppe der allgemeinen Formel II

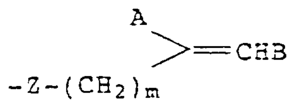

(II)

steht, worin

A und B unabhängig voneinander für Wasserstoff, $C_1$-$C_6$-Alkyl oder Phenyl stehen, oder A und B gemeinsam mit der Doppelbindung, an die sie gebunden sind, einen Cyclopenten- oder Cyclohexenring bilden,

m für 0, 1, 2 oder 3 steht und

Z eine Einfachbindung bedeutet oder eine der oben für X' angegebenen Bedeutungen besitzt, oder

$X^1$ gemeinsam mit $X^4$ und/oder $X^2$ gemeinsam mit $X^3$ für eine Gruppe der allgemeinen Formel V

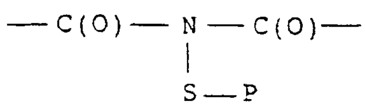

(V)

steht, worin S und P eine der vorgenannten Bedeutungen aufweisen, und
die verbleibenden Gruppen $X^1$ bis $X^4$, $Y^1$ bis $Y^4$ unabhängig voneinander ausgewählt sind unter Wasserstoff, linearem oder verzweigtem $C_1$-$C_{12}$-Alkyl, das gegebenenfalls durch ein oder mehrere, nicht benachbarte Sauerstoffatome, Schwefelatome oder durch (Alkyl)iminogruppen unterbrochen und/oder durch OH und/oder Halogen substituiert sein kann, Cycloalkyl, Heterocycloalkyl, Aryl, Heteroaryl, Aryl-$C_1$-$C_6$-alkyl, Heteroaryl-$C_1$-$C_6$-alkyl, $C_2$-$C_{18}$-Alkinyl, Arylethinyl, Tris($C_1$-$C_4$-alkyl)silylethinyl, Cyano, Nitro, Halogen;
und/oder für Atomgruppen ausgewählt unter:
- O-R; -O-C(O)-R'; -N(R')-C(O)-R"; -NRR'; -C(O)-R; -C(O)-OR'; - C(O)-NR'R"; -N(R')-C(O)-OR; -N(R')C(O)-NR'R", -O-$S(O)_2$-R, N(R')-$S(O)_2$-R" stehen, worin R, R' und R" die zuvor angegebenen Bedeutungen aufweisen,
die verbleibenden Gruppen $X^1$ gemeinsam mit $X^4$ und/oder $X^2$ gemeinsam mit $X^3$ ferner für -X"-C(O)- , -C(O)-N (R"')-C(O)-oder -C(O)-O-C(O)- stehen können, worin R"' die für R' angegebenen Bedeutungen besitzt und X" für -CH=CH-, 1,2-Phenylen, 1,2-Naphthylen, 2,3-Naphthylen oder 2,3-Pyridinylen, die gegebenenfalls mit $C_1$-$C_4$-Alkylen, $C_1$-$C_4$-Alkoxy oder Halogen einoder zweifach substituiert sind, steht.

**11.** Verfahren nach einem der vorhergehenden Ansprüche, **dadurch gekennzeichnet, dass** der Initiator in Wasser löslich ist.

**12.** Verfahren nach Anspruch 11, **dadurch gekennzeichnet, daß** der in Wasser lösliche Initiator ein nichtionisches Peroxid, insbesondere Wasserstoffperoxid, und gegebenenfalls ein oder mehrere Reduktionsmittel umfasst.

**13.** Verfahren nach einem der vorhergehenden Ansprüche, **dadurch gekennzeichnet, dass** die farbstoffhaltigen Monomertröpfchen der Öl-in-Wasser-Emulsion E1 einen mittleren Durchmesser $\bar{d}_z$ im Bereich von 100 bis 400 nm aufweisen.

**14.** Verfahren nach einem der vorhergehenden Ansprüche, **dadurch gekennzeichnet, daß** man die Öl-in-Wasser-Emulsion E1 durch Homogenisierung einer konventionellen, farbstoffhaltige Öl-in-Wasser-Emulsion der Monomere mittels Ultraschall herstellt, wobei der Farbstoff in den Monomertröpfchen der konventionellen Emulsion gelöst oder molekulardispers verteilt vorliegt.

**15.** Farbstoffhaltige, wässrige Polymerisatdispersionen, worin die Polymerisatteilchen einen mittleren Durchmesser $d_z$ < 1 000 nm aufweisen und wenigstens 0,01 Gew.-% wenigstens eines öllöslichen Farbstoffs in molekulardisperser Form enthalten, und die weiterhin aus wenigstens einem monoethylenisch ungesättigten Monomer A mit einer Wasserlöslichkeit > 0,01 g/l, und wenigstens einer weiteren, pelymerisationsaktiven Verbindung aufgebaut sind, die ausgewählt ist unter

- monoethylenisch ungesättigten Monomeren B, die eine Wasserlöslichkeit < 0,01 g/l aufweisen,
- Monomeren C, die wenigstens zwei nicht konjugierte, ethylenisch ungesättigte Doppelbindungen aufweisen,
- vernetzend wirkenden Monomeren D
- copolymerisierbaren Farbstoffen aus einem der Ansprüche 9 oder 10,

ausgenommen solche farbstoffhaltigen wässrigen Polymerisatdispersionen, die bis zu 3 Gew.-%, bezogen auf die Polymermatrix, eines mehrkernigen aromatischen Kohlenwasserstoffs, ausgewählt unter Naphthalin, Anthracen und deren substituierten, aromatischen Derivaten, enthalten.

**16.** Farbstoffhaltige, wässrige Polymerisatdispersionen nach Anspruch 15, worin die polymere Matrix, gebildet aus den einpolymerisierten Monomeren A, B, sowie gegebenenfalls C und D, aus

- 50 bis 99,5 Gew.-% Monomeren A,
- 0,5 bis 50 Gew.-% Monomeren B,
- 0 bis 30 Gew.-% Monomeren C, und
- 0 bis 30 Gew.-% Monomeren D

aufgebaut ist.

**17.** Farbstoffhaltige, wässrige Polymerisatdispersion nach Anspruch 15 oder 16, enthaltend wenigstens einen nicht copolymerisierbaren Farbstoff, worin die Polymermatrix wenigstens eine Verbindung, ausgewählt unter den Monomeren C und den Verbindungen D, in Mengen > 0,1 Gew.-%, bezogen auf die Polymermatrix, einpolymerisiert enthält.

**18.** Farbstoffhaltige, wässrige Polymerisatdispersionen nach einem der Ansprüche 15 bis 17, enthaltend wenigstens einen copolymerisierbaren Farbstoff aus einem der Ansprüche 9 oder 10.

**19.** Farbstoffhaltige, wässrige Polymerisatdispersionen nach einem der Ansprüche 15 bis 18, worin die Polymerisatteilchen eine monomodale Teilchengrößenverteilung mit einem mittleren Teilchendurchmesser $d_z$ im Bereich von 100 bis 400 nm aufweisen.

**20.** Farbstoffhaltige, wässrige Polymerisatdispersion nach einem der Ansprüche 15 bis 19, worin die in den Polymerisatteilchen einpolymerisierten Monomere A

- 0,5 bis 30 Gew.-% wenigstens eines Monomers A1 mit einer wasserlöslichkeit > 60 g/l (jeweils bei 25°C und 1 atm), bezogen auf die Gesamtmonomermenge, und.

- 70 bis 99,5 Gew.-% wenigstens eines Monomers A2 mit einer Wasserlöslichkeit von 0,01 bis 60 g/l (jeweils bei 25°C und 1 atm), bezogen auf die Gesamtmonomermenge, umfassen.

**21.** Farbstoffhaltige, wässrige Polymerisatdispersion nach Anspruch 20, wobei die Monomere A2 ausgewählt sind unter monoethylenisch ungesättigten, kationischen Monomeren.

**22.** Farbstoffhaltige, wässrige Polymerisatdispersion nach Anspruch 20, wobei die Monomere A2 ausgewählt sind unter monoethylenisch ungesättigten Monomeren, die wenigstens eine Säuregruppe, gegebenenfalls in deprotonierter Form, aufweisen.

**23.** Farbstoffhaltiges Polymerisatpulver, erhältlich durch Trocknen der wässrigen Polymerisatdispersionen nach einem der Ansprüche 15 bis 22.

**24.** Wässrige, farbstoffhaltige Zubereitung, enthaltend:

i. wenigstens ein farbstoffhaltiges Polymerisat, das in der Zubereitung in Form dispers verteilter Polymerisatteilchen vorliegt und das augewählt ist unter den Polymerisaten der wässrigen, farbstoffhaltigen Polymerdispersionen gemäß einem der Ansprüche 15 bis 22 und den Polymerisatpulvern gemäß Anspruch 23 und

ii. übliche Hilfsmittel.

**25.** Zubereitung nach Anspruch 24, zusätzlich enthaltend wenigstens ein in Wasser lösliches Polymer PW.

**26.** Zubereitung nach Anspruch 25, wobei das Polymer PW kationische Gruppen aufweist.

**27.** Zubereitung nach Anspruch 26, wobei das Polymer PW ein Copolymer ist, das aufgebaut ist aus wenigstens einem monoethylenisch ungesättigten, kationischen Monomer, insbesondere einem Monomer mit wenigstens einer quartären Amoniumgruppe oder Imoniumgruppe, und wenigstens einem weiteren neutralen Monomer.

**28.** Zubereitung nach Anspruch 27, wobei das Polymer PW ausgewählt ist unter:

- Copolymeren des 1-Vinylpyrrolidons mit 1-Vinyl-3-alkylimidazolium-Salzen,
- Copolymeren des 1-Vinylpyrrolidons mit Methacryloyloxyethyltrialkylamonium-Salzen,
- Terpolymeren des Vinylpyrrolidons und des Vinylcaprolactams mit 1-Vinyl-3-alkylimidazolium-Salzen.

**29.** Zubereitung nach Anspruch 25, wobei das Polymer PW saure funktionelle Gruppen und/oder anionische funktionelle Gruppen aufweist.

**30.** Zubereitung nach Anspruch 29, wobei das Polymer PW ein Copolymer ist, das aufgebaut ist aus:

- wenigstens einem monoethylenisch ungesättigten Monomer MA, ausgewählt unter Monomeren mit wenigstens einer Säuregruppe und deren Salzen, und
- wenigstens einem weiteren neutralen Monomer.

**31.** Zubereitung nach Anspruch 29 oder 30, wobei das Polymer PW ausgewählt ist unter:

- Eomo- und Copolymeren der 2-Acrylamido-2-methylpropansulfonsäure,

- Copolymeren der Acrylsäure und/oder der Methacrylsäure mit Styrol,

- den Copolymeren der Acrylsäure und/oder der Methacrylsäure mit $C_1$-$C_{10}$-Alkylestern der Acrylsäure und/oder der Methacrylsäure,

- den Copolymeren der Maleinsäure oder des Maleinsäureanhydrids mit Olefinen, insbesondere mit Diisobuten,

- den Formaldehyd-Kondensationsprodukten einer Arylsulfonsäure, insbesondere einer Naphthalinsulfosäure

und deren Salzen.

**32.** Verwendung der wässrigen, farbstoffhaltigen Zubereitung gemäß einem der Anspruche 24 bis 31 als Tinten, insbesondere für das Ink-Jet-Verfahren.

**33.** Wässrige, pigmenthaltige Zubereitung, enthaltend:

i. wenigstens ein farbstoffhaltiges Polymerisat, das in der Zubereitung in Form dispers verteilter Polymerisatteilchen vorliegt, das augewählt ist unter den Polymerisaten der wässrigen, farbstoffhaltigen Polymerdispersionen gemäß einem der Ansprüche 15 bis 22 und dem Polymerisataulver gemäß Anspruch 23 und das als öllöslichen Farbstoff wenigstens einen optischen Aufheller umfasst,

ii. wenigstens ein farbstofffreies, filmbildendes, wasserunlösliches Polymer, das aus ethylenisch ungesättigent Monomeren aufgebaut ist, in Form seiner wässrigen Dispersion,

iii.wenigstens ein anorganisches Weißpigment und gegebenenfalls einen anorganischen Füllstoff, und

iv. Hilfsmittel.

**34.** Verwendung einer Zubereitung nach Anspruch 33 als Papierstreichmasse.

**Claims**

**1.** A process for preparing dye-comprising aqueous polymer dispersions by aqueous emulsion polymerization of ethylenically unsaturated monomers in the presence of free-radical initiators, in which process at least some of the monomers are employed in the form of an oil-in-water emulsion E1 whose disperse phase comprises at least one oil-soluble dye, wherein the disperse phase of E1 is formed essentially of dye-comprising monomer droplets having a diameter < 500 nm.

**2.** A process as claimed in claim 1, wherein the ethylenically unsaturated monomers comprise at least one monoethylenically unsaturated monomer A having a water solubility > 0.01 g/l and at least one monoethylenically unsaturated monomer B having a water solubility < 0.01 g/l.

**3.** A process as claimed in either of the preceding claims, wherein the oil droplets of the oil-in-water emulsion E1 comprise a noncopolymerizable compound B' having a water solubility < 0.01 g/l.

**4.** A process as claimed in any of the preceding claims, wherein the ethylenically unsaturated monomers comprise at least one monomer C which has at least two nonconjugated double bonds.

**5.** A process as claimed in any of the preceding claims, wherein the ethylenically unsaturated monomers comprise at least one monoethylenically unsaturated monomer D which is different from the monomers C and has a crosslinking action.

**6.** A process as claimed in any of the preceding claims, wherein the oil-soluble dye is selected from oil-soluble derivatives of naphthalene, perylene, terrylene, quaterrylene, diketopyrrolopyrrole, from perinone dyes, coumarin dyes, oxazine dyes, anthracene dyes, azo dyes, anthraquinone dyes, methine dyes, azamethine dyes, isoindoline dyes and isoindolinone dyes, porphyrins, phthalocyanines and naphthalocyanines.

**7.** A process as claimed in any of the preceding claims, wherein the oil-soluble dye is an optical brightener.

**8.** A process as claimed in claim 7, wherein the optical brightener is selected from compounds from the classes of the bisstyrylbenzenes, stilbenes, benzoxazoles, coumarins, pyrenes and naphthalenes.

**9.** A process as claimed in any of the preceding claims, wherein the oil-soluble dye has at least one copolymerizable, ethylenically unsaturated double bond which does not belong to the chromophore of the dye.

**10.** A process as claimed in claim 9, wherein the oil-soluble organic dye is selected from perylene dyes of the formula III

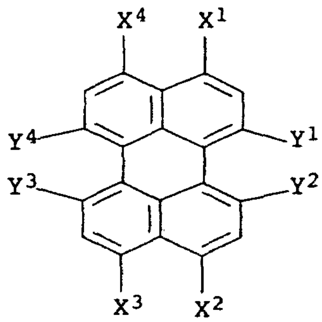

(III) ,

in which one or two of the groups $X^1$ to $X^4$, $Y^1$ to $Y^4$ is or are a radical of the formula IV

$$—X—S—P \qquad (IV)$$

in which

X is selected from a single bond, ethynylene or $-(CH_2)_k$-X'- where k = 0, 1, 2, 3 or 4 and X' is selected from -O-; - N(R)-; -S-; -O-C(O)-; -O-C(O)-O-; -O-C(O)-N(R')-; - N(R')-C(O)-; -N(R')-C(O)-O-; -N(R')-C(O)-N(R")-; -C(O)-; - C(O)-O-; -C(O)-N(R')-; $-S(O)_2$-O-; $-S(O)_2$-N(R')-; $-O-S(O)_2$-; $-N(R')-S(O)_2$-;
in which R is hydrogen, linear or branched $C_1$-$C_6$-alkyl, aryl, aryl-$C_1$-$C_6$-alkyl, $C_1$-$C_6$-alkylcarbonyl, arylcarbonyl or formyl and R', R" independently of one another are hydrogen, linear or branched $C_1$-$C_6$-alkyl, aryl or aryl-$C_1$-$C_6$-alkyl which are optionally substituted by OH, halogen, $C_1$-$C_4$-alkyl or $C_1$-$C_4$-alkyloxy,

S is selected from a single bond, $C_1$-$C_{12}$-alkylene which can be interrupted by one or more nonadjacent oxygen atoms, sulfur atoms or (alkyl)imino groups, or is 1,2-, 1,3- or 1,4-phenylene which optionally has one or two substituents selected from $C_1$-$C_4$-alkyl, $C_1$-$C_4$-alkyloxy or halogen, or is 1,2-, 1,3- or 1,4-xylylene which is optionally substituted as for phenylene, and

P is a polymerizable group of the formula II

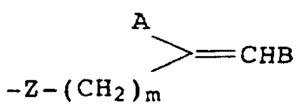

(II)

in which

A and B independently of one another are hydrogen, $C_1$-$C_6$-alkyl or phenyl, or A and B together with the double bond to which they are attached form a cyclopentene or cyclohexene ring,

m is 0, 1, 2 or 3, and

Z is a single bond or possesses one of the definitions indicated above for X', or

$X^1$ together with $X^4$ and/or $X^2$ together with $X^3$ are a group of the formula V

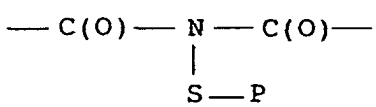

(V)

in which S and P possess one of the above-mentioned definitions, and

the remaining groups $X^1$ to $X^4$, $Y^1$ to $Y^4$ independently of one another are selected from hydrogen, linear or branched $C_1$-$C_{12}$-alkyl which can if desired be interrupted by one or more nonadjacent oxygen atoms, sulfur atoms or by (alkyl)imino groups and/or can be substituted by OH and/or halogen, or are cycloalkyl, heterocycloalkyl, aryl, hetaryl, aryl-$C_1$-$C_6$-alkyl, hetaryl-$C_1$-$C_6$-alkyl, $C_2$-$C_{18}$-alkynyl, arylethynyl, tris($C_1$-$C_4$-alkyl)silylethynyl, cyano, nitro, halogen;
and/or atomic groups selected from: -O-R; -O-C(O)-R'; -N(R')-C(O)-R''; -NRR'; -C(O)-R; -C(O)-OR'; - C(O)-NR'R''; -N(R')-C(O)-OR; -N(R')C(O)-NR'R'', -O-S(O)$_2$-R, - N(R')-S(O)$_2$-R'', in which R, R' and R'' have the definitions indicated above,
the remaining groups $X^1$ together with $X^4$ and/or $X^2$ together with $X^3$ can furthermore be -X''-C(O)-, -C(O)-N(R''') -C(O)- or -C(O)-O-C(O)-, in which R''' has the definitions indicated for R' and X'' is -CH=CH-, 1,2-phenylene, 1,2-naphthylene, 2,3-naphthylene or 2,3-pyridinylene, each of which is unsubstituted or substituted once or twice by $C_1$-$C_4$-alkylene, $C_1$-$C_4$-alkoxy or halogen.

**11.** A process as claimed in any of the preceding claims, wherein the initiator is soluble in water.

**12.** A process as claimed in claim 11, wherein the water-soluble initiator comprises a nonionic peroxide, especially hydrogen peroxide, and, if desired, one or more reducing agents.

**13.** A process as claimed in any of the preceding claims, wherein the dye-comprising monomer droplets of the oil-in-water emulsion E1 have an average diameter $\bar{d}_z$ in the range from 100 to 400 nm.

**14.** A process as claimed in any of the preceding claims, wherein the oil-in-water emulsion E1 is prepared by homogenizing a conventional, dye-comprising oil-in-water emulsion of the monomers by means of ultrasound, the dye in the monomer droplets of the conventional emulsion being in dissolved or molecularly disperse form.

**15.** A dye-comprising aqueous polymer dispersion in which the polymer particles have an average diameter $d_z$ < 1000 nm and comprise at least 0.01% by weight of at least one oil-soluble dye in molecularly disperse form and which, furthermore, is composed of at least one monoethylenically unsaturated monomer A having a water solubility > 0.01 g/l and at least one further, polymerization-active compound which is selected from

- monoethylenically unsaturated monomers B having a water solubility < 0.01 g/l,
- monomers C which have at least two nonconjugated, ethylenically unsaturated double bonds,
- crosslinking monomers D, and
- copolymerizable dyes from either of claims 9 and 10,

with the exception of any dye-comprising aqueous polymer dispersion which comprises up to 3% by weight, based on the polymer matrix, of a polynuclear aromatic hydrocarbon selected from naphthalene, anthracene and the substituted aromatic derivatives thereof.

**16.** A dye-comprising aqueous polymer dispersion as claimed in claim 15, wherein the polymeric matrix formed from the copolymerized monomers A, B and, if desired, C and D is composed of

- from 50 to 99.5% by weight of monomers A,
- from 0.5 to 50% by weight of monomers B,
- from 0 to 30% by weight of monomers C, and
- from 0 to 30% by weight of monomers D

**17.** A dye-comprising aqueous polymer dispersion as claimed in claim 15 or 16, comprising at least one noncopolymerizable dye, wherein the polymer matrix comprises, in copolymerized form, at least one compound selected from the monomers C and the compounds D, in amounts of > 0.1% by weight, based on the polymer matrix.

**18.** A dye-comprising aqueous polymer dispersion as claimed in any of claims 15 to 17, comprising at least one copolymerizable dye from either of claims 9 and 10.

**19.** A dye-comprising aqueous polymer dispersion as claimed in any of claims 15 to 18, wherein the polymer particles have a monomodal particle size distribution with an average particle diameter $d_z$ in the range from 100 to 400 nm.

**20.** A dye-comprising aqueous polymer dispersion as claimed in any of claims 15 to 19, wherein the monomers A

copolymerized in the polymer particles comprise

- from 0.5 to 30% by weight of at least one monomer A1 having a water solubility > 60 g/l (in each case at 25°C and 1 atm), based on the total monomer amount, and
- from 70 to 99.5% by weight of at least one monomer A2 having a water solubility of from 0.01 to 60 g/l (in each case at 25°C and 1 atm), based on the total monomer amount.

**21.** A dye-comprising aqueous polymer dispersion as claimed in claim 20, wherein the monomers A2 are selected from monoethylenically unsaturated cationic monomers.

**22.** A dye-comprising aqueous polymer dispersion as claimed in claim 20, wherein the momomers A2 are selected from monoethylenically unsaturated monomers which have at least one acid group, possibly in deprotonated form.

**23.** A dye-comprising polymer powder obtainable by drying an aqueous polymer dispersion as claimed in any of claims 15 to 22.

**24.** An aqueous dye-comprising formulation comprising:

i. at least one dye-comprising polymer which is present in the formulation in the form of dispersed polymer particles and is selected from the polymers present in the aqueous, dye-comprising polymer dispersion as claimed in any of claims 15 to 22, and the polymer powder as claimed in claim 23 and

ii. customary auxiliaries.

**25.** A formulation as claimed in claim 24, additionally comprising at least one water-soluble polymer PW.

**26.** A formulation as claimed in claim 25, wherein the polymer PW has cationic groups.

**27.** A formulation as claimed in claim 26, wherein the polymer PW is a copolymer which is composed of at least one monoethylenically unsaturated, cationic monomer, especially a monomer having at least one quaternary ammonium or immonium group, and at least one further, neutral monomer.

**28.** A formulation as claimed in claim 27, wherein the polymer PW is selected from:

- copolymers of 1-vinylpyrrolidone with 1-vinyl-3-alkylimidazolium salts,
- copolymers of 1-vinylpyrrolidone with methacryloyloxyethyltrialkylammonium salts,
- terpolymers of vinylpyrrolidone and vinylcaprolactam with 1-vinyl-3-alkylimidazolium salts.

**29.** A formulation as claimed in claim 25, wherein the polymer PW has acidic functional groups and/or anionic functional groups.

**30.** A formulation as claimed in claim 29, wherein the polymer PW is a copolymer composed of

- at least one monoethylenically unsaturated monomer MA selected from monomers having at least one acid group and salts thereof, and
- at least one further, neutral monomer.

**31.** A formulation as claimed in claim 29 or 30, wherein the polymer PW is selected from

- homopolymers and copolymers of 2-acrylamido-2-methylpropanesulfonic acid,

- copolymers of acrylic acid and/or of methacrylic acid with styrene,

- copolymers of acrylic acid and/or of methacrylic acid with $C_1$-$C_{10}$-alkyl esters of acrylic acid and/or of methacrylic acid,

- copolymers of maleic acid or of maleic anhydride with olefins, especially with diisobutene,

- the formaldehyde condensates of an arylsulfonic acid, especially a naphthalenesulfonic acid

and salts thereof.

**32.** The use of an aqueous, dye-comprising formulation as claimed in any of claims 24 to 31 as an ink, especially for the inkjet process.

**33.** An aqueous pigmented formulation comprising

i. at least one dye-comprising polymer which is present in the formulation in the form of dispersed polymer particles and is selected from the polymers of the aqueous dye-comprising polymer dispersion as claimed in any of claims 15 to 22 and from the polymer powder as claimed in claim 23, and whose oil-soluble dye comprises at least one optical brightener,

ii. at least one dye-free, film-forming water-insoluble polymer which is composed of ethylenically unsaturated monomers, in the form of its aqueous dispersion,

iii.at least one inorganic white pigment alone or together with an inorganic filler, and

iv. auxiliaries.

**34.** The use of a formulation as claimed in claim 33 as a paper coating slip.

**Revendications**

**1.** Procédé pour produire des dispersions aqueuses de polymères contenant des colorants, au moyen d'une polymérisation en émulsion aqueuse de monomères à insaturation éthylénique en présence d'amorceurs formant des radicaux, dans lequel on met en oeuvre au moins une partie des monomères sous la forme d'une émulsion huile dans l'eau E1 dont la phase dispersée contient au moins un colorant oléosoluble, **caractérisé en ce que** la phase dispersée de E1 est principalement formée de gouttelettes de monomères contenant des colorants d'un diamètre inférieur à 500 nm.

**2.** Procédé selon la revendication 1, **caractérisé en ce que** les monomères à insaturation éthylénique comprennent au moins un monomère A à insaturation monoéthylénique présentant une hydrosolubilité supérieure à 0,01 g/L et au moins un monomère B à insaturation monoéthylénique présentant une hydrosolubilité inférieure à 0,01 g/L.

**3.** Procédé selon l'une quelconque des revendications précédentes, **caractérisé en ce que** les gouttelettes d'huile de l'émulsion huile dans l'eau E1 contiennent un composé non copolymérisable B' présentant une hydrosolubilité inférieure à 0,01 g/L.

**4.** Procédé selon l'une quelconque des revendications précédentes, **caractérisé en ce que** les monomères à insaturation éthylénique comprennent au moins un monomère C qui présente au moins deux doubles liaisons non conjuguées.

**5.** Procédé selon l'une quelconque des revendications précédentes, **caractérisé en ce que** les monomères à insaturation éthylénique comprennent au moins un monomère D à insaturation monoéthylénique à effet réticulant, différent du monomère C.

**6.** Procédé selon l'une quelconque des revendications précédentes, **caractérisé en ce que** le colorant oléosoluble est choisi parmi les dérivés oléosolubles du naphtalène, du pérylène, du terrylène, du quaterrylène, du dicétopyrrolopyrrol, de colorants périnone, de colorants coumarine, de colorants oxazine, de colorants anthracène, de colorants azoïques, de colorants anthraquinone, de colorants méthine, de colorants azaméthine, de colorants isoindoline et de colorants isoindolinone, de porphyrines, de phtalocyanines et de naphtalocyanines.

**7.** Procédé selon l'une quelconque des revendications précédentes, **caractérisé en ce que** le colorant oléosoluble est un azurant.

**8.** Procédé selon la revendication 7, **caractérisé en ce que** l'azurant est choisi parmi les composés de la classe des bisstyrylbenzènes, des stilbènes, des benzoxazoles, des coumarines, des pyrènes ou des naphtalènes.

**9.** Procédé selon l'une quelconque des revendications précédentes, **caractérisé en ce que** le colorant oléosoluble présente au moins une double liaison à insaturation éthylénique copolymérisable ne faisant pas partie du chromophore du colorant.

**10.** Procédé selon la revendication 9, dans lequel le colorant oléosoluble est choisi parmi les colorants pérylène de formule générale III

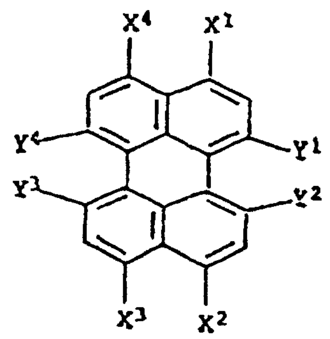

(III) ,

dans laquelle un ou deux des groupes $X^1$ à $X^4$, $Y^1$ à $Y^4$ représentent un groupe de formule générale IV

$$—X—S—P \qquad (IV)$$

dans laquelle,

X est choisi parmi une liaison simple, un groupe éthinylène ou $-(CH_2)_k-X'-$ dans lequel k = 0, 1, 2, 3 ou 4 et X' est choisi parmi -O- ; -N(R)- ; -S- ; -O-C(O)- ; -O-C(O)-O ; -O-C(O)-N(R')- ; -N(R')-C(O)- ; -N(R')-C(O)-O- ; -N(R')-C(O)-N(R")- ; -C(O)- ; -C(O)-O- ; -C(O)-N(R')- ; $-S(O)_2-O-$ ; $-S(O)_2-N(R')-$ ; $-O-S(O)_2-$ ; $-N(R')-S(O)_2-$ ; ici, les R représentent un atome d'hydrogène, un groupe alkyle en $C_1$ à $C_6$ linéaire ou ramifié, un groupe aryle, aryle(alkyle en $C_1$ à $C_6$), (alkyle en $C_1$ à $C_6$)carbonyle, arylcarbonyle ou formyle, et R', R" représentent, indépendamment les uns des autres, un atome d'hydrogène, un groupe alkyle en $C_1$ à $C_6$ linéaire ou ramifié, un groupe aryle, aryle(alkyle en $C_1$ à $C_6$) qui sont éventuellement substitués par un groupe OH, un atome d'halogène, un groupe alkyle en $C_1$ à $C_4$ ou alkyloxy en $C_1$ à $C_4$,

S est choisi parmi une liaison simple, un groupe alkylène en $C_1$ à $C_{12}$ qui peut être interrompu par un ou plusieurs atome d'oxygène, atomes de soufre non vicinaux ou par des groupes (alkyl)imino, un groupe 1,2-, 1,3-, 1,4-phénylène qui présente éventuellement un ou deux substituants choisis parmi un groupe alkyle en $C_1$ à $C_4$, alkyloxy en $C_1$ à $C_4$ ou un atome d'halogène, un groupe 1,2-, 1,3-, 1,4-xylylène, qui est éventuellement substitué de la même manière que le groupe phénylène, et

P représente un groupe polymérisable de formule générale II

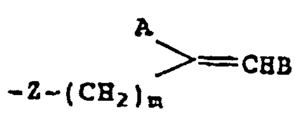

(II)

dans laquelle,

A et B représentent, indépendamment l'un de l'autre, un atome d'hydrogène, un groupe alkyle en $C_1$ à $C_6$ ou un groupe phényle, ou bien A et B représentent, conjointement avec la double liaison à laquelle ils sont liés, un noyau cyclopentène ou cyclohexène,

m vaut 0, 1, 2 ou 3 et

Z représente une liaison simple ou possède l'une des significations données ci-dessus pour X', ou
$X^1$, conjointement avec $X^4$, et/ou $X^2$, conjointement avec
$X^3$, représentent un groupe de formule générale V

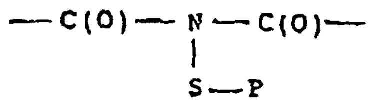

(V)

dans laquelle S et P possèdent l'une des significations susmentionnées, et
les groupes $X^1$ à $X^4$, $Y^1$ à $Y^4$ restants sont choisis, indépendamment les uns des autres, parmi un atome d'hydrogène, un groupe alkyle en $C_1$ à $C_{12}$ linéaire ou ramifié qui est éventuellement interrompu par un ou plusieurs atomes d'oxygène, atomes de soufre non vicinaux ou par des groupes alkyl(imino) et/ou qui peut être substitué par un groupe OH et/ou un atome d'halogène, un groupe cycloalkyle, hétérocycloalkyle, aryle, hétéroaryle, aryle (alkyle en $C_1$ à $C_6$), hétéroaryle(alkyle en $C_1$ à $C_6$), alcynyle en $C_2$ à $C_{18}$, aryléthinyle, tris(alkyle en $C_1$ à $C_4$) silyléthinyle, cyano, nitro, halogéno ;
et/ou représentent des groupes d'atomes choisis parmi : -O-R ; -O-C(O)-R' ; -N(R')-C(O)-R" ; -NRR' ; -C(O)-R ; -C (O)-OR' ; -C(O)-NR'R" ; -N(R')-C(O)-OR ; -N(R')C(O)-NR'R" ; -O-$S(O)_2$-R ; N(R')-$S(O)_2$-R", où R, R' et R" possèdent les significations mentionnées précédemment,
les groupes $X^1$, conjointement avec $X^4$, et/ou $X^2$, conjointement avec $X^3$ restants pouvant en outre représenter -X"-C(O)-, -C(O)-N(R"')-C(O)- ou - C(O)-O-C(O)-, où R"' possède les significations données pour R', et X" représente un groupe -CH=CH-, 1,2-phénylène, 1,2-naphtylène, 2,3-naphtylène ou 2,3-pyridinylène qui sont éventuellement substitués une ou deux fois par un groupe alkylène en $C_1$ à $C_4$, alcoxy en $C_1$ à $C_4$ ou par un atome d'halogène.

**11.** Procédé selon l'une quelconque des revendications précédentes, **caractérisé en ce que** l'amorceur est hydrosoluble.

**12.** Procédé selon la revendication 11, **caractérisé en ce que** l'amorceur hydrosoluble est un peroxyde non ionique, en particulier un peroxyde d'hydrogène, et **en ce qu'**il comprend éventuellement un ou plusieurs agents réducteurs.

**13.** Procédé selon l'une quelconque des revendications précédentes, **caractérisé en ce que** les gouttelettes de monomères contenant des colorants de l'émulsion huile dans l'eau E1 présentent un diamètre moyen $d_Z$ allant de 100 nm à 400 nm.

**14.** Procédé selon l'une quelconque des revendications précédentes, **caractérisé en ce que** l'on prépare l'émulsion huile dans l'eau E1 en homogénéisant une émulsion classique huile dans l'eau des monomères contenant des colorants au moyen d'ultrasons, le colorant dans les gouttelettes de monomères de l'émulsion classique se présentant sous forme dissoute et de dispersion moléculaire.

**15.** Dispersions aqueuses de polymères contenant des colorants, dans lesquelles les particules de polymères présentent un diamètre moyen $d_Z$ inférieur à 1 000 nm et contiennent 0,01% en poids d'au moins un colorant oléosoluble sous forme de dispersion moléculaire, et qui sont formées en outre d'au moins un monomère A à insaturation monoéthylénique présentant une hydrosolubilité supérieure à 0,01 g/L et au moins un autre composé actif dans la polymérisation qui est choisi parmi

- les monomères B à insaturation monoéthylénique qui présentent une hydrosolubilité inférieure à 0,01 g/L,
- les monomères C qui présentent au moins deux doubles liaisons à insaturation éthylénique non conjuguées,
- les monomères D à effet réticulant,
- les colorants copolymérisables de l'une quelconque des revendications 9 ou 10,

à l'exception des dispersions aqueuses de polymères contenant des colorants qui contiennent jusqu'à 3% en poids, par rapport à la matrice polymère, d'un hydrocarbure aromatique polynucléaire choisi parmi le naphtalène, l'anthracène et leurs dérivés aromatiques substitués.

**16.** Dispersions aqueuses de polymères contenant des colorants selon la revendication 15, dans lesquelles la matrice polymère, formée des monomères A, B, et éventuellement C et D, sous forme polymérisée, se compose de

- 50% à 99,5% en poids de monomères A,
- 0,5% à 50% en poids de monomères B,
- 0% à 30% en poids de monomères C, et
- 0% à 30% en poids de monomères D.

**17.** Dispersions aqueuses de polymères contenant des colorants selon la revendication 15 ou 16, contenant au moins un colorant non copolymérisable, dans lesquelles la matrice polymère contient au moins un composé sous forme polymérisée, choisi parmi les monomères C et les composés D, à raison de plus de 0,1% en poids par rapport à la matrice polymère.

**18.** Dispersions aqueuses de polymères contenant des colorants selon l'une quelconque des revendications 15 à 17, contenant au moins un colorant copolymérisable de l'une quelconque des revendications 9 ou 10.

**19.** Dispersions aqueuses de polymères contenant des colorants selon l'une quelconque des revendications 15 à 18, dans lesquelles les particules de polymère présentent une distribution granulométrique monomodale avec un diamètre moyen des particules $d_Z$ allant de 100 nm à 400 nm.

**20.** Dispersions aqueuses de polymères contenant des colorants selon l'une quelconque des revendications 15 à 19, dans lesquelles les monomères A polymérisés dans les particules de polymère comprennent

- 0,5% à 30% en poids, par rapport à la quantité totale des monomères, d'au moins un monomère A1 présentant une hydrosolubilité supérieure à 60 g/L (à chaque fois à une température de 25°C et sous une pression de 101,3 kPa (1 atm)),
- 70% à 99,5% en poids, par rapport à la quantité totale des monomères, d'au moins un monomère A2 présentant une hydrosolubilité allant de 0,01 g/L à 60 g/L (à chaque fois à une température de 25°C et sous une pression de 101,3 kPa (1 atm)).

**21.** Dispersions aqueuses de polymères contenant des colorants selon la revendication 20, dans lesquelles les monomères A2 sont choisis parmi les monomères cationiques à insaturation monoéthyléniques.

**22.** Dispersions aqueuses de polymères contenant des colorants selon la revendication 20, dans lesquelles les monomères A2 sont choisis parmi les monomères à insaturation monoéthylénique qui présentent au moins un groupe acide, éventuellement sous forme déprotonée.

**23.** Poudre de polymère contenant des colorants, pouvant être obtenue en séchant les dispersions aqueuses de polymères selon l'une quelconque des revendications 15 à 22.

**24.** Préparation aqueuse contenant des colorants contenant :

i. au moins un polymère contenant des colorants qui se présente, dans la préparation, sous la forme de particules de polymères dispersées et qui est choisi parmi les polymères des dispersions aqueuses contenant des colorants selon l'une quelconque des revendications 15 à 22 et les poudres de polymère selon la revendication 23 et
ii. des adjuvants habituels.

**25.** Préparation selon la revendication 24, contenant en plus au moins un polymère hydrosoluble PW.

**26.** Préparation selon la revendication 25, dans laquelle le polymère PW présente des groupes cationiques.

**27.** Préparation selon la revendication 26, dans laquelle le polymère PW est un copolymère qui est formé d'au moins un monomère cationique à insaturation monoéthylénique, en particulier d'un monomère comprenant au moins un groupe ammonium quaternaire ou un groupe imonium, et d'au moins un autre monomère neutre.

**28.** Préparation selon la revendication 27, dans laquelle le polymère PW est choisi parmi :

- les copolymères de la 1-vinylpyrrolidone avec les sels du 1-vinyl-3-alkylimidazolium,
- les copolymères de la 1-vinylpyrrolidone avec les sels du méthacryloyloxyéthyltrialkylammonium,
- les terpolymères de la vinylpyrrolidone et de la vinylcaprolactame avec les sels du 1-vinyl-3-alkylimidazolium.

**29.** Préparation selon la revendication 25, dans laquelle le polymère PW présente des groupes acides fonctionnels et/ou des groupes anioniques fonctionnels.

**30.** Procédé selon la revendication 29, dans laquelle le polymère PW est un copolymère qui est formé :

- d'au moins un monomère à insaturation monoéthylénique MA choisi parmi les monomères comprenant au moins un groupe acide et ses sels,
- d'au moins un autre monomère neutre.

**31.** Préparation selon la revendication 29 ou 30, dans laquelle le polymère PW est choisi parmi :

- les homo- et les copolymères de l'acide 2-acrylamido-2-méthylpropanesulfonique,
- les copolymères de l'acide acrylique et/ou de l'acide méthacrylique avec du styrène,
- les copolymères de l'acide acrylique et/ou de l'acide méthacrylique avec des esters d'alkyle en $C_1$ à $C_{10}$ de l'acide acrylique et/ou de l'acide méthacrylique,
- les copolymères de l'acide maléique ou de l'anhydride maléique avec des oléfines, en particulier avec du diisobutène,
- les produits de condensation du formaldéhyde d'un acide arylsulfonique, en particulier de l'acide naphtalènesulfonique

et leurs sels.

**32.** Utilisation de la préparation aqueuse contenant des colorants selon l'une quelconque des revendications 24 à 31, en tant qu'encres, en particulier pour le procédé par jet d'encre.

**33.** Préparation aqueuse contenant des pigments contenant :

i. au moins un polymère contenant des colorants qui se présente, dans la préparation, sous la forme de particules de polymères dispersées, qui est choisi parmi les polymères des dispersions aqueuses contenant des colorants selon l'une quelconque des revendications 15 à 22 et les poudres de polymère selon la revendication 23 et qui comprend, en tant que colorant oléosoluble, au moins un azurant,
ii. au moins un polymère exempt de colorants, filmogène, non hydrosoluble qui est formé de monomères à insaturation éthylénique, sous la forme de sa dispersion aqueuse,
iii. au moins un pigment blanc inorganique et éventuellement une charge inorganique, et
iv. des adjuvants.

**34.** Utilisation d'une préparation selon la revendication 33 en tant que pâte de couchage pour papier.